(19) **Europäisches Patentamt / European Patent Office / Office européen des brevets**

(11) **EP 4 660 993 A1**

(12) **EUROPEAN PATENT APPLICATION**
published in accordance with Art. 153(4) EPC

(43) Date of publication:
**10.12.2025 Bulletin 2025/50**

(21) Application number: **24750398.0**

(22) Date of filing: **01.02.2024**

(51) International Patent Classification (IPC):
$G10H\ 1/00^{(2006.01)}$      $G09B\ 15/00^{(2006.01)}$

(52) Cooperative Patent Classification (CPC):
**G09B 15/00; G10H 1/00**

(86) International application number:
**PCT/JP2024/003373**

(87) International publication number:
**WO 2024/162449 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 JP 2023015722**
**07.06.2023 JP 2023094415**

(71) Applicants:
- **OMRON Corporation**
  **Kyoto 600-8530 (JP)**
- **The University of Tokyo**
  **Bunkyo-ku, Tokyo 113-8654 (JP)**

(72) Inventors:
- **ARAI, Kota**
  **Tokyo 113-8654 (JP)**
- **HIRAO, Yutaro**
  **Tokyo 113-8654 (JP)**
- **NARUMI, Takuji**
  **Tokyo 113-8654 (JP)**
- **NAKAMURA, Tomohiko**
  **Tokyo 113-8654 (JP)**
- **TAKAMICHI, Shinnosuke**
  **Tokyo 113-8654 (JP)**
- **KADOMURA YOSHIDA, Shigeo**
  **Tokyo 113-0033 (JP)**

(74) Representative: **SONN Patentanwälte GmbH & Co KG**
**Riemergasse 14**
**1010 Wien (AT)**

(54) **INFORMATION PROCESSING DEVICE, INFORMATION PROCESSING METHOD, AND INFORMATION PROCESSING PROGRAM**

(57)   An information processing device generates a first feature vector from data representing the subject timbre. The information processing device calculates a second feature vector representing a figure from the first feature vector representing the subject timbre, on the basis of a result of association of the first feature vector to the second feature vector. The information processing device generates a figure representing the subject timbre from the second feature vector.

FIG.1

Fig. 1. TimToShpae estimates and visualizes 2D shapes corresponding to timbre played by the musical-instrument learner based on his/her timbre–shape correspondences (crossmodal correspondences) to facilitate an intuitive understanding of how to adjust the performance to play the desired timbre. TimToShape uses the variational autoencoder (VAE) to encode the timbre to the latent space, and generates a 2D shape corresponding to the position of that timbre in the latent space by linear interpolation of shapes that the user answered to feel correspond to some timbres in advance.

**Description**

Technical Field

The present disclosure relates to an information processing device, an information processing method, and an information processing program.

Background Art

There are known conventional techniques for visualizing sound pitch (also called pitch) or rhythms (see, for example, Literature 1(Buck, Michael William, "The Efficacy of SmartMusic Assessment as a Teaching and Learning Tool" (2008). Dissertations. 1136. [searched on February 1, 2023], the Internet <URL: https://aquila.usm.edu/dissertations/ 1136>), Literature 2(Estefan Cano, Christian Dittmar, and Sascha Grollmisch, "Songs2See: Learn to Play by Playing", In 12th International Society for Music Information Retrieval Conference (ISMIR2011). Miami, 2231-2240. [searched on February 1, 2023], the Internet <URL: https://www.songs2see.com/>, the Internet <URL: https://www.aes.org/e-lib/online/ browse.cfm?elib=15762>), and Literature 3 (Oy. 2020. Yousician | Learn Guitar, Piano, Ukulele With The Songs you Love. [searched on February 1, 2023], the Internet <URL: https://yousician.com/>).). There also are known techniques for evaluating or visualizing timbres (see, for example, Literature 4 (Knight, Trevor, Finn Upham, and Ichiro Fujinaga. "The potential for automatic assessment of trumpet tone quality." ISMIR. 2011. [searched on February 1, 2023], the Internet <URL: https://archives.ismir.net/ismir2011/paper/000102.pdf>), Literature 5 (Oriol Romani Picas, et al. 2015. A real-time system for measuring sound goodness in instrumental sounds. In Audio Engineering Society Convention 138. Audio Engineering Society. [searched on February 1, 2023], the Internet <https://repositori.upf.edu/handle/10230/32131>), Literature 6 (Sergio Giraldo, et al. 2019. Automatic assessment of tone quality in violin music performance. Frontiers in Psychology 10 (2019), 334. [searched on February 1, 2023], the Internet <URL: https://www.frontiersin.org/articles/ 10.3389/fpsyg.2019.00334/full>), and Literature 7 (Naoki Kimura, et al. 2020. SonoSpace. In Proceedings of the 28th ACM International Conference on Multimedia. Association for Computing Machinery (ACM), New York, NY, USA, 367-374. [searched on February 1, 2023], the Internet <URL: https://www.researchgate.net/publication/345498954_So noSpace_Visual_Feedback_of_Timbr e_with_Unsupervised_Learning>)).

SUMMARY OF INVENTION

Technical Problem

The present disclosure aims to convert timbres into figures on the basis of users' perception.

Solution to Problem

To achieve the above objective, an information processing device according to the present disclosure is an information processing device that generates a first feature vector from data representing a subject timbre, calculates a second feature vector representing a figure from the first feature vector representing the subject timbre on the basis of a result of association of the first feature vector with the second feature vector, generates a figure representing the subject timbre from the second feature vector, and outputs the generated figure.
An information processing method according to the present disclosure is an information processing method implemented by a computer to perform processing including: generating a first feature vector from data representing a subject timbre; calculating a second feature vector representing a figure from the first feature vector representing the subject timbre, on the basis of a result of association of the first feature vector with the second feature vector; generating a figure representing the subject timbre from the second feature vector; and outputting the generated figure.
An information processing program according to the present disclosure is an information processing program for causing a computer to perform processing including: generating a first feature vector from data representing a subject timbre; calculating a second feature vector representing a figure from the first feature vector representing the subject timbre, on the basis of a result of association of the first feature vector with the second feature vector; generating a figure representing the subject timbre from the second feature vector; and outputting the generated figure.

Advantageous Effects of Invention

With an information processing device, an information processing method, and an information processing program of the present disclosure, it is possible to convert timbres into figures on the basis of users' perception.

BRIEF DESCRIPTION OF DRAWINGS

Fig. 1 is a diagram for explaining the present embodiment.

Fig. 2 is a diagram for explaining the present embodiment.

Fig. 3 is a diagram for explaining the present embodiment.

Fig. 4 is a diagram for explaining the present embodiment.

Fig. 5 is a diagram for explaining the present embodiment.

Fig. 6 is a diagram for explaining the present embodiment.

Fig. 7 is a diagram for explaining the present embodiment.

Fig. 8 is a diagram for explaining the present embodiment.

Fig. 9 is a table for explaining the present embodiment.

Fig. 10 is a diagram for explaining the present embodiment.

Fig. 11 is a diagram for explaining the present embodiment.

Fig. 12 is a diagram for explaining the present embodiment.

Fig. 13A is a block diagram showing a hardware configuration of an information processing device according to the present embodiment.

Fig. 13B is a block diagram showing a hardware configuration of the information processing device according to the present embodiment.

Fig. 13C is a diagram illustrating an example of a map on which first feature vectors are projected.

Fig. 13D is a diagram for explaining a map on which first feature vectors of a plurality of sounds including representative sounds are projected.

Fig. 13E is a diagram showing an example of figure candidates displayed on a touch panel display 4.

Fig. 13F is a diagram for explaining a relationship between figures and second feature vectors.

Fig. 13G is a diagram for explaining a method of interpolating an already obtained association result.

Fig. 13H is an example of a display screen for acquiring a figure corresponding to a sound different from the representative sounds.

Fig. 13I is a flowchart illustrating an example of a processing routine to be executed by the information processing device.

Fig. 13J is a flowchart illustrating an example of a processing routine to be executed by the information processing device.

Fig. 13K is a flowchart illustrating an example of a processing routine to be executed by the information processing device.

Fig. 13L is a diagram for explaining a correspondence between a map on which first feature vectors of a plurality of timbres are projected, and figures.

Fig. 13M is a diagram for explaining a correspondence between a map on which first feature vectors of a plurality of timbres are projected, and figures.

Fig. 14 is a chart for explaining the present embodiment.

Fig. 15 is a chart for explaining the present embodiment.

Fig. 16 is a chart for explaining the present embodiment.

Fig. 17 is a chart for explaining the present embodiment.

Fig. 18 is a chart for explaining the present embodiment.

Fig. 19 is a chart for explaining the present embodiment.

Fig. 20 is a chart for explaining the present embodiment.

Fig. 21 is a chart for explaining the present embodiment.

Fig. 22 is a chart for explaining the present embodiment.

Fig. 23 is a chart for explaining the present embodiment.

Fig. 24 is a chart for explaining the present embodiment.

Fig. 25 is a chart for explaining the present embodiment.

Fig. 26 is a chart for explaining the present embodiment.

Fig. 27 is a chart for explaining the present embodiment.

Fig. 28 is a chart for explaining the present embodiment.

Fig. 29 is a chart for explaining the present embodiment.

Fig. 30 is a chart for explaining the present embodiment.

Fig. 31 is a chart for explaining the present embodiment.

Fig. 32 is a chart for explaining the present embodiment.

Fig. 33 is a chart for explaining the present embodiment.

Fig. 34 is a chart for explaining the present embodiment.
Fig. 35 is a chart for explaining the present embodiment.
Fig. 36 is a chart for explaining the present embodiment.
Fig. 37 is a chart for explaining the present embodiment.
Fig. 38 is a chart for explaining the present embodiment.
Fig. 39 is a chart for explaining the present embodiment.
Fig. 40 is a chart for explaining the present embodiment.
Fig. 41 is a chart for explaining the present embodiment.
Fig. 42 is a chart for explaining the present embodiment.
Fig. 43 is a chart for explaining the present embodiment.
Fig. 44 is a chart for explaining the present embodiment.
Fig. 45 is a chart for explaining the present embodiment.
Fig. 46 is a chart for explaining the present embodiment.
Fig. 47 is a chart for explaining the present embodiment.
Fig. 48 is a chart for explaining the present embodiment.
Fig. 49 is a chart for explaining the present embodiment.
Fig. 50 is a chart for explaining the present embodiment.
Fig. 51 is a chart for explaining the present embodiment.
Fig. 52 is a chart for explaining the present embodiment.

DESCRIPTION OF EMBODIMENTS

In the following, an example of an embodiment of the present disclosure is described, with reference to the drawings. Note that, in the respective drawings, the same or equivalent components and portions are denoted by the same reference signs. Further, the dimensions and ratios in the drawings are exaggerated for convenience sake, and might be different from actual ratios.

<Overview>

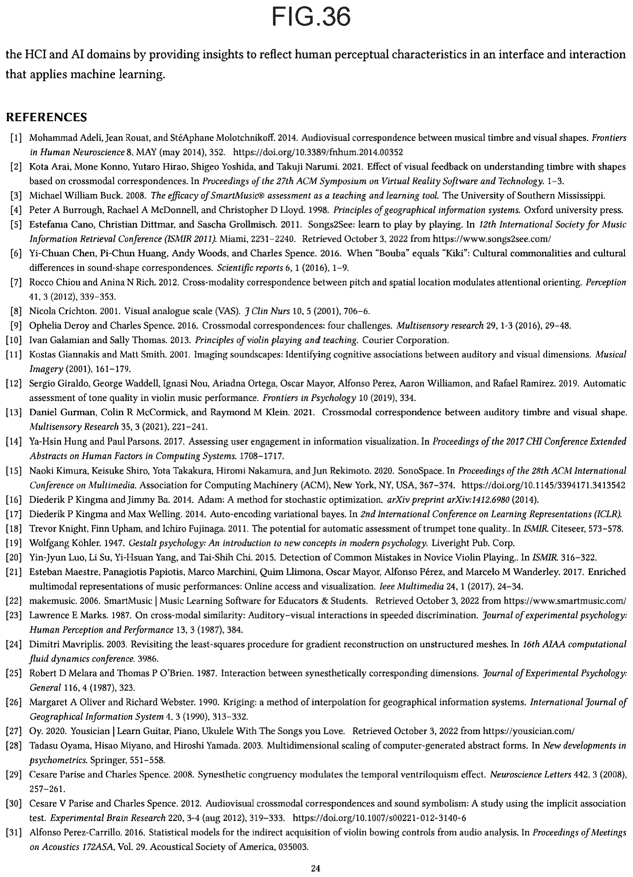

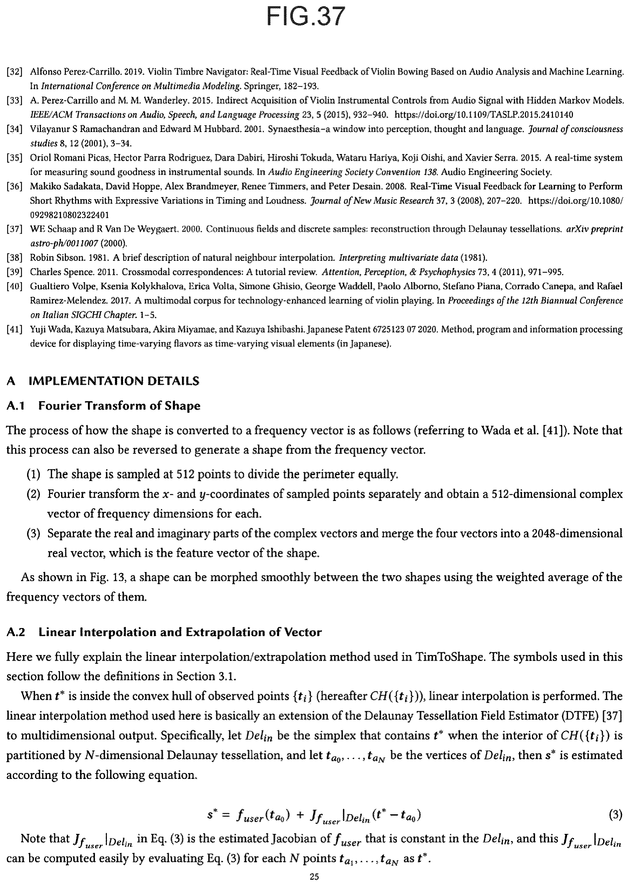

Timbre is high-dimensional and sensuous, and therefore, it is difficult for musical-instrument learners to improve their timbre. Furthermore, simply visualizing the results of unsupervised learning as the evaluation values of timbre lacks intuitive feedbacks because human perception is not taken into consideration therein. Therefore, in the present embodiment, intuitive visualization of timbre is performed using correspondences between different senses (crossmodal correspondence). In the present embodiment, a system called TimToShape that visualizes a two-dimensional shape corresponding to timbre has been developed on the basis of the correspondences between timbre input by a user and shapes. TimToShape generates a shape morphed by linear interpolation, on the basis of the position of timbre in a latent space obtained by unsupervised learning using a variational autoencoder (VAE). Further, as a result, the shape generated by TimToShape can be perceived by the musical-instrument player as feedback for the timbre. As a result, it was confirmed that shapes generated by TimToShape are perceived to correspond more to timbre than shapes presented randomly. Furthermore, a user study of six violin players revealed that TimToShape was highly evaluated in terms of visual clarity and interpretability. Note that, in the description below, the numbers in brackets "[]" indicate the numbers assigned to the references shown in Figs. 36 and 37.

<1. Introduction>

Music players can convey information and feelings to the audience by appropriately changing the timbre of the sound. However, since timbre is a high-dimensional and sensuous concept, it is difficult for learners to develop the skills necessary to play the desired timbre.

Although several techniques for supporting the acquisition of timbre-related skills have been proposed [12, 35], they often require expert labeling for timbre evaluation. There is also a proposed technique using unsupervised learning that does not require manual labeling [15]. However, the feedback solely based on the results of unsupervised learning is not intuitive enough to understand the relationship between the timbre and the visual feedback. Since such visualization that is not intuitive hinders mastery, it is presumed that this could lead to the learners having difficulty bringing their timbre closer to the goal timbre [36]. Moreover, if a practice with feedback in which auditory and visual information is incongruent is continued, learners might become dependent on the feedback and unable to maintain performance when the feedback is no longer available [2].

The present embodiment focused on crossmodal correspondences (in particular, timbre-shape correspondences) to provide intuitive visual feedback on timbre to musical-instrument learners. Crossmodal correspondence is a non-arbitrary associative relationship between different modalities [39]. In auditory-visual relationships, the correspondences between timbres and visual two-dimensional shapes have been reported (for example, harsh timbres with sharp angular shapes and soft timbres with curved shapes) [1, 30]. It is assumed that the use of such correspondences makes it easier for learners to understand the relationship between timbres and feedback, and it is possible to present feedback with which it is easier to adjust the playing timbre closer to the goal. In addition, it is assumed that the use of crossmodal correspondence makes it easier for learners to recall the feedback from the timbre being played even after there is no longer any feedback, and is less likely to cause performance degradation.

To use correspondences between timbres and shapes, it is necessary to consider an intelligent method to associate a shape with an appropriate timbre. Since there are individual differences in association between timbres and shapes, it is necessary to personalize the mapping for each user. However, it is not possible to ask a user to answer the shapes that are supposed to correspond to all the timbres.

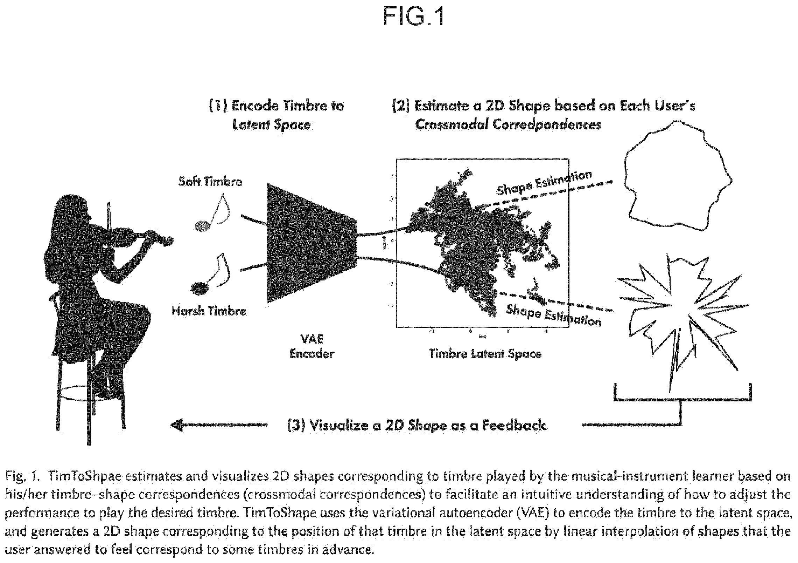

Therefore, in the present embodiment, TimToShape was developed, which is a system that generates and visualizes a two-dimensional shape corresponding to the current timbre in real time on the basis of the correspondences between some timbres and shapes answered by the user in advance (see Fig. 1). TimToShape first acquires the latent space of timbre by unsupervised learning with VAE, and then selects the optimal point from the latent space to estimate the user's timbre-shape correspondences. The user answers the shape that appears to correspond to the timbre of that point, and TimToShape linearly interpolates the answered shape to estimate the shape of the desired timbre in the latent space.

In the present embodiment, evaluation of the system was performed, focusing on the violin. Bowed stringed instruments, which produce sound by rubbing strings with a bow, have difficulty producing a beautiful timbre. In addition, the timbre quality of the violin is crucial in the overall evaluation of musical performance [10]. This system was evaluated using the violin as a use case, because of the difficulty and importance of improving techniques related to timbre quality. Furthermore, to focus only on the difference in timbre, the target timbres are limited to those of the "open A-string", which is the simplest and most basic playing action of the violin.

To verify the effectiveness of TimToShape, two user studies were conducted. In the first study, crowdsourcing (n = 75) was used to validate that the proposed system can generate shapes corresponding to any timbres of the violin's open A-string. It was found that the proposed system is more likely to make people feel that the shapes correspond to timbre than to present random shapes for timbre. The second study was conducted with six violin players to investigate the effect of visual feedback with the figures generated by this system during violin practice. Compared with a feedback system that simply visualizes the position of the timbre in the latent space like a map, the system of the present embodiment was well-received by the violin players in terms of visual clarity, ease of understanding the relationship between the timbre and feedback, and ease of recalling the feedback even after it is no longer available.

To sum up, the main contributions of the present embodiment are the following:

(1) Proposes a novel concept of visualizing timbres based on timbre-shape correspondences for supporting the practice of musical instruments.
(2) Develops TimToShape by encoding the timbre to the latent space using the VAE and generating a shape corresponding to the timbre by linear interpolation of some shapes the user answered to feel corresponding to some timbres in the latent space.
(3) Reports evaluation results and reflections on the shape estimation method of TimToShape with online user studies and on using TimToShape for practice of musical instruments with in-person user studies.

<Prior Works>

This section reviews prior works on the computer-supported practice of musical instruments, especially the feedback method for learners playing sounds. Because our idea of visualization is based on such kind of human sensory attributes among different modalities, this section also reviews crossmodal correspondence, especially audiovisual correspondences.

<2.1 Computer-Supported Practice of Musical Instruments>

Several studies have proposed using technology to support individual practice of playing musical instruments. Particularly, there exist many systems that support the acquisition of skills related to pitch and rhythm (3, 5, 22, 27). This is because pitch and rhythm can be quantitatively evaluated and analyzed since they are associated with some physical counterparts: pitch having fundamental frequency (the reciprocal of the period of a harmonic sound) and rhythm having note onset (the time when a note is played).

In contrast, timbre is high-dimensional and sensuous, compared with pitch and rhythm. Timbre is also associated with the physical counterpart, which is a spectral envelope of the sound, but the spectral envelope contains so many features that it is difficult to evaluate timbre quantitatively.

Despite the difficulty of evaluation of timbre, various systems have been developed to support the acquisition of skills related to timbre. Examples of evaluating the parameters of performance movements rather than evaluating timbre itself include those that directly sense and visualize the parameters of performance movements by motion tracking [21, 40], and those that indirectly estimate the parameters of performance movements from the sounds played by a support vector machine (SVM) [20], by hidden Markov Model [33], or by LSTM [31, 32]. In these examples, however, it is difficult to measure the sensitive parameters such as the amount of force with high precision, and the versatility to be applied to any musical instrument is insufficient.

In sound quality evaluation, several features are extracted from the sound, so that timbre can be modeled and evaluated. For example, Picas et al. proposed a technique to evaluate timbre using scores based on five axes, such as "timbre stability" and "timbre richness", by selecting spectral feature amounts [35]. Giraldo et al. proposed a technique to evaluate the timbre of a violin based on semantic axes, such as dark-light, using machine learning [12]. Knight et al. proposed a method of rating the quality of trumpet timbres on a scale of 2, 3, and 7, using the SVM [18]. These studies differ from the present embodiment in that they focus on building a model that can be evaluated in a similar manner on the basis of evaluations by skilled players of each instrument. There were no evaluations of the improvement in timbre that could be achieved using these models as feedback. Moreover, these examples still have the same drawback of versatility because they require labeling by experts or careful feature selection for each instrument.

On the other hand, Kimura et al. proposed a practice support system that analyzes and visualizes timbres, and can be easily applied to various instruments without requiring labeling by experts [15]. They used unsupervised learning with the VAE to obtain the latent space of timbres as a two-dimensional space and provide a location map of the played timbre in the obtained latent space as visual feedback for learners. Although the present embodiment is based on Kimura et al.'s VAE-based method to analyze timbre, it aims to design intuitive visual feedback for timbre to facilitate performance adjustment and reduce dependence on feedback during the practice of musical instruments.

<2.2 Crossmodal Correspondences between Sound and Vision>

There is a natural and intuitive connection between seemingly unrelated pieces of information, such as associating sound with brightness [23] and shape with sound [19]. Such non-arbitrary associative relationships between different modalities are called "crossmodal correspondences" [39]. The Bouba-Kiki effect is a well-known example of crossmodal correspondences. For most people, the word "Bouba" is associated with a curved shape, and the word "Kiki" is associated with a sharp angular shape [34].

Various examples of crossmodal correspondences between sound and vision have been reported. For example, there are correspondences between auditory loudness and color saturation (louder sound with higher saturation) [11], auditory pitch and visual shape (lower sound with curved shape, higher sound with sharp angular shape) [25], auditory pitch and visual size (higher sound with smaller size) [29, 30], and auditory pitch and visual elevation (higher sound with higher position) [7, 25].

As an example of the correspondence between timbre and visual shapes, Parise et al. reported that sine waves were more likely to be associated with curved shapes, and square waves were more likely to be associated with sharp angular shapes [30]. Adeli et al. studied the relationship between visual shapes and instrumental timbres [1]. Harsh timbres, such as those of triangles and cymbals, were associated with sharp angular shapes. Soft timbres, such as those of the piano and marimba, were associated with curved shapes, and timbres having elements of harshness and softness together were associated with mixtures of the two kinds of shapes. Gurman et al. replicated the Adeli et al. experiment using more timbres and shapes [13]. They found the same timbre-shape correspondences as Adeli et al., and more timbre-shape correspondences (hollowness and distortion-fuzz of sound and shape). These studies showed that numerous people are consistent in the types of shapes they perceive as congruent with timbres. By using these correspondences between timbres and shapes, this system aims to provide intuitive visual feedback on timbres. While the studies presented above have examined the relationship between discretely different timbres and discretely different shapes, we need to find the corresponding shapes for continuously changing timbres. Therefore, this system estimates the correspondence of a shape to an arbitrary timbre from the correspondence of the shape to several timbres.

Although crossmodal correspondence is a characteristic shared by many people, there are individual differences due to differences in culture, experiences, and the like [6], because crossmodal correspondences are said to be based on experiences acquired in daily life. Therefore, rather than visualizing a fixed correspondence between timbre and shape, TimToShape allows the learners to customize the correspondences in the present embodiment.

<3 Theory and Implementation>

The easiest way to estimate the correspondence between timbres and shapes for each user is to ask the users to indicate the shapes they feel correspond to all timbres. However, the timbre of a musical instrument (even if it is the same instrument and played at the same pitch) changes continuously in various ways depending on how it is played. It is theoretically impossible to ask the user to answer the shapes they feel correspond to "all" timbres. Therefore, in the present embodiment, the problem of estimating the shape that the user can perceive as corresponding to any given timbre is to be solved on the basis of the user's correspondence of shape to some "representative" timbre. This will make it possible to associate any given timbre with a shape felt by the user.

<3.1 Problem Formulation>

$T \subseteq R^N$ is assumed to be the feature space of timbres, and $f_{timbre}$ represents the map from raw timbre data to the feature vector of timbres. Likewise, $S \subseteq R^M$ is assumed to be the feature space of shapes, and $f_{shape}$ represents the map from raw shape data to the feature vector of shapes.

Further, $t_i := f_{timbre}(t^i) (\in T)$ is assumed to be the feature space of the raw timbre data $t^i$, $si := f_{shape}(s_i)(\in S)$ is assumed to be the feature space of the shape $si$, and $f_{user} : T \to S$ represents the user's mapping function from the feature space of timbres to the feature space of shapes.

Here, the problem of "estimating the corresponding shape for any timbre from the shapes answered to some representative timbres" can be formulated as follows.

Given some observed timbre-shape pairs $\{(t_i, si: (= f_{user}(t_i))) \mid t_i \in T, s_i \in S\}$, $s^* = f_{user}(t^*)$ is estimated for some timbres $t^* \in T$.

Assuming that the set of observation points $\{t_i\}$ is an irregular grid (scattered data) and that there are no (or few) errors in the observation of $\{s_i (= f_{user}(t_i))\}$, this problem can be regarded as an irregular-grid multivariate interpolation problem.

The following Sections 3.2 and 3.3 concern what was used for the feature space of timbres and shapes, respectively, and Section 3.4 concerns how this interpolation (or extrapolation) problem was solved.

<3.2 Feature Space of Timbres>

To map timbres to the feature space T in the present embodiment, a variational autoencoder (VAE) is used, as in Kimura et al. [15]. A VAE is a machine learning model with an encoder and decoder that acquires the latent space of data through unsupervised learning [17].

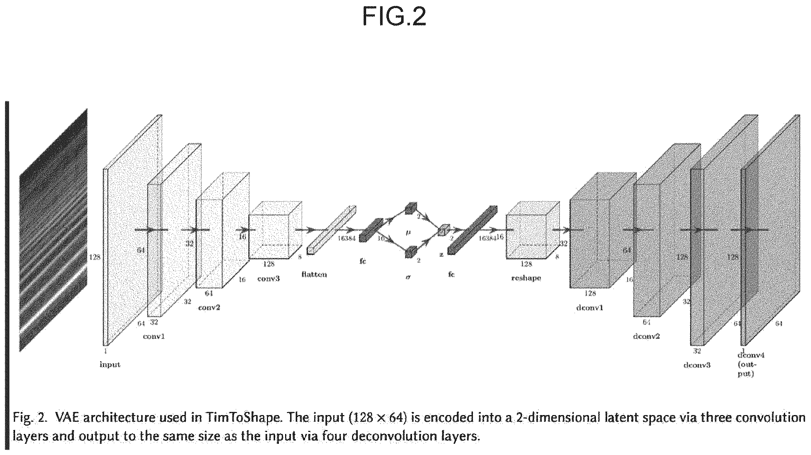

Fig. 2 shows the architecture of the VAE used. The input for the VAE is the log-mel-spectrogram (calculated with n_fft = 2,048, hop_length = 1,024, and n_mels = 128, the overall size being $128 \times 64$) of the timbre frame. The timbre frame here means the segment of the timbre to which a single shape is mapped. In the present embodiment, 66,560 samples ($\approx$ 1.5 seconds) at a sampling rate of 44,100 Hz are used as one frame. Therefore, in a case where TimToShape is used in real time, frames are updated every 1,024 sample points (note that frames are overlapped). This frame length was determined to be appropriate because it is sufficiently long to allow users to listen to and associate shapes with the "representative" timbres, but not so long as to impair responsiveness in real-time use. The input for the VAE is then encoded into the two-dimensional latent space (this dimension number follows Kimura et al. [15]), and the latent vector z is decoded into the output of the same size (128 x 64) as the input. The VAE model was implemented using an open-source framework called Keras.

The VAE encodes the input data as a stochastic distribution rather than as a single point. This is accomplished by the encoder outputting the mean ($\mu$) and variance ($\sigma$) of the distribution of the latent variable z separately, and sampling a random vector following a normal distribution $N(\mu, \sigma)$ by combining $\mu$ and $\sigma$, as z (this technique is called "reparameterization trick" [17]). However, since the feature vector of one timbre should be constant in this system, the mean $\mu$ of the latent variable z is adopted as the feature vector of the timbre.

<3.3 Feature Space of Shapes>

To be used for interpolation of shapes, S (feature space of shapes) needs to satisfy the following condition.

Condition: for any two points $s_i$ and $s_j$ in the feature space of shapes, when parameters move on the line connecting the two points, the corresponding shape also changes smoothly from $s_i$ to $s_j$.

In the present embodiment, the "frequency domain" of shapes is used as the feature space S with reference to Wada et al. [41]. A shape can be smoothly morphed between any two shapes using the frequency vectors of the two shapes. For a detailed explanation, see Appendix A.1 in Fig. 37.

<3.4 Linear Estimation of Shape>

Next, how TimToShape estimates shapes s* for different timbres t* is described. As described in Section 3.1, this problem is an irregular-grid multivariate interpolation (or extrapolation) problem. Examples of methods that can solve this problem include nearest neighbor interpolation [4], linear interpolation (with a triangulated irregular network) [4, 37], natural neighbor interpolation [38], inverse distance weighting (IDW) [4], and Kriging (Gaussian process regression) [26].

In the present embodiment, linear interpolation and extrapolation are used. The linear estimation method was used because the calculation is relatively simple and the linear extrapolation method extrapolates observation values on the basis of the gradient on the boundary of the convex hull of the observation points, and is considered suitable for this system.

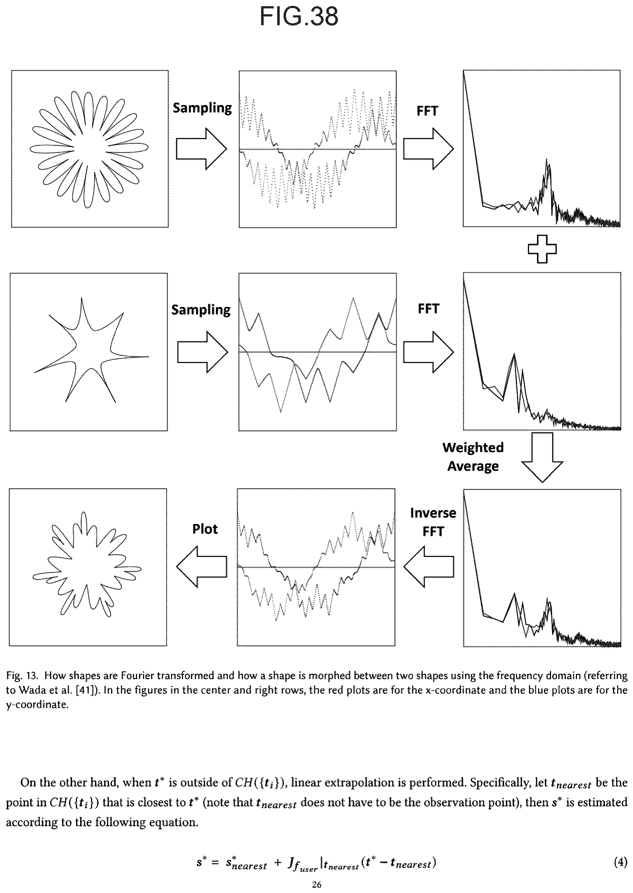

The basic idea of linear interpolation/extrapolation can be expressed as follows, where t^ represents an appropriate point in the vicinity of t*, and $J_{fuser} | t^$ represents the estimated Jacobian of $f_{user}$ at t^. For a detailed explanation, see Appendix A.2 in Figs. 37 to 39.

[Math. 1]

$$s^* = f_{user}(\hat{t}) + J_{f_{user}}|_{\hat{t}}(t^* - \hat{t}) \tag{1}$$

<3.5 Method for Observation of User's Mapping Function>

Next, the method for observation of $f_{user}$, which includes how to select the observation points (representative timbres) $\{t_i\}$ and how to observe $s_i$ for each $t_i$ is described. Here, there is an important point to note. Although $f_{user}$ has been discussed as a deterministic function so far, it is considered that the actual human correspondence between timbres and shapes is not deterministic and has the following two properties.

Property 1. The relationship between timbres and shapes is affected by relative differences in the timbres. This means that the image of a shape for each timbre is expressed more clearly when timbres are listened to and compared than when timbres are listened to separately.

Property 2. Instead of one particular shape corresponding to one timbre, a group of shapes with similar impressions corresponds to one timbre.

Therefore, $f_{user}$ is adopted here as a "favorable" one to use in the system among the entire set of actual correspondences of the user between timbres and shapes. In a case where the following two conditions are satisfied, it is determined to be "favorable".

Condition 1. The variation in the shape mapped to the timbres is large.

Condition 2. The mapped shape changes smoothly for the entire T.

To observe $f_{user}$ so that these conditions are satisfied, the following steps were devised.

(1) Prepare $T_{dataset}$ as a dataset of timbres (raw timbre data) to be targeted by the system, and prepare an empty set $T_{rep}$.
(2) Calculate the image $T_{dataset} := \{ftimbre(t) \in T \mid t \in T_{dataset}\}$.
(3) From $T_{dataset}$, select a set of N+1 points (hereinafter referred to as the set $T_{farthest}$) so that all points are affinely independent, and the distance of the closest two points is maximal. Then calculate the inverse image $T_{farthest} := \{t \in T_{dataset} \mid ftimbre(t) \in T_{farthest}\}$. Timbres at these points are more likely to be a characteristic combination of timbres in the dataset, and according to Property 1, users are likely to associate shapes that greatly differ. This helps $f_{user}$ satisfy Condition 1, and therefore, these points are selected.
(4) Ask the user to listen to and compare all the timbres in $T_{farthest}$, and ask the user to answer the shape si that they feel corresponds to each timbre $t_i \in T_{farthest}$. N+1 observation values $\{(t_i, s_i) := (f_{timbre}(t_i), f_{shape}(s_i))\}$ are then recorded. After that, add all the observation points $\{t_i\}$ to $T_{rep}$.
(5) Repeat the following processing an appropriate number of times (maximum 30 times in the present embodiment).

(a) Select one $t_{farthest}$. Note that $t_{farthest}$ satisfies the following constraint condition.

[Math. 2]

$$t_{farthest} \ s.t. \ t_{farthest} \notin T_{rep} \land t_{farthest} \in \arg\max_{t \in T_{dataset}} \{ \min_{t' \in T_{rep}} \|t - t'\| \}$$

Then find $t_{farthest}$ satisfying the following constraint, and request the user to listen to $t_{farthest}$.

[Math. 3]

$$t_{\text{farthest}} \in T_{\text{dataset}} \quad s.t. \quad f_{timbre}(t_{\text{farthest}}) = t_{farthest}$$

(b) Display a shape $s^*_{\text{farthest}}$, generated from $s^*_{\text{farthest}}$ estimated for $t_{\text{farthest}}$ on the basis of the observations so far, and ask the user if he/she feels that the displayed shape $s^*_{\text{farthest}}$ already corresponds to $t_{\text{farthest}}$. If the user answers "yes", ($t_{\text{farthest}}$, $s^*_{\text{farthest}}$) is recorded as another observation, $t_{\text{farthest}}$ is added to $T_{\text{rep}}$, and the remaining steps of this loop are skipped. If this occurs three times in a row, the entire observation process is completed because the observation is sufficient. If the user says "No", proceeds to Step (5)(c).

(c) Ask the user to search for a shape that seems to correspond to $t_{\text{farthest}}$ near $s^*_{\text{farthest}}$ according to the following Formula (2). The J in Formula (2) is the Jacobian estimated in Formula (1), and the user moves the $t_{\text{neighbor}}$ around $t_{\text{farthest}}$. In actual use, N sliders are presented, and the user manipulates $t_{\text{neighbor}}$ by manipulating each slider. If the user finds the shape, $s^{**}_{\text{farthest}}$ is set as the feature vector of that shape, ($t_{\text{farthest}}$, $S^{**}_{\text{farthest}}$) is then recorded as another observation, $t_{\text{farthest}}$ is added to $T_{\text{rep}}$, and the remaining steps of this loop are skipped. In other cases, proceed to Step (5)(d).

[Math. 4]

$$s^{**} = s^* + J(t_{neighbor} - t_{farthest}) \tag{2}$$

The reason for preparing this step is to use Property 2 to observe the $f_{\text{user}}$ without increasing the dimension of the image of $T_{\text{dataset}}$ mapped to S by $f_{\text{user}}$ as long as possible, which may help $f_{\text{user}}$ satisfy Condition 2.

(d) As in Step (4), ask the user to answer any shape $s'_{\text{farthest}}$ that the user feels corresponds to the timbre. Then record ($t_{\text{farthest}}$, $s'_{\text{farthest}}$) as another observation, and add $t_{\text{farthest}}$ to $T_{\text{rep}}$.

The next section describes how the user answers the figures in Steps (4) and (5).

<3.6 Process for Answering Shape for Timbre>

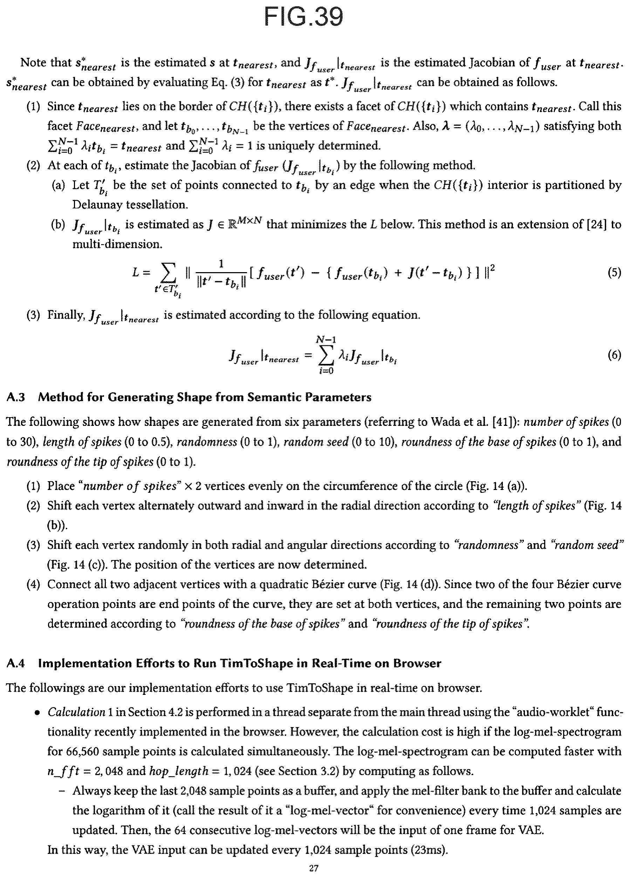

As described in Section 3.3, in the present embodiment, a frequency vector is adopted as the feature vector of a shape. However, it is almost impossible for users to manipulate the frequency vector to create a desired shape. Therefore, the present embodiment implemented a method based on Wada et al. [41] for generating shapes from semantic shape parameters (semantic parameters) to enable users to use them when answering shapes to timbres. Referring to the study by Oyama et al. [28], the following six parameters were used to generate shapes: the number of spikes (0 to 30), length of spikes (0 to 0.5), randomness (0 to 1), the random seed (0 to 10), roundness of the base of the spikes (0 to 1), and roundness of the tip of the spikes (0 to 1). For details on how to generate a shape from these parameters, see Appendix A.3 in Fig. 39.

Using the method of generating a shape from semantic parameters in this manner, users can answer the shape they feel corresponds to the timbre in the following process.

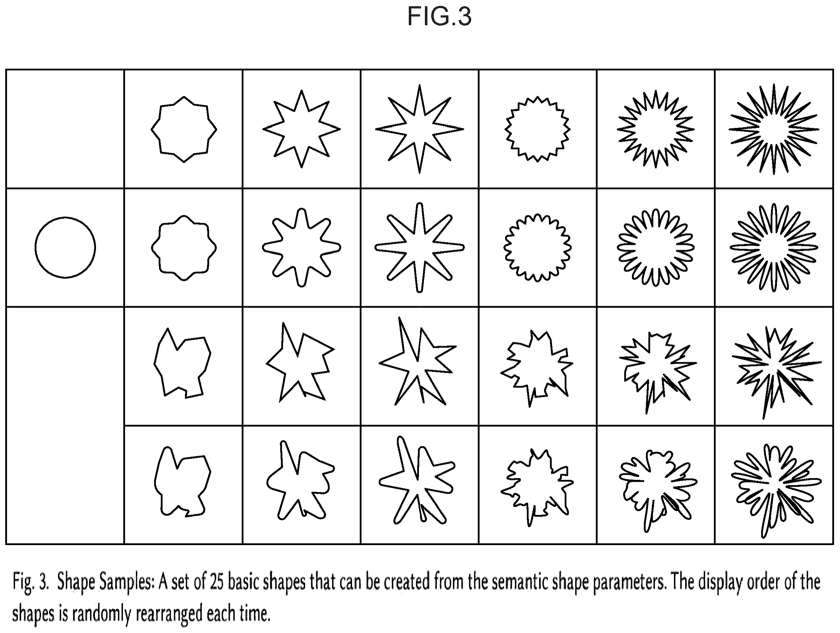

(1) Select one shape from Shape Samples (Fig. 3) that the user feels best corresponds to the timbre. The Shape Samples include 25 basic shapes that can be created from semantic parameters of shapes. This step is prepared because it is easier for users to compare several shapes and choose one from them than to think of a shape from scratch.

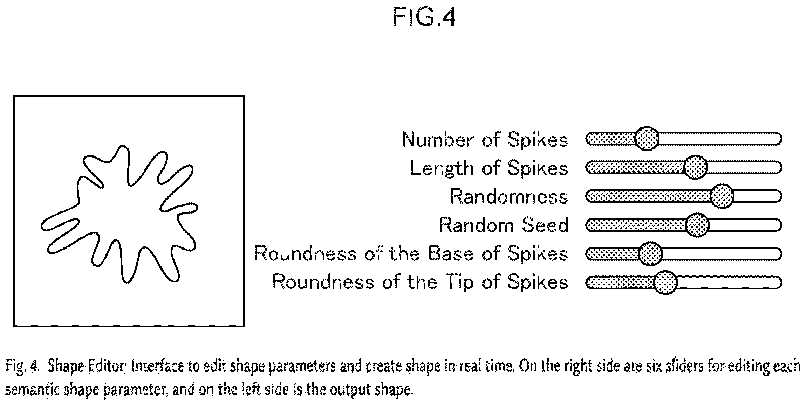

(2) Modify the shape selected in the previous step so that the user feels that the shape corresponds more to the timbre using "Shape Editor", which allows the user to edit the semantic parameters of a shape in real time (Fig. 4).

<4 Interface for Annotation and Visual Feedback>

While the previous Section focused on the theory used in TimToShape and its implementation, this section provides an explanation related to the implementation of the interface from the practical perspective.

<4.1 Interface for Timbre-Shape Annotation>

Sections 3.5 and 3.6 described the methodology of how to observe $f_{\text{user}}$ and briefly explained its implementation. This section concerns how they are implemented as an interface and how to use them from a user's perspective. Hereinafter, a step in which the user answers a shape to each representative timbre will be referred to as "timbre-shape annotation".

From the user's perspective, the timbre-shape annotation is roughly divided into a step of answering shapes for the first to third timbres, and a step of answering shapes for the fourth and subsequent timbres.

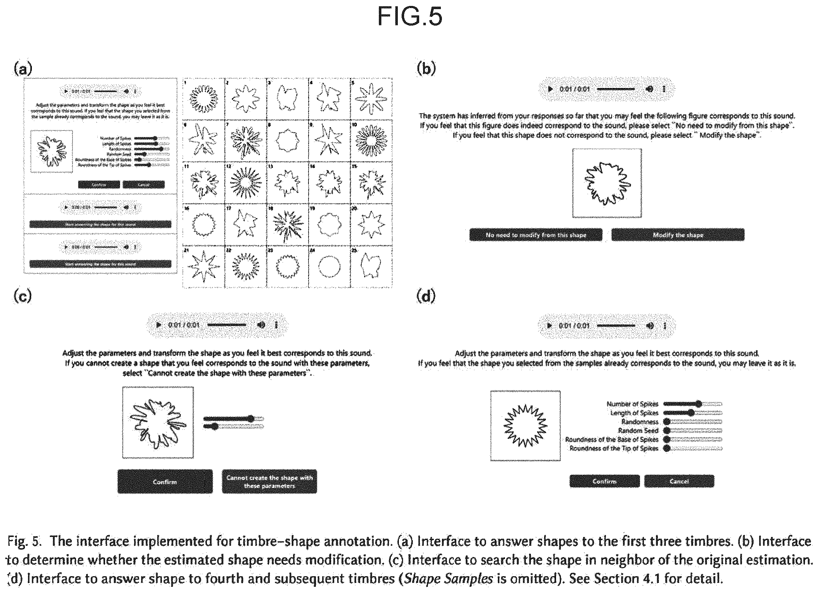

The first step, in which the user answers shapes for the first three timbres, corresponds to Step (4) in Section 3.5. The reason for the number of timbres being three is that, as explained in Section 3.2, the number (N) of dimensions of the latent space of timbres is two. In this step, the user answers a shape to each of the three timbres, following the process described in section 3.6. The interface used here is shown in Fig. 5(a), where the three timbres are displayed simultaneously, and Shape Samples are displayed on the right side. After the user selects a shape from Shape Samples, Shape Editor is displayed to allow the user to edit the shape using semantic parameters.

The second step in which the user answers shapes for the fourth and subsequent timbres corresponds to Step (5) in Section 3.5. This step includes the following three phases.

Phase 1: Verify whether the estimated shape is acceptable (Fig. 5(b)), which corresponds to Step (5)(b) in Section 3.5. Select whether modification is necessary by clicking a button. If modification is necessary, proceed to Phase 2. Otherwise, proceed to the next timbre. After this occurs three times, timbre-shape annotation is finished.

Phase 2: Verify shapes around the estimated shape (Fig. 5(c)). This corresponds to Step (5)(c) in Section 3.5. Two sliders are displayed to allow the search for the shapes around the estimated shape. If the user cannot find a shape that he/she feels corresponds to the timbre, proceed to Phase 3.

Phase 3: Answer the shape that the user feels corresponds to the timbre with Shape Samples and Shape Editor (Fig. 5(d)), following the process described in Section 3.6. Note that Shape Samples are omitted from the drawing.

<4.2 Implementation of Real-Time Shape Feedback for Timbre>

TimToShape estimates and displays shapes in real time corresponding to the timbre input to the microphone. To achieve this, the following calculations need to be performed with low latency.

Calculation 1. Calculation of the log-mel-spectrogram of the microphone input
Calculation 2. Encoding into the latent space by the VAE
Calculation 3. Estimation of the frequency vector of a shape through linear interpolation (or extrapolation).
Calculation 4. Inverse Fourier transform of the frequency vector and drawing of the shape

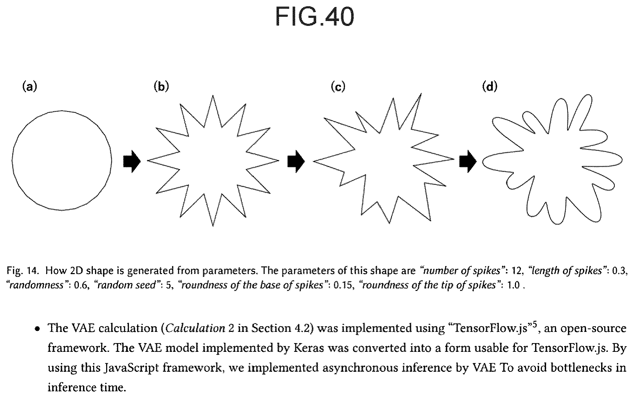

These were implemented using JavaScript (registered trademark) so as to run on a browser. Several implementation efforts were made to speed up the above calculations (see Appendix A.4 in Figs. 39 and 40 for details). The final computation time was five to six ms for Calculation 1, was 20 to 40 ms for Calculation 2, was one to two ms for Calculation 3, and was one to two ms for Calculation 4. Overall, it took 60 ms or less from the time the last sample point of a frame was input to the microphone until it was reflected in the drawing. Furthermore, using asynchronous processing, a frame rate of about 40 fps was achieved (PC: Macbook Pro, M1, 2020 with version 12.4 of macOS Monterey, Browser: PC: Macbook Pro, M1, 2020 with version 12.4 of macOS Monterey, Browser: Google Chrome of version 106.0.5249.119).

<5 Study 1: Congruency of Timbre and Generated Shape>

Study 1 aims to verify that TimToShape can generate a shape that users feel corresponds to a timbre on the basis of each user's input of timbre-shape correspondences. An online user survey was conducted to determine whether shapes generated by TimToShape were more likely to be perceived as congruent with timbres by the participants than randomly generated shapes. Study 1 did not use TimToShape as a real-time feedback system (a shape changes dynamically) but as a system that generates one static shape for one frame ($\approx 1.5\,\text{s}$) of timbre. This is because, if a shape changes dynamically, it is impossible to measure the congruency of the timbre and shape in each frame.

<5.1 Dataset>

The timbre dataset used in Study 1 was a smartphone recording of the "open A-string" of the violin by one of the inventors of the present disclosure. The inventor is an advanced-level player who has been playing the violin for over 19 years. This dataset contains timbres of the violin's "open A-string" played with various force levels, bow positions, and bow angles, including timbres imitating those produced by a beginner as well as advanced-level player.

The recordings were made in a quiet room, using the smartphone's standard recording application (Voice Memos). The reason for the use of a smartphone was to achieve a system that works without any special equipment or application.

The recording time was approximately 20 minutes. The silent time was trimmed, frames (one frame containing 66,560 sample points) were cut out and were shifted every 500 sample points (frames overlapping), and a dataset containing a total of 90,159 frames was created.

<5.2 Training>

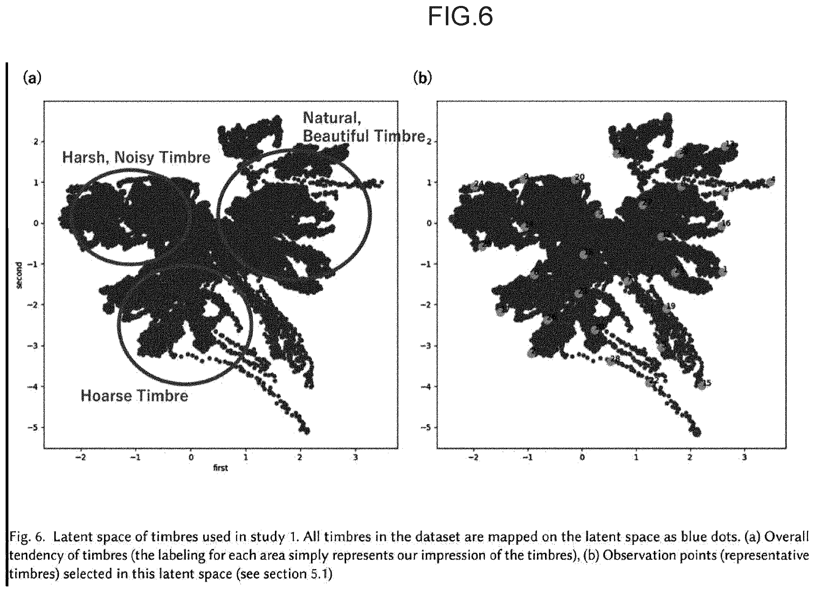

Using this timbre dataset, the unsupervised learning of the VAE described in Section 3.2 was performed. The training of the VAE was performed on a Windows (registered trademark) 10 PC with two GeForce GTX1080Ti GPUs. For validation, 20% of the dataset was used. The optimizer was Adam (learning rate: 0.001) [16], the batch size was 512, and there were a maximum of 200 training epochs. The training was automatically interrupted by early stopping based on validation loss. The resultant latent space ($\mu$ of z) of timbres is shown in Fig. 6(a). Although no labeling was performed on the timbre dataset, the latent space mapping for the timbres showed a rough trend, as depicted in the drawing (note that the labeling for the areas in Fig. 6(a) simply represents our impression of the timbres as illustrated in Fig. 6).

On the basis of the method described in Section 3.5, the observation points in this latent space are shown in Fig. 6(b). The red dots are the observation points adopted in Steps (3) and (4) in Section 3.5, and the yellow dots are the observation points (representative timbres) adopted in the 30 loops in Step (5) in Section 3.5. The numbers labeled next to the yellow dots indicate their order of selection (all participants annotated shapes for timbres in this order).

<5.3 Participants>

In Study 1, 101 participants were gathered through a crowdsourcing platform. Sixty-four participants were male, and 37 were female, with a mean age of 42.5 years and a standard deviation of 7.43. All participants were required to participate in the study on a PC and wear earphones or headphones.

<5.4 Procedure>

This Study 1 was divided into two sessions. In the first session, the participants performed the timbre-shape annotation, following the flow described in Section 4.1. The interface was identical to that shown in Fig 5. The timbres presented in this step correspond to the red and yellow dots in Fig. 6(b) (as mentioned in Section 5.1).

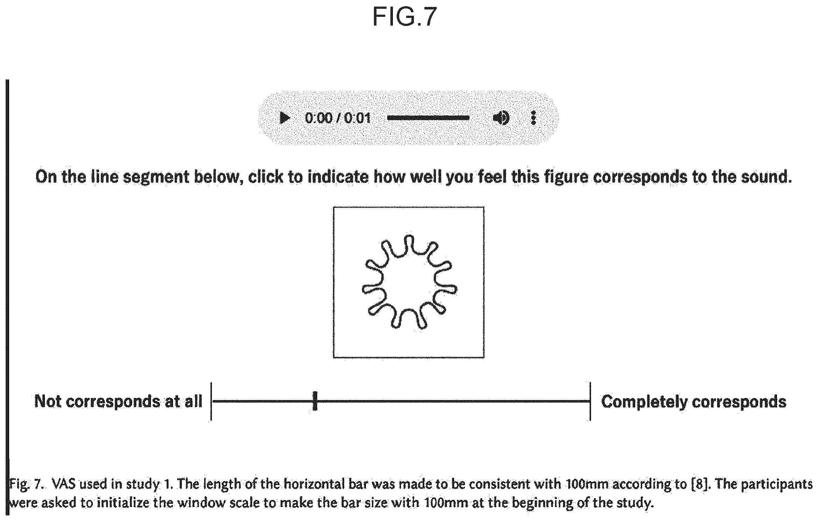

In the second session, 30 timbres were randomly selected from the dataset, and a total of 60 trials, twice for each, were conducted. The trials were conducted in random order. On each trial, either a shape generated by TimToShape or a randomly generated shape is presented along with the timbre (both shape generation methods were used once per timbre). Here, the "randomly generated shape" was generated by randomly setting the shape parameters described in Section 3.6. For the presented timbre-shape pair, the participants were asked to answer how well they felt the shape corresponds to the timbres by visual analog scale (VAS) (the left side was "not corresponding at all" while the right side was "completely corresponding") [8]. The interface used to answer the congruency in Study 1 is shown in Fig. 7.

<5.5 Results>

On the basis of the time taken for the entire study, data from those who took excessively short (less than 10 minutes) or long (36 minutes or more) was eliminated as inappropriate efforts, and data from 75 of 101 participants was used in the analysis. For each participant, the "congruence score" is calculated for each of the "TimToShape" and "Random" methods by the following process.

(1) For each trial, the congruency was scored from 0 (not corresponding at all) to 100 (completely corresponding), depending on the position of the participant selected in the VAS.
(2) The average of the scores of 30 trials for each method is the congruence score of the participant.

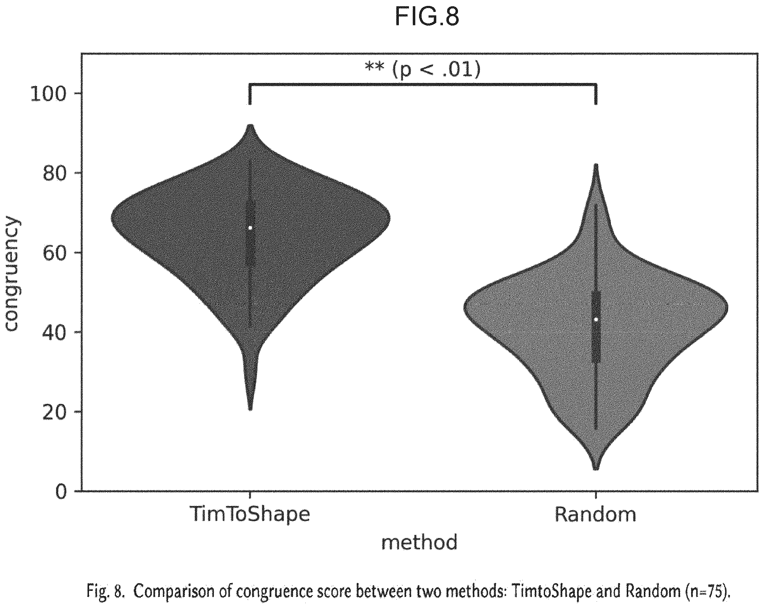

The distribution of congruence scores for all 75 participants is shown in Fig. 8. The median congruence score of "TimToShape" was 66.1 out of 100, while the median congruence score of "Random" was 43.1. A normality test (Shapiro-Wilk test) of the distribution of scores for each method showed that the distribution of "Random" can be regarded as normal ($p =. 15 >. 05$), but that of "TimToShape" is not normal ($p =. 03 <. 05$). Therefore, Wilcoxon signed rank test was performed using paired nonparametric data. The results showed that "TimToShape" had a significantly higher congruence score than "Random" ($p = 0.00 <. 01$, $p = 0.86$). These results indicate that TimToShape can reliably generate shapes that correspond more to any timbre (in the dataset) than randomly generated shapes.

<6 Study 2: Use of as Feedback System for Violin Practice>

Study 2 aimed to determine the advantages, disadvantages, and other possible impacts of using TimToShape as a real-time feedback system for practicing musical instruments. Because the quantitative analysis and evaluation of timbres is difficult, the comments from the participants who used the proposed system during violin practice were mainly analyzed. Six violin players from various backgrounds were asked to practice the violin with two systems: TimToShape and a system that visualizes the positions of the timbres in the latent space as a two-dimensional map. Without revealing the violin players which of the two systems the inventors invented, the inventors asked them to practice the violin using each system, and then conducted questionnaires and interviews.

<6.1 Dataset and Training>

Study 2 used a different dataset from the dataset described in Section 5.1. This was because this study was originally planned to be conducted using a smartphone, but because of the large computational load, TimToShape could not run in real time on a smartphone, and therefore, it was modified to be conducted using a personal computer (Macbook Pro, M1, 2020 with the version 12.4 of macOS Monterey). The recording method was almost the same as that described in Section 5.1, with the "open A-string" played with various techniques but recorded with the standard recording application (Voice Memos) of the personal computer. The total recording time was approximately 22 minutes, and frames were cut out as described in Section 5.1, creating a dataset containing 109,447 frames in total.

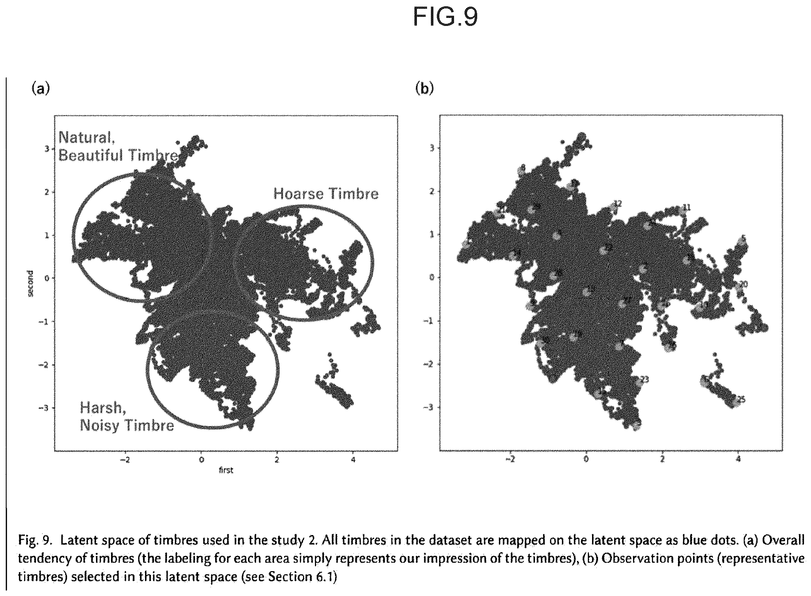

The training of the VAE was conducted in the same setting as in Section 5.2. The latent space resulting from the training is shown in Fig. 9(a) (the labeling for the areas in Fig. 9(a) simply represents the impression of the timbres). The observation points (representative timbres) selected from this latent space according to the method described in Section 3.5 are shown in Fig. 9(b) (the red dots are the observation points adopted in Steps (3) and (4) in Section 3.5, and the yellow dots are the observation points adopted in the 30 loops in Step (5) in Section 3.5).

<6.2 Practice Goal>

The goal timbre of the participants' performance during their practice were determined. A professional violinist was asked to record a sample of an "open A-string" performance to be used as a goal timbre. This sample was recorded with the same instrument, microphone, and recording environment as when the timbres of the dataset were recorded.

The goal timbre was set to approximately 20 seconds of the 20-minute recording, during which the professional stated that he had the best-sounding performance. Here, because the goal timbre is not perfectly constant for 20 seconds, there is variance in the position of the latent space. However, when actually using TimToShape, users practice to approach one shape corresponding to a specific point in the latent space. Therefore, the average position of the goal timbre in the latent space over 20 seconds is set as the goal point expediently.

<6.3 Feedback Systems>

For this user survey, two types of feedback systems were prepared. Both use the same VAE, but with different visualization methods.

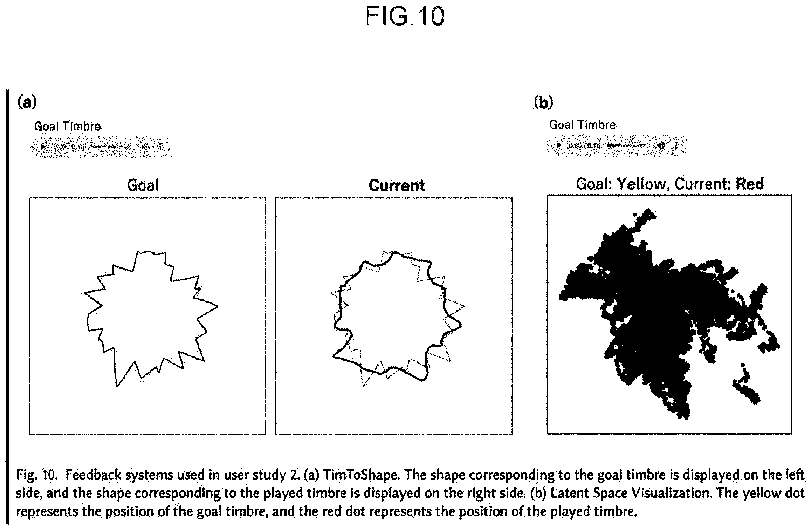

The first is our system, "TimToShape". In actual use, a shape corresponding to the goal timbre (this shape is called the "goal shape") and a shape corresponding to the timbre currently being played (this shape is called the "current shape") are displayed side by side, as shown in Fig. 10(a). To make the difference in shape easier to understand, the goal shape is shown as a translucent guide in the background of the current shape.

The other is a system that visualizes the positions of the timbres in the latent space like a map (this is called "Latent Space Visualization"). As shown in Fig. 10(b), the point of the goal timbre and the point of the timbre currently being played are displayed on the map. This system is based on SonoSpace [15] by Kimura et al., but there are some differences. The differences are as follows.

The VAE used in SonoSpace calculates the position of the point for one note only after the note is played, and therefore, the position of the point is not updated in real time during the performance. However, the VAE used in TimToShape updates its inference in real time. Accordingly, in the "Latent Space Visualization", the position of the feedback point is also updated in real time.

In SonoSpace, in addition to simply visualizing the latent space of timbres, there were several additional functions, such as allowing the user to click on a point in the latent space to play that sound or to display a waveform of the input. However, these were not implemented in this study, because pure visualization methods were to be compared.

<6.4 Participants>

In this user survey, six violinists (P-1 to P-6) were gathered. A wide range of players from beginners to advanced-level players were gathered. The experiences of the respective instrument players are as follows.

P-1: A 55-year-old female violin player, a beginner Her daughter is learning the violin, and she has listened to the teacher's instructions together. Therefore, she has a certain degree of knowledge about the performing technique. Apart from the violin, she learned the piano for 10 years.

P-2: A 57-year-old female violin player, a beginner She has learned the violin at school for one year. Other than the violin, she has more than 50 years of piano experience, and used to be a piano teacher.

P-3: A 24-year-old male with little violin experience, an intermediate-level Viola player He started learning the Viola about nine years ago, and currently plays in an orchestra.

P-4: A 23 year-old male, an intermediate- to advanced-level violin player He took violin lessons for about 10 years in the past, and has about 18 years of experience as a violin player.

P-5: A 20 year-old male, an advanced-level violin player He took violin lessons for 15 years, and currently plays in an orchestra. In addition to that, he has 16 years of experience in piano.

P-6: A 24 year-old female, an advanced-level violin player She started taking violin lessons 20 years ago, and continues to play the violin ever since.

<6.5 Procedure>

This study was conducted in a quiet environment similar to the environment in which the dataset was recorded. The violin and microphone used are identical to those used in the creation of the dataset. The two feedback systems and the procedure used in this study were explained to the users before the start of the study. Written informed consent was obtained from all the participants. The procedure of this study was formed with the following eight steps.

(1) Timbre-shape annotation:
Timbre-shape annotation was performed according to the flow described in Section 4.1, to estimate timbre-shape correspondences of each participant.
(2) Pre-test:
After listening to the goal timbre, the participants conducted a one-minute trial in which they tried to reproduce the goal timbre.
(3) Practice 1:
Practice using the first feedback system was conducted for 10 minutes. With the effects of the order taken into consideration, "TimToShape" was performed first for P-1, P-3, and P-5, and "Latent Space Visualization" was performed first for P-2, P-4, and P-6.
(4) Acquisition Test 1:
Immediately after Practice 1, a 1-minute trial was conducted to reproduce the goal timbre with the feedback system.
(5) Retention Test 1:
After a 10-minute break after Acquisition Test 1, a 1-minute trial of reproducing the goal timbre was conducted without the feedback system.
(6) Practice 2:
The same practice as in Practice 1 was conducted with the other feedback system.
(7) Acquisition Test 2:
The same trial as in Acquisition Test 1 was conducted with the other feedback system.
(8) Retention Test 2:
After a 10-minute break after Acquisition Test 2, a 1-minute trial of reproducing the goal timbre was conducted without the feedback system. The entire study took approximately 80 minutes.

<6.6 Measurements>

<6.6.1 Objective Measures>

Since the latent spaces used in "Tim-ToShape" and "Latent Space Visualization" are identical, the mean distance to the goal point in the latent space is set as an objective measure of performance in the 1-minute trials in Pre-Test, Acquisition Test 1, Retention Test 1, Acquisition Test 2, and Retention Test 2. This value will be hereinafter referred to as the "Distance Error Score" (the lower the score, the better the performance).

<6.6.2 Subjective Measures>

In addition to objective measures, semi-structured interviews and questionnaires were conducted to clarify subjective assessments during practice.

- At the end of Acquisition Test 1 and Acquisition Test 2, interviews were conducted on the basis of questions about the advantages and disadvantages they felt about the feedback system, when they felt the feedback got closer to the goals, and how to achieve that. Also, using a questionnaire, the participants were asked to respond on a 7-point Likert scale, where "1" indicated high disagreement and "7" indicated high agreement, to the question about the interpretability of the feedback: "Did you understand the relationship between the sound you played and the feedback displayed?". Regarding the engagement of the visualization system, the participants were asked to respond to six questions on VisEngage [14]. Specifically, the participants were asked to respond to a total of six questions about "Challenge", "Discovery", and "Interest" (two questions each).

- In addition to the above, after Acquisition Test 2, the participants were interviewed about which of the two feedback systems they would prefer to use in their actual practice and why.
- At the end of Retention Test 1 and Retention Test 2, the participants were asked and interviewed about the differences compared with when the feedback display was displayed.

<6.7 Results and Discussion>

<6.7.1 Objective Measures>

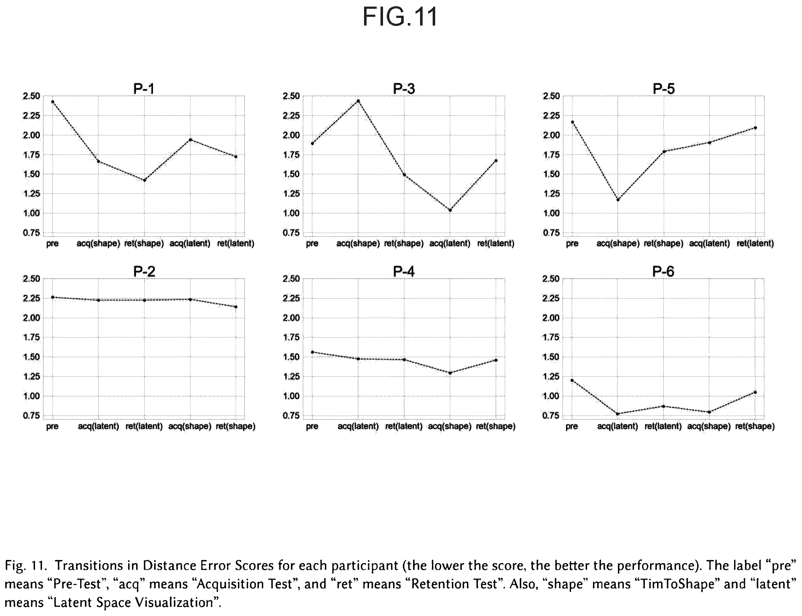

Fig. 11 shows the transitions across the "Distance Error Score" in the five tests for each of the participants. The three upper graphs are for the participants who worked on TimToShape first (P-1, P-3, P-5), and the three lower graphs are for the participants who worked on Latent Space Visualization first (P-2, P-4, P-6).

First, by analyzing the group that performed TimToShape first, it was found that P-1 and P-5 performed better in both Acquisition Test and Retention Test with TimToShape, and P-3 performed better in Acquisition Test with Latent Space Visualization but performed better with TimToShape in Retention Test.

Next, through analysis of the group that performed Latent Space Visualization first, a slight change in scores over the five tests was found, and it appeared that each person's ability in Pre-Test remained dominant until the end.

Looking only at the scores, three (P-1, P-4, P-5) performed better in Acquisition Test and five (P-1, P-2, P-3, P-4, P-5) performed better in Retention Test with TimToShape than with Latent Space Visualization. Although some score superiority was shown by TimToShape, especially in terms of retention, it would be difficult to show clear superiority of TimToShape using this objective measure because of the large overall individual differences.

<6.7.2 Subjective Measures>

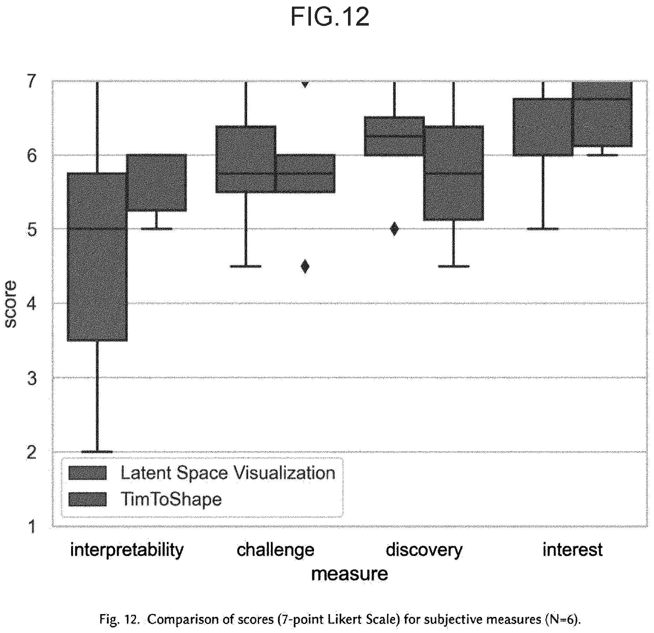

Fig. 12 shows the distributions of responses to the interpretability question and the VisEngage-based "Challenge", "Discovery", and "Interest" question. For "Challenge", "Discovery", and "Interest", the average of the responses to the two questions was taken as one person's score. Although the statistical analysis was not performed due to the small number of participants, TimToShape tends to be higher in terms of "interpretability". Five participants gave TimToShape a score equal to or higher than that for Latent Space Visualization.

For the question asked which of TimToShape and Latent Space Visualization they would use in practice, five participants (P1, P2, P3, P4, P6) answered TimToShape.

These results suggested that TimToShape has higher interpretability and is preferred by most people over Latent Space Visualization. From this point on, the comments in the interviews are analyzed to determine why the different methods of visualizing the latent space gave such varying impressions.

First, there are some comments on the advantages of TimToShape over Latent Shape Visualization.

"Shape was easy to understand visually and intuitively with a quick glance." (P-2)

Two beginners (P-1, P-2) mentioned that they were so absorbed in the movement of their hands, arms, and bows that it was difficult for them to keep an eye on the feedback screen. In this context, P-2 states that she could not follow the moving dot with her eyes (in Latent Space Visualization) but that the changing shape was highly comprehensible with a quick glance (in TimToShape).

"In the map feedback (Latent Space Visualization), it was difficult to understand what the vertical and horizontal axes represented, and it was difficult to move the point as I wanted, but in the shape feedback (TimToShape), the transformation of the shape fitted my intuition and it was easy to get the hang of getting closer to the goal." (P-6, there are similar comments from P-3 and P-4)

Several participants indicated that they had difficulty grasping the meaning of the axes of the latent space. It is interesting that, even though the same latent space was used in TimToShape, some participants found it easier to understand the relationship between the timbre and feedback simply by visualizing it through a sensory-based shape.

"When practicing with map (Latent Space Visualization), I did not feel like I was trying to bring the "sound" sounds closer to the goal sound because I was concentrating only on the movement of the dot, and I think I was not listening to my own sound very well during the practice. But practicing with shape (TimToShape), I do not know why I felt that this problem was lessened and that I could pay more attention to the sound." (P-4, and similar comments from P-5)

It is considered that this is a comment related to the previous comment. That is, it is considered that the difficulty in interpreting the feedback caused many participants focus only on the behavior of the feedback (except for beginners). Furthermore, it is suspected that the reason this problem was reduced in TimToShape was not only because the relationship between the timbre and feedback was easier to grasp, but also because the timbres were visualized on the basis of crossmodal correspondence, which subconsciously directed the user's attention to the timbre even while looking at the shape.

"When practicing with map (Latent Space Visualization), the dot was usually not close to the goal at all, even when I tried various attempts, which was demotivating. But when practicing with shape (TimToShape), I did trial and error in various ways, and still I was able to practice without getting bored. I felt a sense of accomplishment when I got close to the target without noticing" (P-1)

This is another strength of TimToShape. Because the VAE does not consider human perception when learning, the distance in the latent space does not necessarily correspond to the distance in human perception. Therefore, a situation can arise in which two points in the latent space are extremely distant, even though they sound close as a sound. This leads to a loss of motivation, especially for beginners. However, this problem is less likely to occur with TimToShape, because figures are created on the basis of the user's perception, and even when two sounds are far apart in the latent space, if the user feels them similar to each other, the figures will be displayed close to each other.

"In the trial without feedback (Retention Test), although the figure was not displayed, I played while imagining the changing figure in real time. However, (in Latent Space Visualization,) it was difficult to imagine the position on the map in real time." (P-5, and similar comments from P-2)

It is considered that this may be a strength of the crossmodal correspondence. By visualizing shapes that may be recalled by each user for timbres, it becomes easier to recall feedback even after it is lost.

On the other hand, the following comments were received regarding the advantages of Latent Space Visualization over TimToShape.

"Map visualization (Latent Space Visualization) seemed to have higher resolution regarding the goal and current errors." (P-4)

"Map feedback (Latent Space Visualization) seemed to analyze more elements of timbre." (P-5, and similar comments from P-3)

Both comments suggest that by visualizing the timbre as a shape, the amount of information is reduced compared with a case where the latent space of timbres is visualized as it is. This is not necessarily a bad thing when used for feedback, in that it reduces the cognitive load of the user, but further discussion is needed regarding the amount of information to be presented.

In addition, the following comments were received as common drawbacks to both.

"Technical advice is not presented, so sometimes it is not clear how to improve." (P-2, and similar comments from P-1)

"Both systems require me to do a variety of trial and error to find the moment when the feedback approaches the goal by myself. If I could not find it, I would be at a loss." (P-3)

This is a major challenge, especially for beginners using this system. TimToShape only visualizes timbres by shape, and it is easy to understand the relationship between timbres and feedback. However, any technical advice is not provided. Because technical advice varies depending on the type of instrument, attempting to solve this problem makes it impossible to build a method that is applicable to any instrument, which is the basic idea of TimToShape. Therefore, for beginners, it is recommended to use TimToShape in combination with advice from an adept professional or a system that provides feedback on technical information (for example, [32]).

Overall, this system is well received by violin players in terms of visual clarity, interpretability (easy to understand the relationship between timbres and feedback), and ease of recall (easy to recall even after the feedback is lost).

<7 Limitation and Future Work>

<7.1 Number of Dimensions of Latent Space of Timbres>

In the present embodiment, the number of dimensions of the timbre latent space is set to "2" with reference to Kimura et al. [15]. However, further discussion of the number of dimensions of the latent space is required. If the number of dimensions of the latent space is increased, more timbre features can be reflected, which leads to a more accurate estimation of the correspondence between timbres and shapes. However, the user needs to answer shapes for timbres more times in timbre-shape annotation, which can be burdensome for the user. Further user studies should be conducted to determine the advantages and disadvantages of increasing the number of dimensions and to determine the optimal number of dimensions.

<7.2 Parameters That Constitute Shape>

As mentioned in Section 5.5, the median congruence score of TimToShape was 66.1 (out of 100). This still leaves some scope for improvement.

There are two methods to counter this problem. The first is to revisit the method of creating shapes as mentioned in Section 3.6. Currently, six semantic parameters are provided to create a shape, but these parameters may have been inadequate for creating a shape the user wants to create. Constructing a method of creating shapes more freely would improve the congruency stores.

The second is to consider parameters other than the outline of a shape. Since timbre-shape correspondences vary from person to person, some may feel a strong correspondence to factors other than shape outlines (for example, size, color, and texture pattern), as research on crossmodal correspondences between sound and vision has shown [11, 29, 30]. This method can include any element in the output, as long as the element can be linearly interpolated as a vector. This strength is leveraged to reflect elements other than the outline of the shape in the output, and shapes having high congruency to timbre are provided to a larger number of people.

Also, by increasing the number of parameters that constitute the shape, it is possible to provide more information as feedback for timbre, and alleviate the problem of the shape's low amount of information mentioned in Section 6.7.

<7.3 Termination Condition for Timbre-Shape Annotation>

There remains scope for further study regarding the termination condition for timbre-shape annotation. Currently, the termination condition is to answer that there is no problem without modifying the estimated shape three consecutive times in Step (5)(b) in Section 3.5, or to loop Step (5) thirty times.

However, only 21 out of 75 participants in Study 1 finished with the former termination condition, and the remaining participants annotated shapes for timbres 33 times (including the first three timbres).

It is burdensome for users to perform annotation 33 times. Not only in Step (5)(b) but also in Step (5)(c), it is necessary to find the minimum number of times for the entire loop without worsening the congruence score, or to devise a method to validate the end of the loop on the basis of the size of the shape modification in the step.

<7.4 Application for Different Timbres and Environments>

In the present embodiment, TimToShape was limited to use with the timbre of "open A-string" of the same violin. However, this method can be easily applied to any timbre of any instrument, as long as there is a dataset of the timbres.

In the future, datasets of timbres of various instruments in various recording environments will be created, and a system using these datasets that can be used with any instrument anywhere will be built.

<8 Conclusion>

The present embodiment has proposed TimToShape, which is a system that can visualize any timbres with two-dimensional shapes aligned with a person's perception, on the basis of the fact that there is a crossmodal correspondence between timbres and shapes. TimToShape aims to provide feedback that makes it easier for humans to understand the relationship between timbres and feedback in musical instrument practice. TimToShape acquires a latent space of timbres through unsupervised learning by the VAE. By asking each user to annotate shapes for some points in the latent space, it is possible to estimate a shape for any point in the latent space with linear interpolation. First, to verify the shape estimation method, a user survey (n = 75) via crowdsourcing was conducted, and it was found that shapes with significantly higher congruency to the timbres than that of randomly generated shapes can be generated. Next, to verify the effectiveness of this system used as feedback for musical instrument practice, a user study with six violin players was conducted. As a result, it was found that visualization by TimToShape was more comprehensible at a glance, was easier to understand the relationship between the timbre and the feedback, and was easier to recall the feedback even after the feedback was lost, compared with the case of simply visualizing the position of the timbre in the latent space (like a map). In the future, to further improve congruency, elements other than shape outlines will be included in visualization, and, to enhance generalization performance for various instruments and environments, datasets of other timbres will be created. It is expected that, by providing insights to reflect human perceptual characteristics in an interface and interaction that applies machine learning as above, this work will inspire synergy between human-computer interaction (HCI) and AI domains.

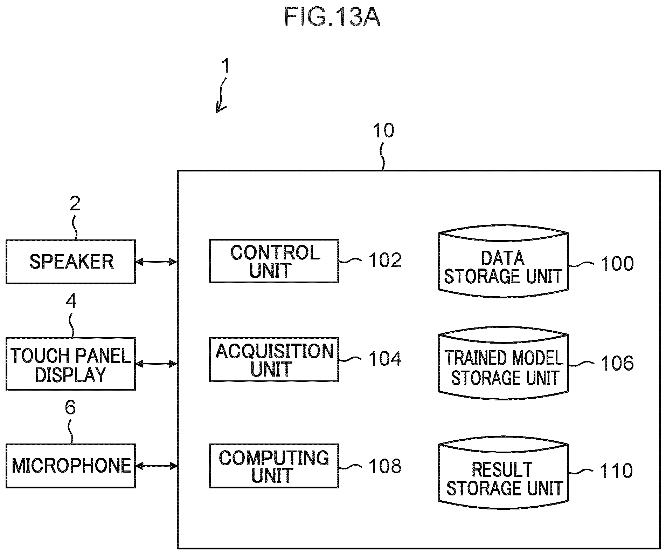

Fig. 13A is a block diagram of a schematic configuration of an information processing system 1 according to the present embodiment. As shown in Fig. 13A, the information processing system 1 includes a speaker 2 that is an example of the sound output unit, a touch panel display 4 that is an example of the display unit, a microphone 6, and an information processing device 10.

The speaker 2 outputs sound, under the control of the information processing device 10.

The touch panel display 4 displays an image, under the control of the information processing device 10. The touch panel display 4 also receives a user's operation. Note that a case where the display unit included in the information processing device 10 is the touch panel display 4 is described as an example in the present embodiment, but it is not limited to this. For example, a device different from the touch panel display 4 may be adopted as long as the device is capable of displaying an image and receiving an operation on the displayed image.

The microphone 6 acquires sound.

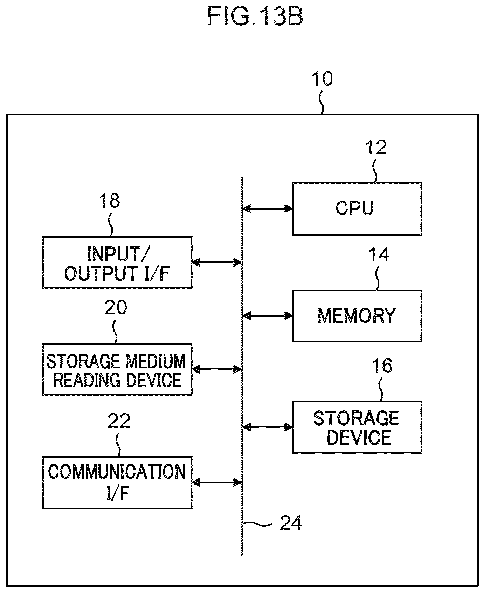

The information processing device 10 converts a timbre into a figure on the basis of the user's perception, using a method as described above. Fig. 13B is a block diagram showing the hardware configuration of the information processing device 10 according to the present embodiment. As shown in Fig. 13B, the information processing device 10 includes a central processing unit (CPU) 12, a memory 14, a storage device 16, an input/output interface (I/F) 18, a storage medium reading device 20, and a communication I/F 22. The respective components are communicably connected to one another via a bus 24.

The storage device 16 stores an information processing program for executing each of the processes described later. The CPU 12 is a central computing unit, and executes various programs, and controls the respective components. That is, the CPU 12 reads a program from the storage device 16, and executes the program, using the memory 14 as a work area. The CPU 12 performs the above-described various types of arithmetic processing in accordance with the programs stored in the storage device 16.

The memory 14 is formed with a random access memory (RAM), and, as a work area, temporarily stores a program and data. The storage device 16 is formed with a read only memory (ROM), and a hard disk drive (HDD), a solid state drive (SSD), or the like, and stores various programs including an operating system and various kinds of data.

The input/output I/F 18 is an interface that inputs data from an external device, and outputs data to an external device. Further, input devices for performing various kinds of inputs, such as a keyboard and a mouse, and output devices for outputting various kinds of information, such as a display and a printer, may be connected to the input/output I/F 18. A touch panel display may be adopted as an output device, and the input/output I/F 18 may be made to function as an input device.

The storage medium reading device 20 reads data stored in various kinds of storage media such as a compact disc (CD)-ROM, a digital versatile disc (DVD)-ROM, a Blu-ray disc, and a universal serial bus (USB) memory, and writes data into a storage medium, for example.

The communication I/F 22 is an interface for communicating with other devices, and a standard for Ethernet (registered trademark), FDDI, Wi-Fi (registered trademark), or the like is used.

Next, functional components of the information processing device 10 are described. As shown in Fig. 13A, the information processing device 10 functionally includes a control unit 102, an acquisition unit 104, and a computing unit 108. Further, a data storage unit 100, a trained model storage unit 106, and a result storage unit 110 are provided in a predetermined storage area in the information processing device 10. The respective functional components are implemented by the CPU 12 reading the respective programs stored in the storage device 16, loading the programs into the memory 14, and executing the programs.

The data storage unit 100 stores data representing a plurality of sounds and data representing figures. The trained model storage unit 106 stores a VAE (hereinafter also referred to simply as the trained encoder) that is an example of the trained model. The result storage unit 110 stores a result of timbre-figure association by each user.

First, the information processing device 10 acquires the result of timbre-figure association by each user.

The control unit 102 reads a plurality of representative sounds and figures stored in the data storage unit 100. Note that the present embodiment concerns an example case where there are representative sounds belonging to a group for which the user associates timbres directly with figures, and sounds for which the user corrects presented figures to associate timbres with the figures.

The control unit 102 controls the speaker 2 to output the timbres of the plurality of representative sounds, and controls the touch panel display 4 to display figure candidates corresponding to the respective timbres of the plurality of representative sounds.

As described above, in the present embodiment, data representing timbres is input to the trained encoder that is an example of the trained model, so that a two-dimensional vector is output from the trained encoder. In the present embodiment, the two-dimensional vector output from the trained encoder is referred to as the first feature vector.

Therefore, for each of the timbres, the computing unit 108 inputs spectrogram data representing the timbre to a trained autoencoder stored in the trained model storage unit 106, to generate the first feature vector corresponding to the spectrogram data representing the timbre.

The computing unit 108 then generates a map on which the first feature vector of each of the timbres is projected. The computing unit 108 then selects the first feature vectors corresponding to the timbres of the representative sounds from the first feature vectors projected on the map.

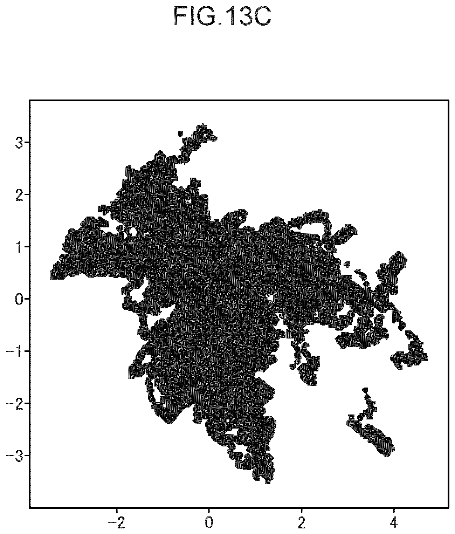

Fig. 13C is a diagram illustrating an example of the map on which the first feature vectors are projected. The plotted points shown in Fig. 13C are the two-dimensional first feature vectors generated from the respective timbres.

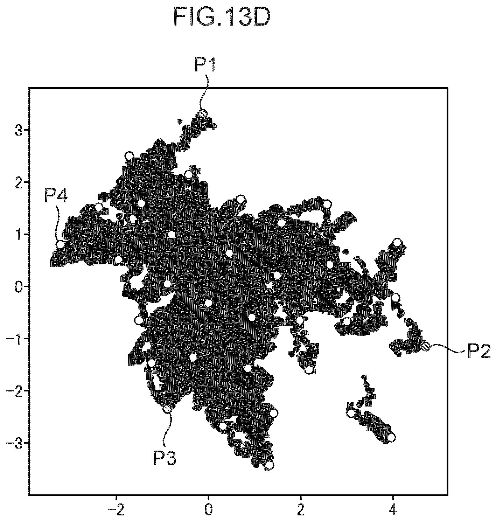

Fig. 13D is a diagram for explaining the map on which the first feature vectors of the representative sounds are projected. P1, P2, and P3 shown in Fig. 13D are the first feature vectors corresponding to three representative sounds. Further, each of the white-circle plotted points shown in Fig. 13D is a first feature vector corresponding to the timbre of a sound different from the three representative sounds.

First, the control unit 102 causes the speaker 2 to output the timbres of the three representative sounds corresponding to the first feature vectors represented by the plotted points P1, P2, and P3 shown in Fig. 13D. As illustrated in Fig. 13D, the respective first feature vectors of the three representative sounds are selected beforehand so that the sum of the sides of the triangle formed by the three plotted points is maximized. Each of the first feature vectors corresponding to the three plotted points is an extreme timbre, and first, figures corresponding to these timbres are answered from the user.

Therefore, the control unit 102 controls the speaker 2 to output the timbres of these three representative sounds, and controls the touch panel display 4 to display candidates for figures corresponding to the respective timbres of the three representative sounds.

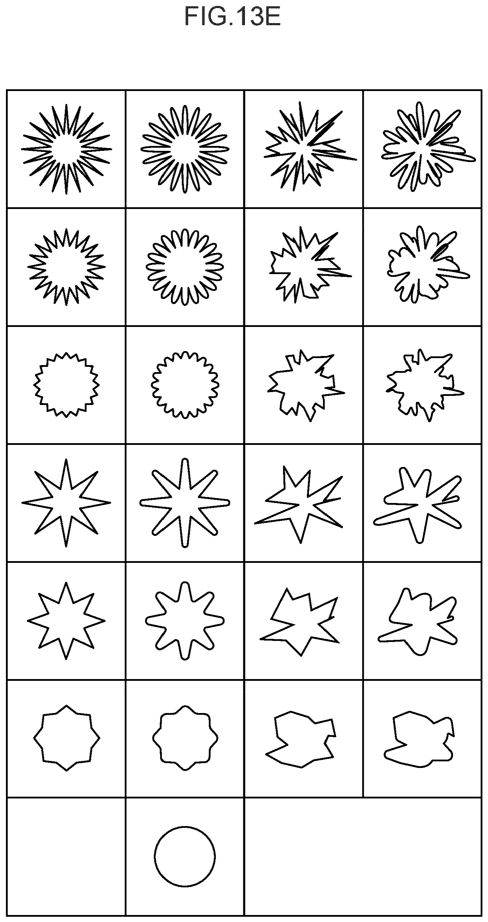

Fig. 13E is a diagram showing an example of figure candidates displayed on the touch panel display 4. The control unit 102 controls the touch panel display 4 to display a plurality of figure candidates as shown in Fig. 13E.

For example, the user operates the touch panel display 4, to select figures matching the impression of the timbres of the representative sounds from among the figure candidates as shown in Fig. 13E.

The acquisition unit 104 acquires the results of responses about the figures that have been input from the user and correspond to the respective timbres of the three representative sounds.

On the basis of the response results acquired by the acquisition unit 104, the computing unit 108 associates the first feature vectors of the timbres of the three representative sounds with second feature vectors representing the figures in the response results from the user.

Here, the second feature vectors representing the figures are described.

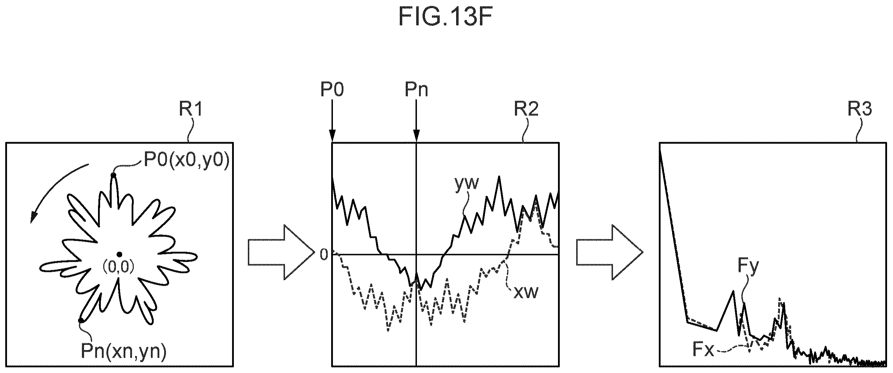

As described above, in the present embodiment, the position of each of the points forming the figure in R1 is sampled, as illustrated in Fig. 13F. For example, as illustrated in Fig. 13F, positions (x0, y0) to (xn, yn) of a plurality of points P0 to Pn in the figure are sampled in the direction of an arrow drawn in R1.

Waveform data indicating changes in the positions of a plurality of sampling points on the line forming the figure is then generated. For example, as shown in R2 in Fig. 13F, by plotting the positions (x0, y0) to (xn, yn) of the sampling points, data xw indicating changes in the x coordinate and data yw indicating changes in the y coordinate are generated. The horizontal axis in R2 in Fig. 13F corresponds to the direction of the arrow in R1 in Fig. 13F.

Fourier transform is then performed on the waveform data indicating changes in the positions of the sampling points, to generate frequency vector indicating figures. For example, as shown in R3 in Fig. 13F, Fourier transform is performed on the data yw indicating changes in the y coordinate to generate a Fourier transform result Fy, and Fourier transform is performed on the data xw indicating changes in the x coordinate to generate a Fourier transform result Fx. Note that the horizontal axis in R3 in Fig. 13F indicates frequency, and the vertical axis indicates frequency intensity. As the Fourier transform results Fx and Fy are vectorized, the second feature vector representing the figure is generated. For example, a vector having the frequency intensities corresponding to the respective frequencies as components is generated as the second feature vector. In the present embodiment, 2048-dimensional second feature vectors are generated from Fourier transform results.

The computing unit 108 associates the second feature vectors of figures generated in this manner with the first feature vectors representing the timbres of the representative sounds.

Specifically, the computing unit 108 performs Fourier transform on the figures of the representative sounds obtained as the results of the responses from the user, and generates the second feature vectors that are the frequency vectors corresponding to the figures. The computing unit 108 then associates the first feature vectors representing the timbres of the representative sounds with the second feature vectors representing the figures, and generates a result of association by the user.

The computing unit 108 then obtains a result of a response about a figure matching the impression of the user for each of the timbres of a plurality of sounds different from the three representative sounds.

Fig. 13D mentioned above is also a diagram for explaining a method of selecting a plurality of sounds different from the three representative sounds. P1, P2, and P3 shown in Fig. 13D are the first feature vectors corresponding to the three representative sounds. On the other hand, each of the white-circle plotted points shown in Fig. 13D is a first feature vector corresponding to the timbre of a sound different from the representative sounds.

After the figures corresponding to the first feature vectors P1, P2, and P3 corresponding to the three representative sounds are answered, the computing unit 108 obtains the results of responses about the figures matching the timbres corresponding to the respective white-circle plotted points shown in Fig. 13D.

In this case, the computing unit 108 obtains the results of responses about the figures matching the impressions of the user, starting from the plotted point having the longest distances to the plotted points about which responses have already been obtained from the user.

For example, after the figures corresponding to the first feature vectors P1, P2, and P3 corresponding to the three representative sounds shown in FIG. 13D are answered, the computing unit 108 selects the timbre of the sound corresponding to a first feature vector P4 having the largest sum of the distances from P1, P2, and P3, as the timbre to be presented next.

The control unit 102 then controls the speaker 2 to output the timbre of the sound corresponding to the first feature vector P4 as selected by the computing unit 108. The control unit 102 also performs control so that a candidate for the figure corresponding to the timbre of the sound is displayed on the touch panel display 4.

At this point of time, the figure candidate to be displayed on the touch panel display 4 is generated by interpolating the result of association of the timbres of the three representative sounds with the figures about which the responses have already been obtained from the user.

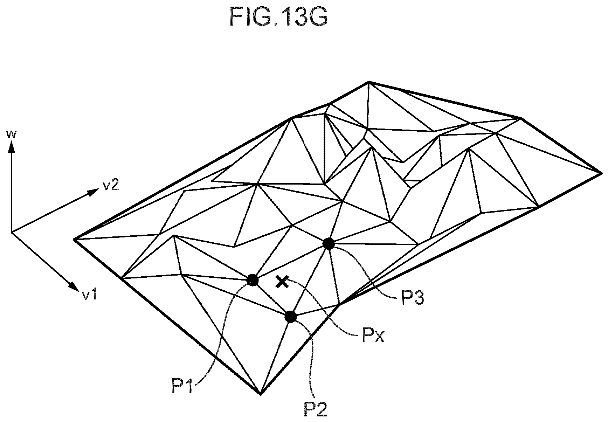

Fig. 13G is a diagram for explaining a method of interpolating an already obtained association result. In Fig. 13G, (v1, v2) represents the first feature vectors, and w represents the second feature vectors. Note that, in Fig. 13G, the second feature vectors w are expressed in one dimension, for ease of explanation. As described above, the second feature vectors correspond to the frequency vectors obtained from figures, and therefore, the number of the dimensions of the frequency vectors is actually 2048.

For example, as shown in Fig. 13G, a case where each of the first feature vectors P1, P2, and P3 corresponding to the three representative sounds is associated with a second feature vector is discussed herein. In this case, the computing unit 108 estimates the second feature vector corresponding to the first feature vector Px in Fig. 13G, from the result of association of the three first feature vectors P1, P2, and P3 corresponding to the three representative sounds with the second feature vectors. This estimation can be performed by the known Delaunay triangulation.

Accordingly, the computing unit 108 associates the first feature vector of the timbre of the sound different from the representative sounds with a provisional second feature vector by interpolating the result of association of the timbres of the three representative sounds with the figures. The computing unit 108 then generates a candidate for the figure corresponding to the timbre of the sound different from the representative sounds, on the basis of the provisional second feature vector.

The control unit 102 then controls the speaker 2 to output the timbre of the sound different from the timbres of the three representative sounds, and controls the touch panel display 4 to display the candidate for the figure corresponding to the timbre different from the timbres of the three representative sounds.

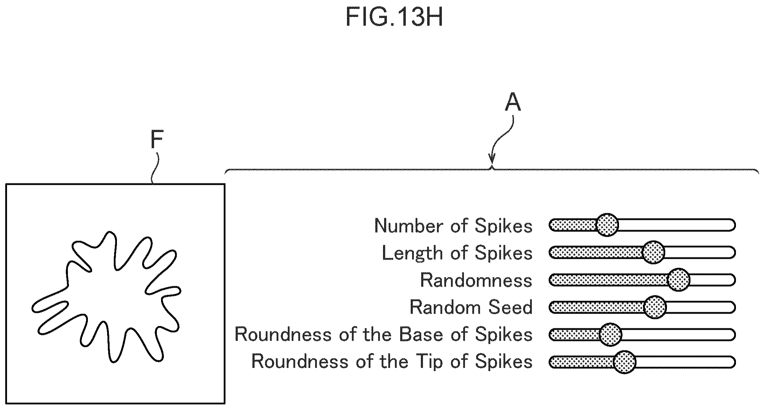

In this case, the control unit 102 controls the touch panel display 4 to display a screen as shown in Fig. 13H, for example. A figure candidate F shown in Fig. 13H is displayed on the touch panel display 4, and a bar A for correcting the shape of the figure candidate F is also displayed on the touch panel display 4. Thus, the shape of the figure candidate F corresponding to the timbre different from the timbres of the representative sounds can be corrected by the user.

For example, the user manipulates the touch panel display 4, to correct the shape of the figure candidate F as shown in Fig. 13H, and select a figure matching the impression of the presented timbre.

The acquisition unit 104 acquires the result of response about the figure that has been input from the user and corresponds to the timbre.

On the basis of the result of the response about the figure corresponding to the timbre different from the timbres of the representative sounds, the computing unit 108 associates the first feature vector of the timbre different from the timbres of the representative sounds with the second feature vector representing the figure as the result of the response, to generate a result of association by the user.

Specifically, the computing unit 108 performs Fourier transform on the figure corresponding to the timbre different from the timbres of the representative sounds, and generates the second feature vector that is the frequency vector corresponding to the figure. The computing unit 108 then associates the first feature vector representing the timbre different from the timbres of the representative sounds with the second feature vector representing the figure, and generates a result of association by the user.

The computing unit 108 associates the result of association by each user obtained in this manner with the user ID, and stores the results into the result storage unit 110.

The information processing device 10 then converts the timbre of a sound generated by the user's musical instrument performance into a figure, on the basis of the result of association by each user.

First, the user inputs his/her user ID to the touch panel display 4. As the user ID is input, it becomes clear which association result should be referred to at the time of the figure generation described later.

When the user generates a sound, the microphone 6 then collects the subject timbre.

The acquisition unit 104 acquires data indicating the subject timbres collected by the microphone 6.

The computing unit 108 performs known frequency analysis on the data representing the subject timbre acquired by the acquisition unit 104, to generate spectrogram data representing the subject timbre.

The computing unit 108 then inputs the spectrogram data representing the subject timbre to the trained encoder stored in the trained model storage unit 106, to generate the first feature vector of the subject timbre.

The computing unit 108 then calculates the second feature vector from the first feature vector of the subject timbre by referring to the association result corresponding to the user's ID in the result storage unit 110. Note that, at this point of time, the second feature vector corresponding to the subject timbre is calculated by interpolating the association result. The computing unit 108 then generates a figure representing the subject timbre by performing inverse Fourier transform on the second feature vector.

As illustrated in Fig. 13F, a second feature vector is the frequency vector obtained by performing Fourier transform on a figure. Therefore, by performing inverse Fourier transform on the frequency vector, it is possible to restore the figure corresponding to the frequency vector.

The control unit 102 performs control so that the figure generated by the computing unit 108 is displayed on the touch panel display 4.

Next, the functions of the information processing system 1 according to the present embodiment are described.

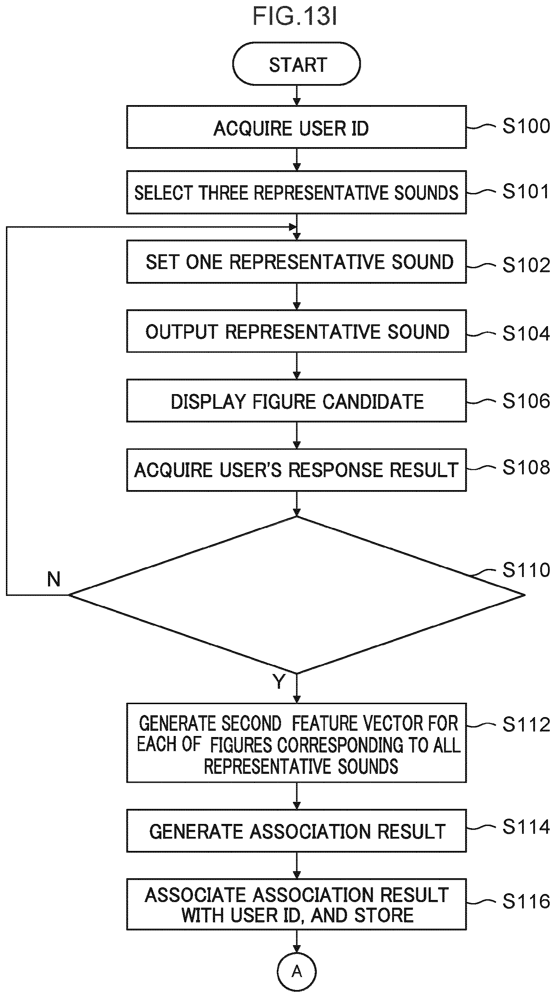

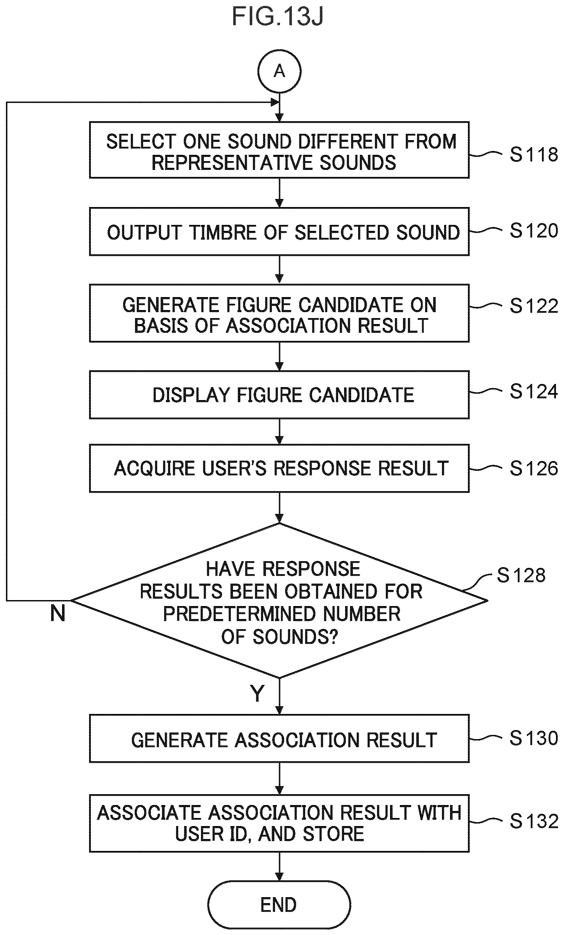

First, when the information processing device 10 receives a predetermined instruction signal, the CPU 12 of the information processing device 10 reads an information processing program from the storage device 16, loads the information processing program into the memory 14, and executes the information processing program. As a result, the CPU 12 functions as each of the functional components of the information processing device 10, and the processing illustrated in Figs. 13I and 13J is performed.

First, the user inputs his/her user ID to the information processing device 10 by manipulating the touch panel display 4.

In step S100, the acquisition unit 104 acquires the user ID.

In step S102, the computing unit 108 generates a map on which the first feature vector of each of the timbres is projected. In step S102, the computing unit 108 then selects the first feature vectors corresponding to the timbres of three representative sounds from the first feature vectors projected on the map.

In step S102, the computing unit 108 sets one of the three representative sounds selected in step S100.

In step S104, the control unit 102 controls the speaker 2 to output the one representative sound set in step S102.

In step S106, the control unit 102 controls the touch panel display 4 to display a plurality of figure candidates.

As the figure candidates are displayed on the touch panel display 4, the user selects a figure matching the impression of the timbre of the sound output from the speaker 2 in step S104.

In step S108, the acquisition unit 104 acquires the user's response result.

In step S110, the computing unit 108 determines whether results of responses about figures have been obtained from the user for all the three representative sounds. If results of responses about figures have been obtained from the user for all the three representative sounds, the processing proceeds to step S112. If there is a representative sound for which any result of a response about a figure has not been obtained from the user, on the other hand, the processing returns to step S102.

In step S112, the computing unit 108 performs Fourier transform on each of the figures of the representative sounds as the response results obtained in step S108, to generate each of the second feature vectors that are the frequency vectors corresponding to the figures.

In step S114, the computing unit 108 associates the first feature vectors of the timbres of the representative sounds with the second feature vectors representing the figures in the response results generated in step S112, and thus, generates a result of association by the user.

In step S116, the computing unit 108 associates the association result obtained in step S114 with the user ID acquired in step S100, and stores the association result of the user into the result storage unit 110.

In step S118, the computing unit 108 selects a sound different from the three representative sounds.

In step S120, the control unit 102 controls the speaker 2 to output the timbre of the sound selected in step S118.

In step S122, the computing unit 108 reads the association result from the result storage unit 110, and generates a candidate for the figure of the sound selected in step S118 on the basis of the association result. Specifically, in step S122, the frequency vector of the sound selected in step S118 is subjected to inverse Fourier transform, to generate a candidate for the figure of the sound selected in step S118.

In step S124, the control unit 102 controls the touch panel display 4 to display the figure candidate generated in step S122.

As the candidate for the figure of the sound is displayed on the touch panel display 4, the user corrects the figure candidate so as to match the impression of the timbre of the sound output from the speaker 2 in step S120.

In step S126, the acquisition unit 104 acquires the user's response result.

In step S128, a check is made to determine whether results of responses about figures have been obtained from the user for all the sounds whose figures are to be identified. If results of responses about figures have been obtained from the user for all the sounds whose figures are to be identified, the processing proceeds to step S130. If there is a sound for which any result of a response about a figure has not been obtained from the user, on the other hand, the processing returns to step S118.

In step S130, the computing unit 108 associates the first feature vectors of the timbres of the sounds obtained in step S118 with the second feature vectors representing the figures in the response results generated in step S112, and thus, generates a result of association by the user.

In step S132, the computing unit 108 associates the association result obtained in step S114 with the association result obtained in step S130 and the user ID acquired in step S100, and stores the association result of the user into the result storage unit 110.

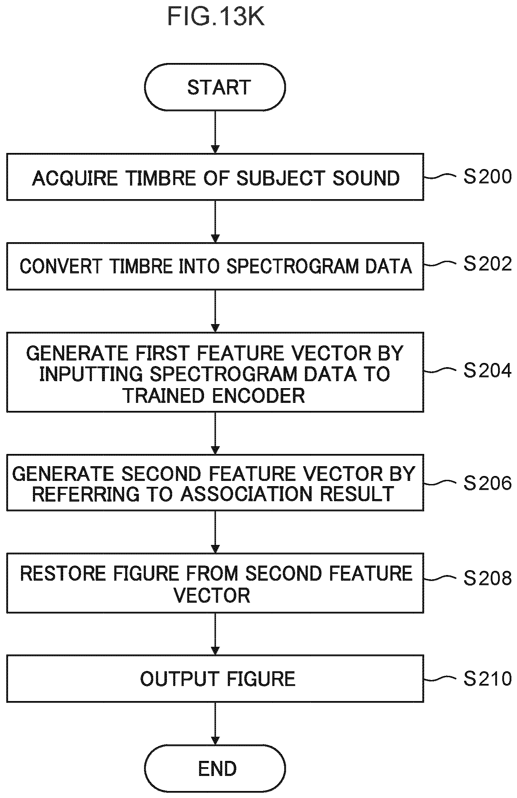

When the information processing device 10 next receives a predetermined instruction signal, the CPU 12 of the information processing device 10 reads the information processing program from the storage device 16, loads the information processing program into the memory 14, and executes the information processing program. Thus, the CPU 12 functions as each of the functional components of the information processing device 10, and the processing illustrated in Figs. 13K is performed. Note that the processing illustrated in Fig. 13K is repeatedly performed every time a sound emitted from the user is obtained.

First, the user inputs his/her user ID to the information processing device 10 by manipulating the touch panel display 4. When the user generates a sound by playing a musical instrument or the like, the microphone 6 then collects the sound.

In step S200, the acquisition unit 104 acquires the timbre of the subject sound collected by the microphone 6.

In step S202, the computing unit 108 converts the timbre of the sound obtained in step S200 into spectrogram data.

In step S204, the computing unit 108 reads the trained encoder stored in the trained model storage unit 106, and inputs the spectrogram data obtained in step S202 to the trained encoder. A two-dimensional first feature vector output from the trained encoder is then acquired.

In step S206, the computing unit 108 reads the association result corresponding to the input user ID from the result storage unit 110. In step S206, the computing unit 108 then generates the second feature vector corresponding to step S204 by referring to the read association result. Note that, at this point of time, the second feature vector corresponding to the subject timbre is calculated by interpolating the association result.

In step S208, the computing unit 108 restores a figure from the second feature vector generated in step S206.

In step S210, the control unit 102 controls the touch panel display 4 to output the figure obtained in step S208.

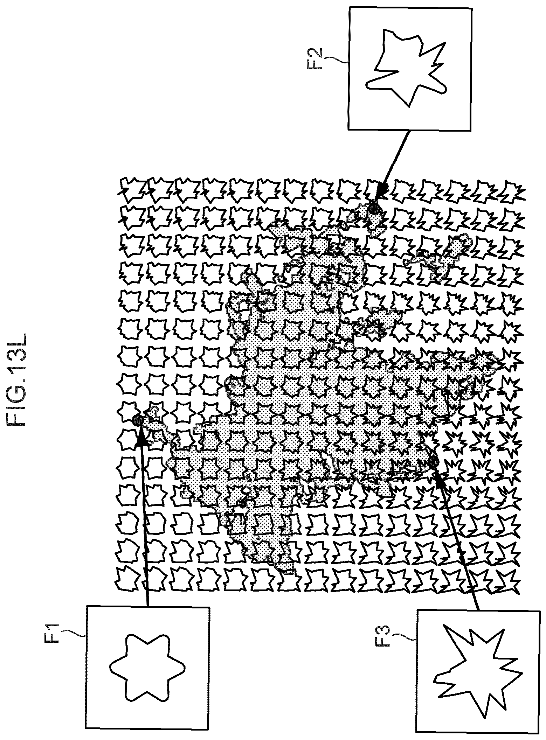

Fig. 13L is a diagram illustrating a result in which each first feature vector of a plurality of first feature vectors is associated with a figure in a map on which the first feature vectors of a plurality of timbres are projected. As illustrated in Fig. 13L, a plurality of figures including figures F1, F2, and F3 are associated with the first feature vectors on the map.

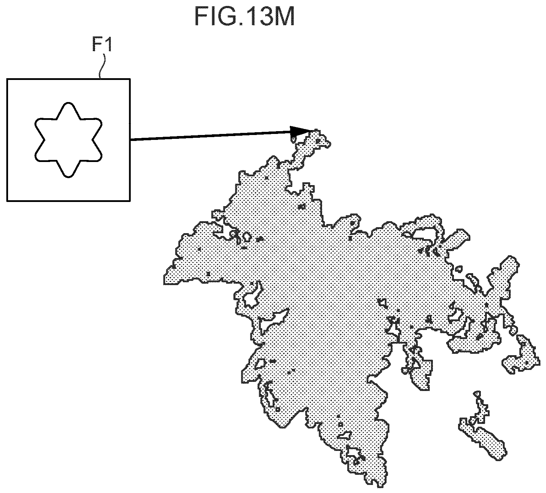

Note that, when a figure is presented to the user, a figure as shown in Fig. 13L or 13M may be displayed on the touch panel display 4. In a case where a figure as shown in Fig. 13M is displayed on the touch panel display 4, the information processing device 10 causes the touch panel display 4 to display the map on which the respective first feature vectors of a plurality of timbres are projected, for example. When the user places a cursor on a point on the map, the information processing device 10 then generates the figure F1 corresponding to the plotted point located at the cursor, and causes the touch panel display 4 to display the figure F1. As a result, the user can easily understand the correspondence between the position on the map on which the respective first feature vectors of the plurality of timbres are projected and the figure.

The information processing device 10 according to the present embodiment generates the first feature vector from the data representing the subject timbre, using the method as described above. Also, the information processing device 10 calculates the second feature vector representing the figure from the first feature vector representing the subject timbre, on the basis of a result of association of the first feature vector to the second feature vector, which has been collected beforehand for each user. The information processing device 10 generates a figure representing a subject timbre from the calculated second feature vector, and outputs the generated figure. In this manner, the timbre can be converted into a figure on the basis of the user's perception.

Although a case where the VAE is used when the first feature vector is generated from the data representing the subject timbre and the frequency vector of the figure is the second feature vector has been described as an example in the above embodiment, it is not limited to this. Any method may be used as long as certain data can be converted into a vector by the method.

Although a case where a closed figure as shown in Fig. 3 is used has been described as an example in the above embodiment, it is not limited to this, and some other type of figure may be used. For example, a figure such as a wavy line may be used. Alternatively, a figure that cannot be drawn with one stroke (a figure such as a double circle) may be used.

Although a case where a result of association of the first feature vector representing the subject timbre with the second feature vector representing the figure is collected beforehand for each user has been described as an example in the above embodiment, it is not limited to this. For example, the second feature vector may be generated from the first feature vector, without collection of a result of association of the first feature vector with the second feature vector for each user.

Furthermore, it is also assumed that a trainee exercises aiming at a timbre a professional player has produced. In this case, the timbre produced by the professional layer is associated with a result of a response about a figure image of the timbre from the trainee, and thus, the first feature vector and the second feature vector are associated with each other. A figure imaged by the trainee is then generated from the timbre produced by the professional player. Alternatively, a figure that is generally imaged may be preset.

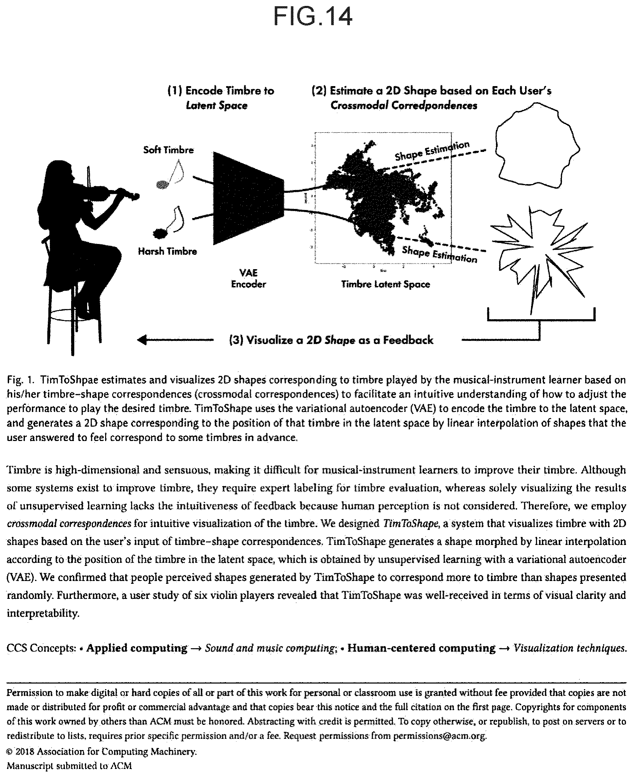

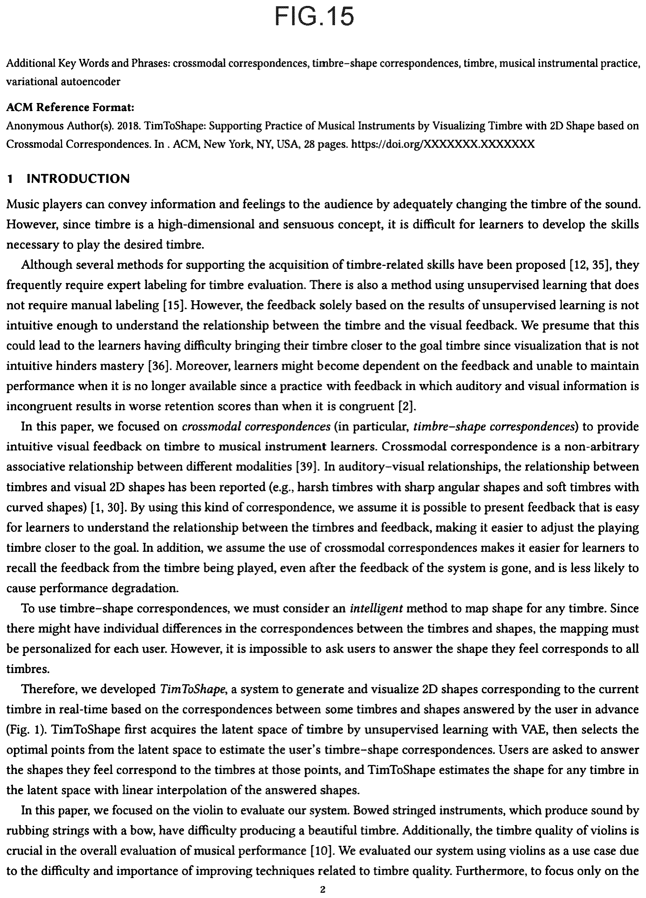

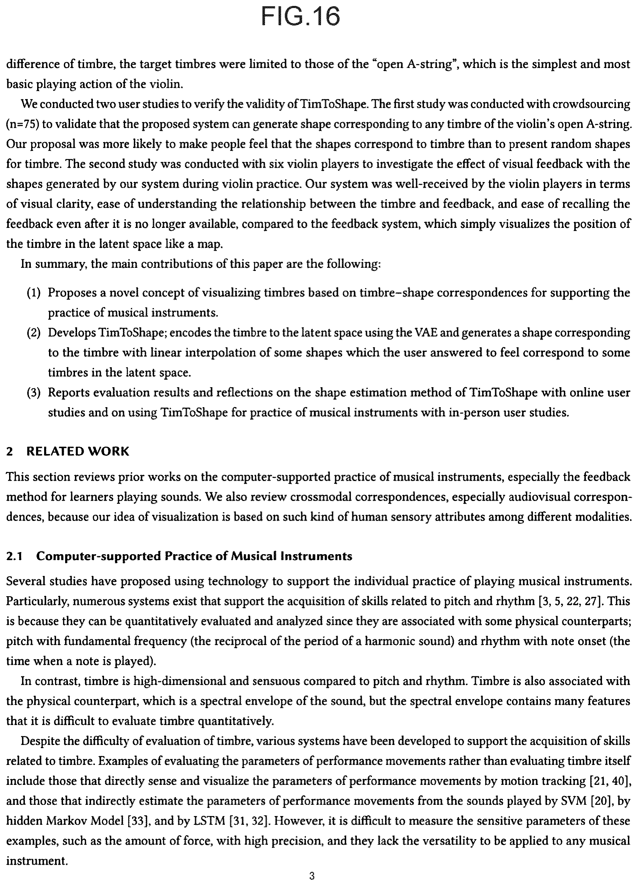

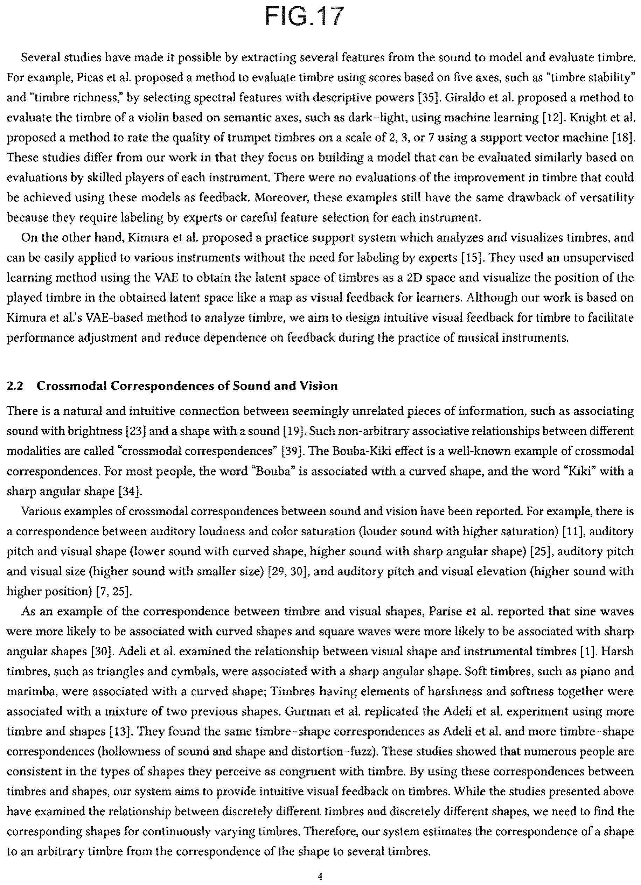

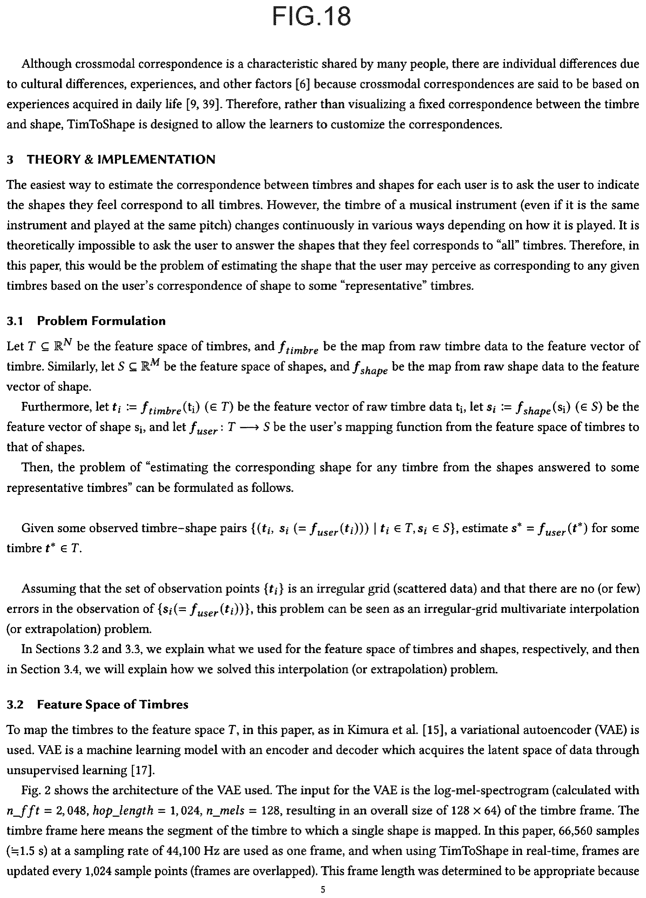

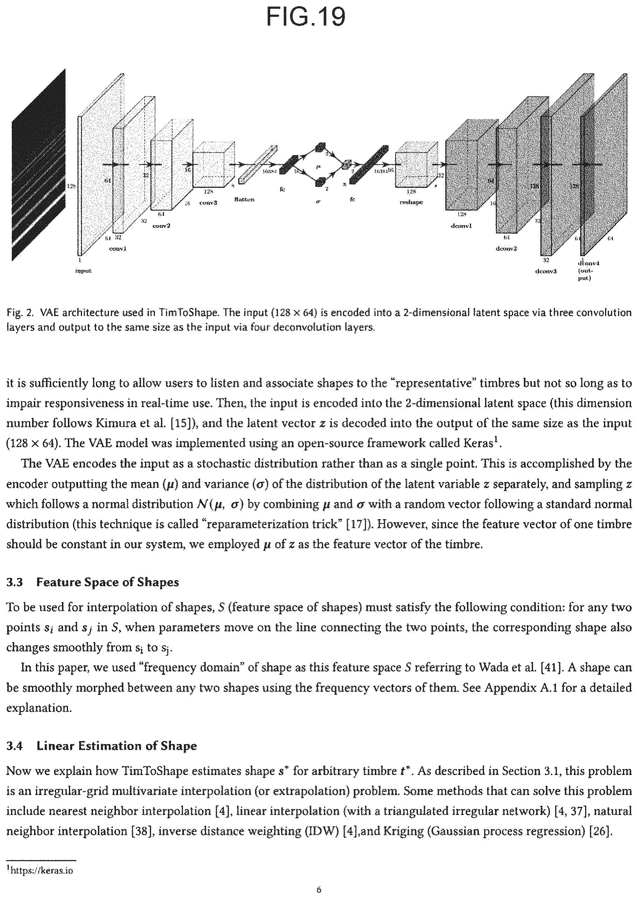

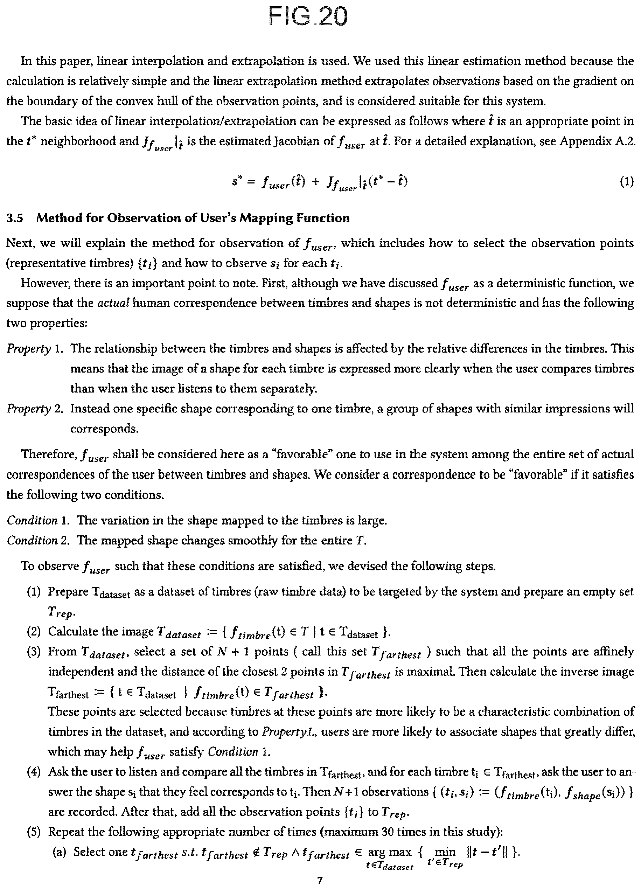

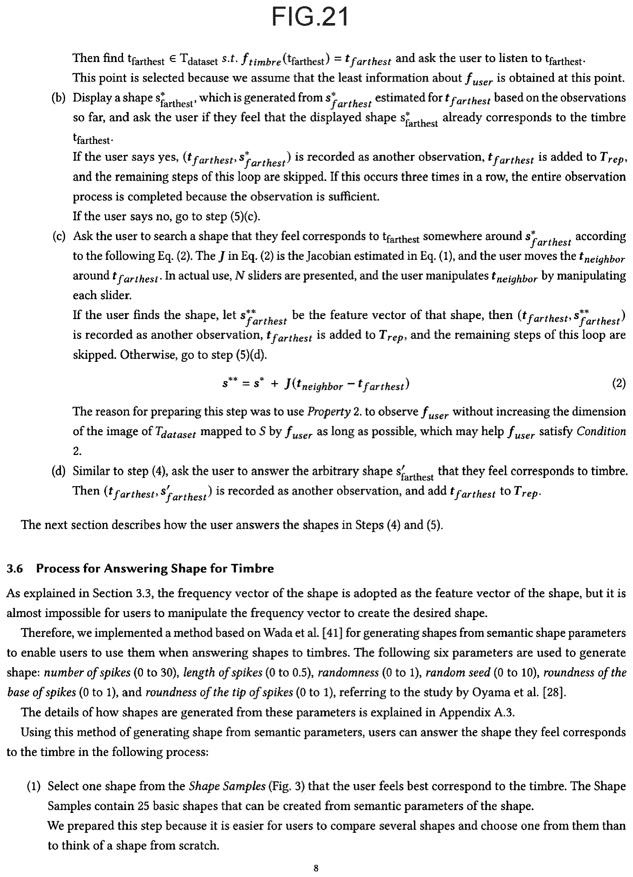

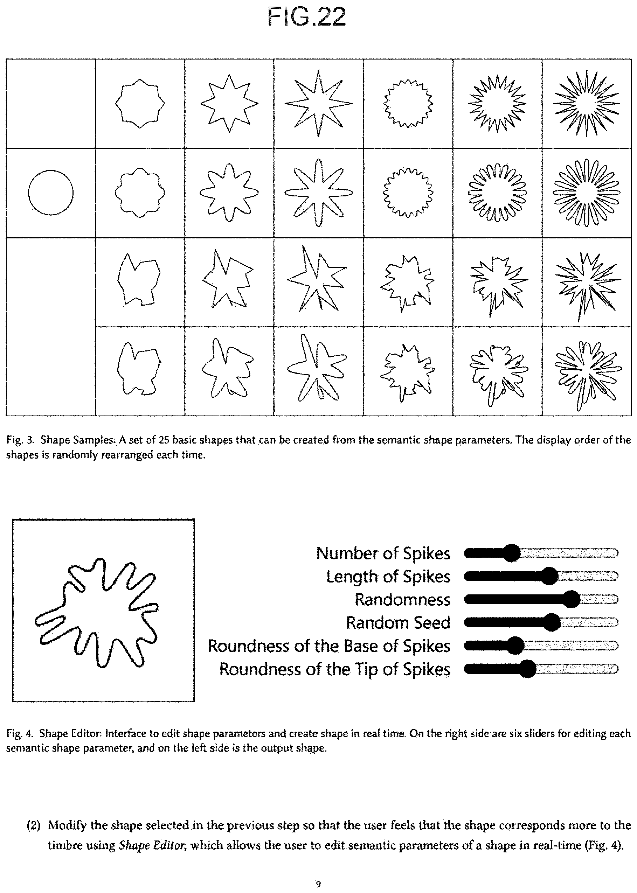

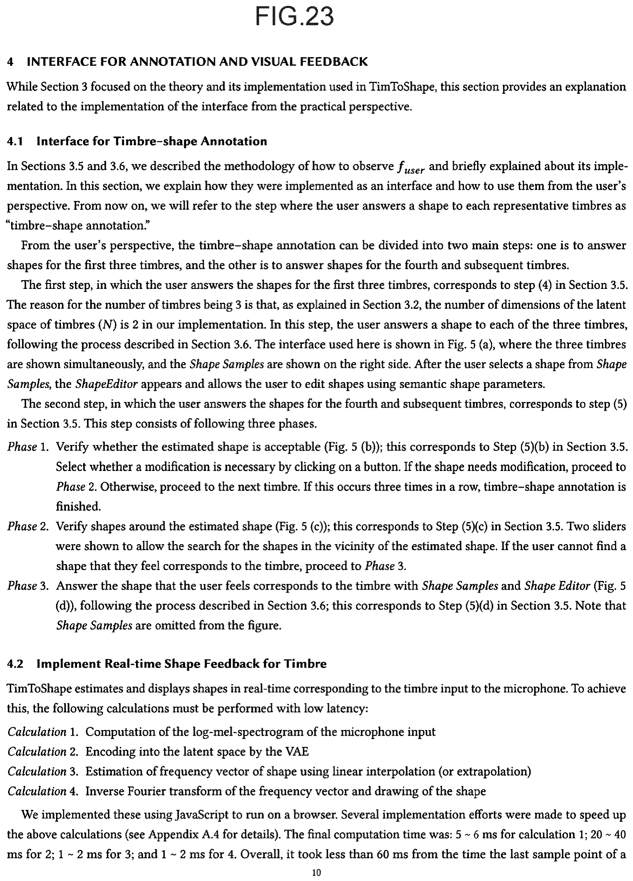

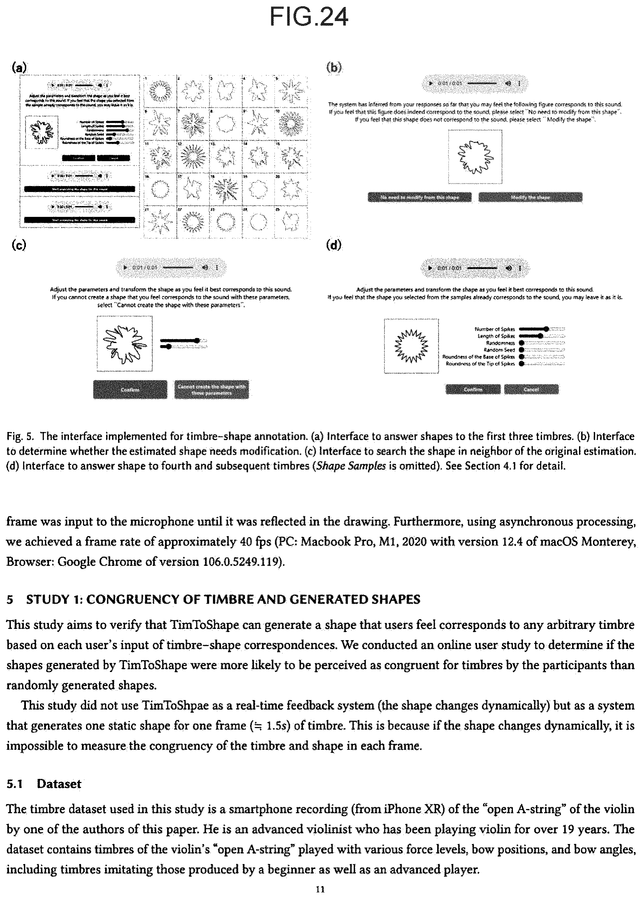

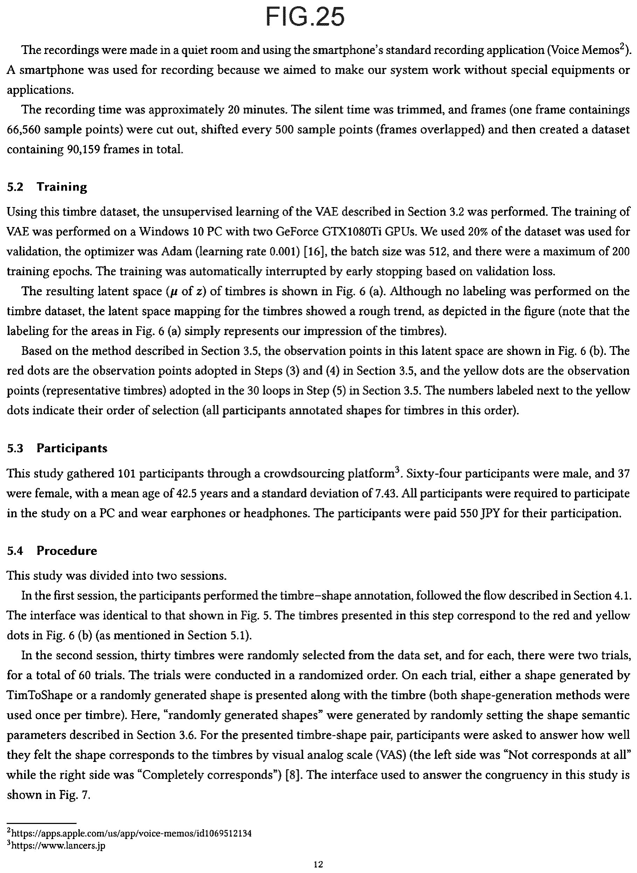

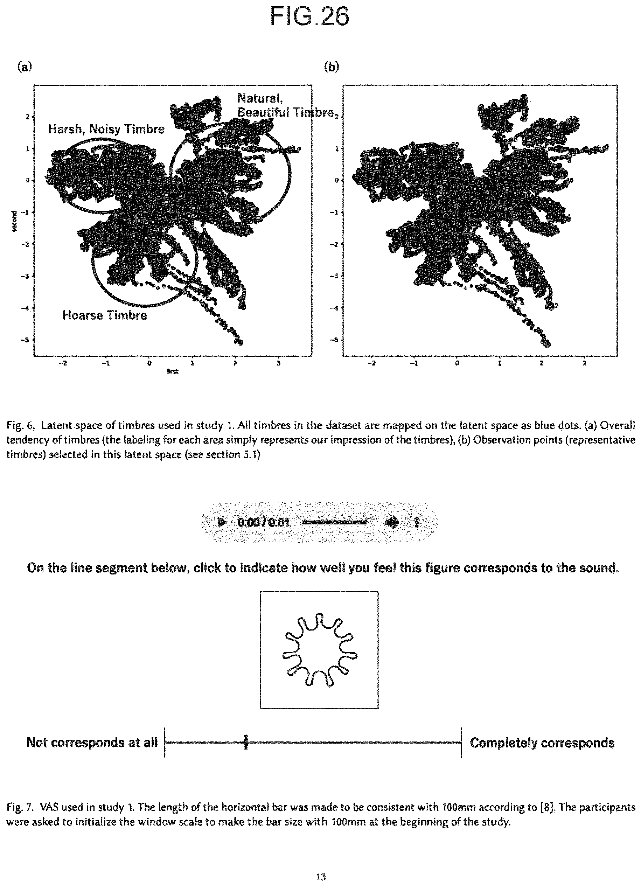

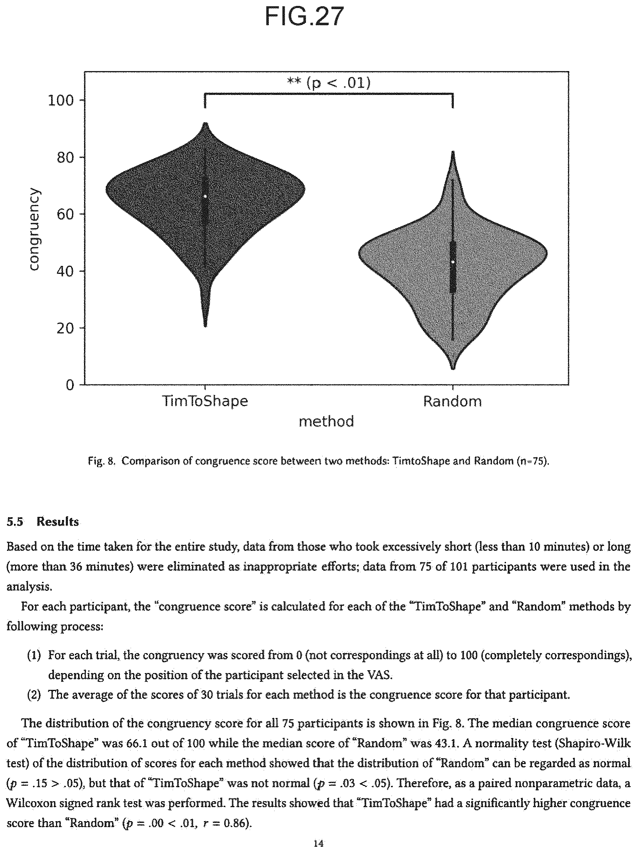

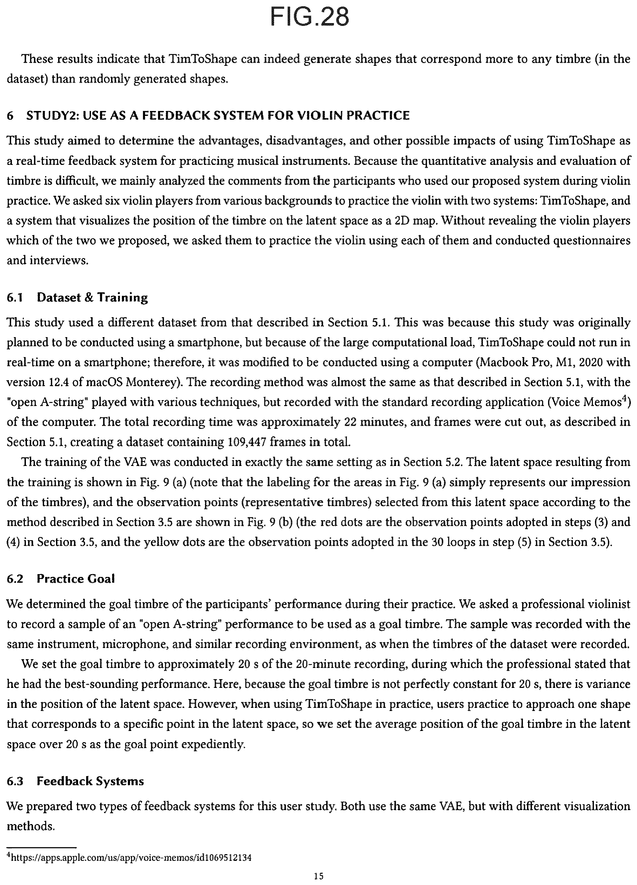

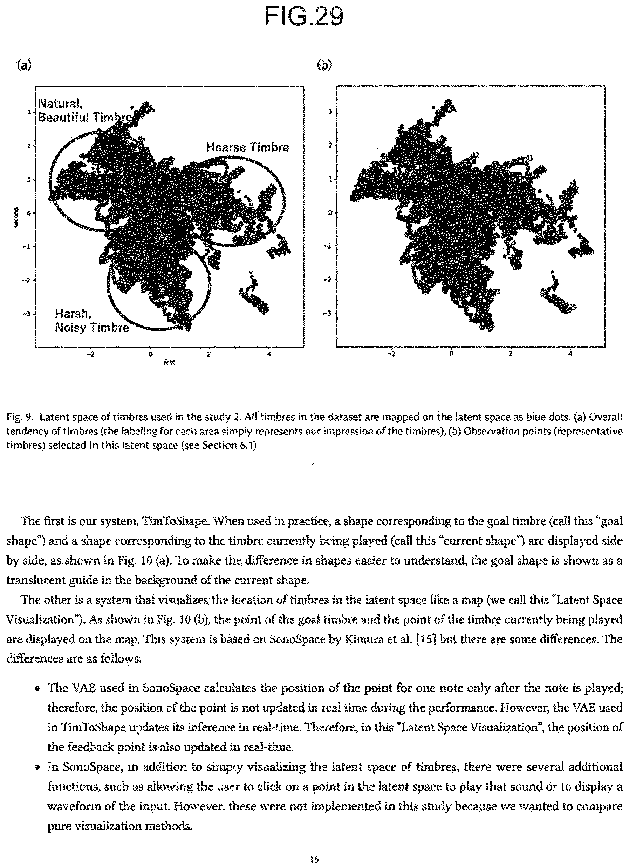

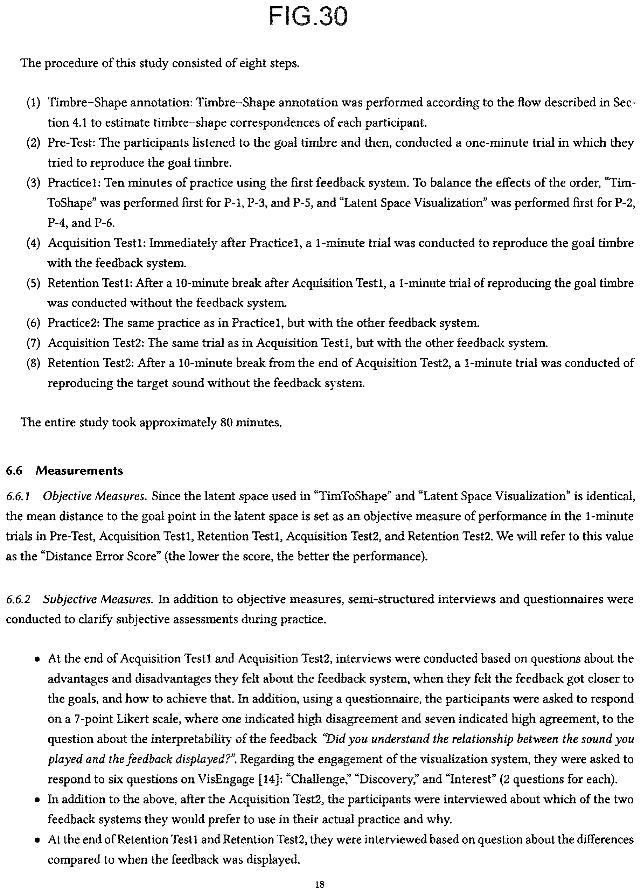

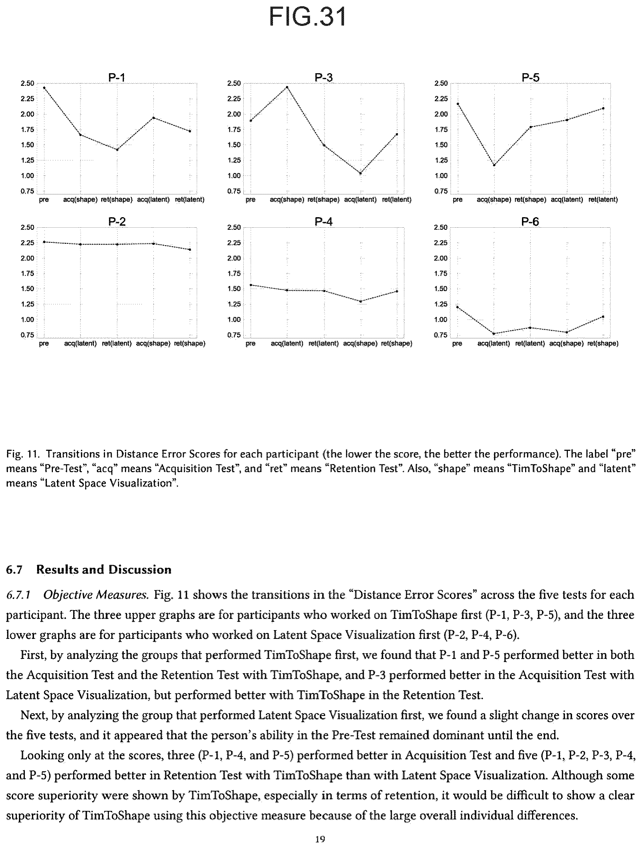

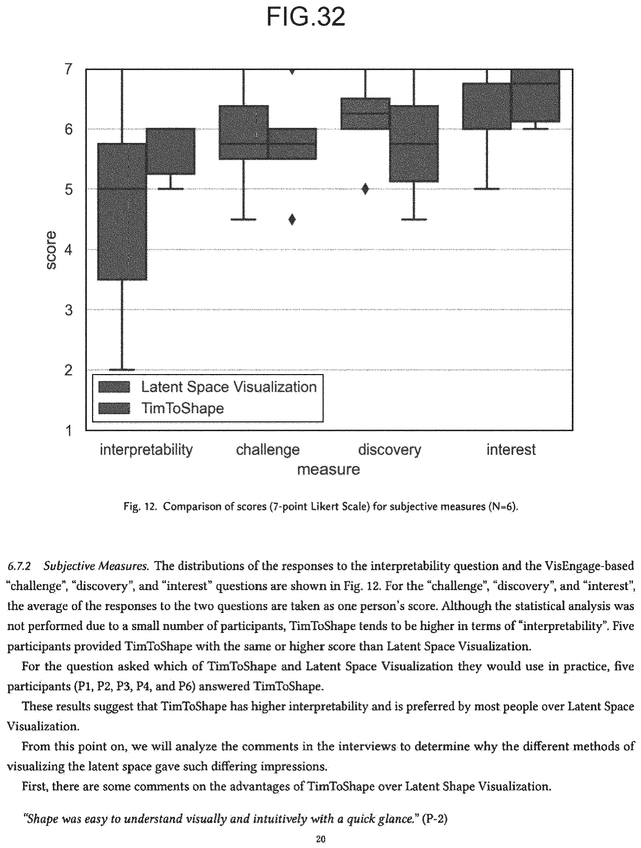

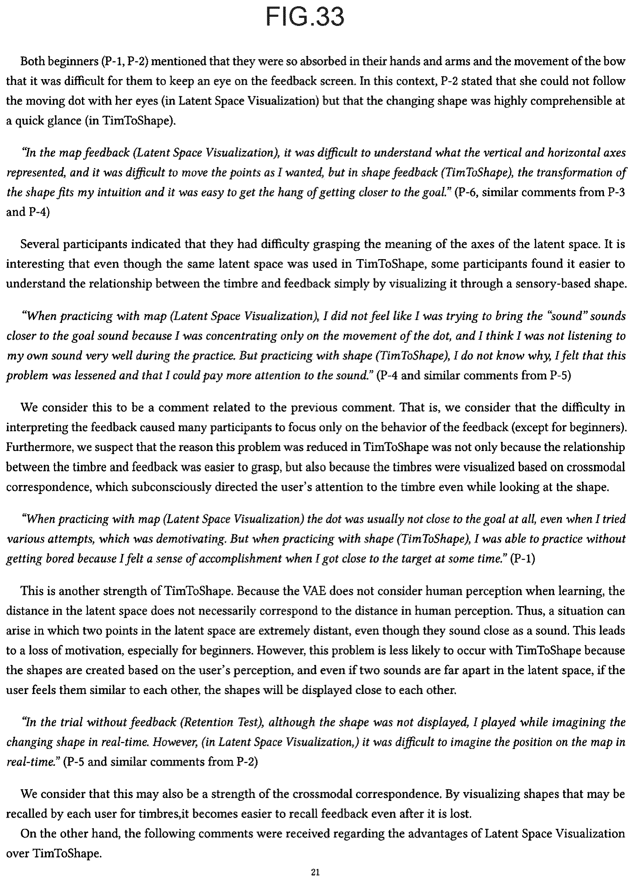

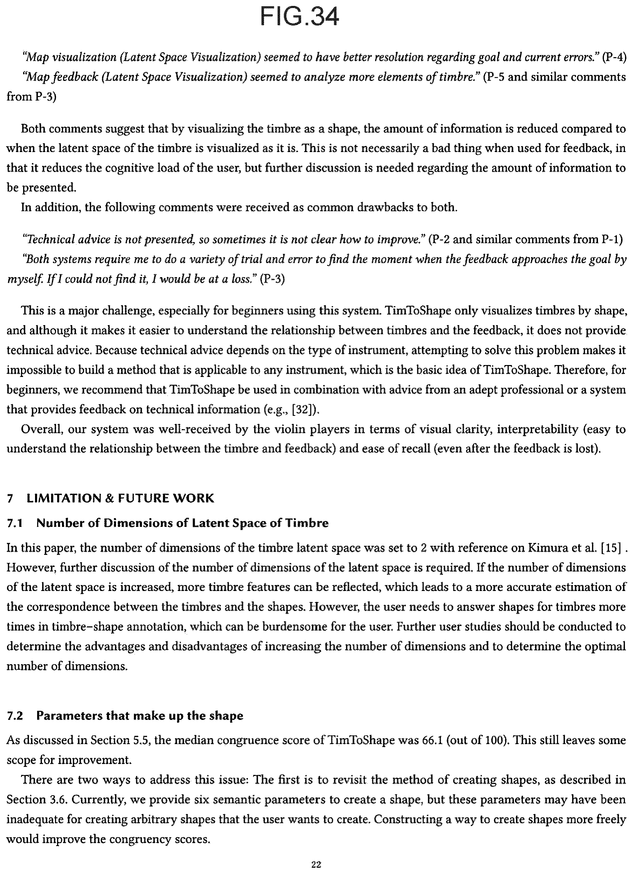

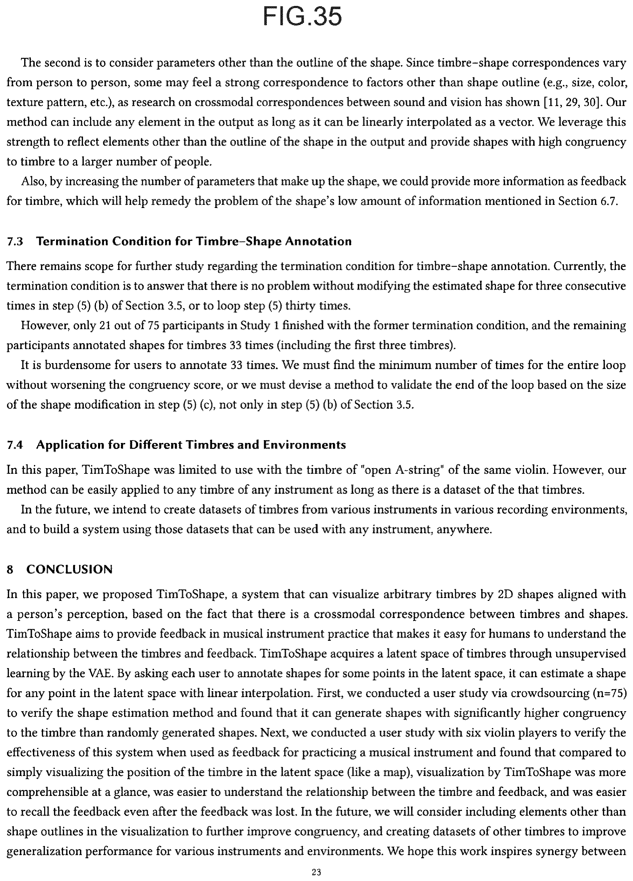

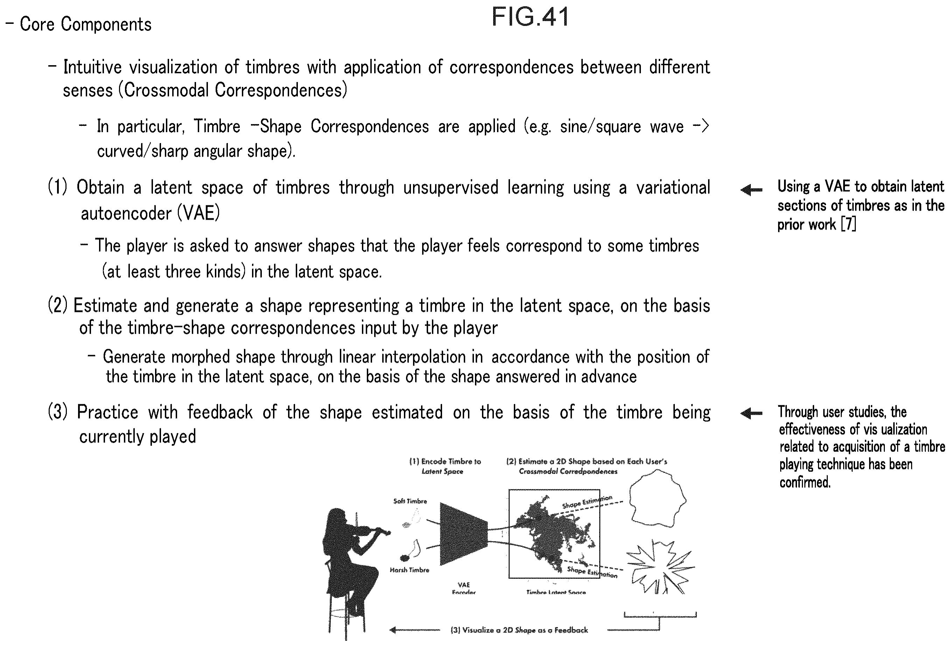

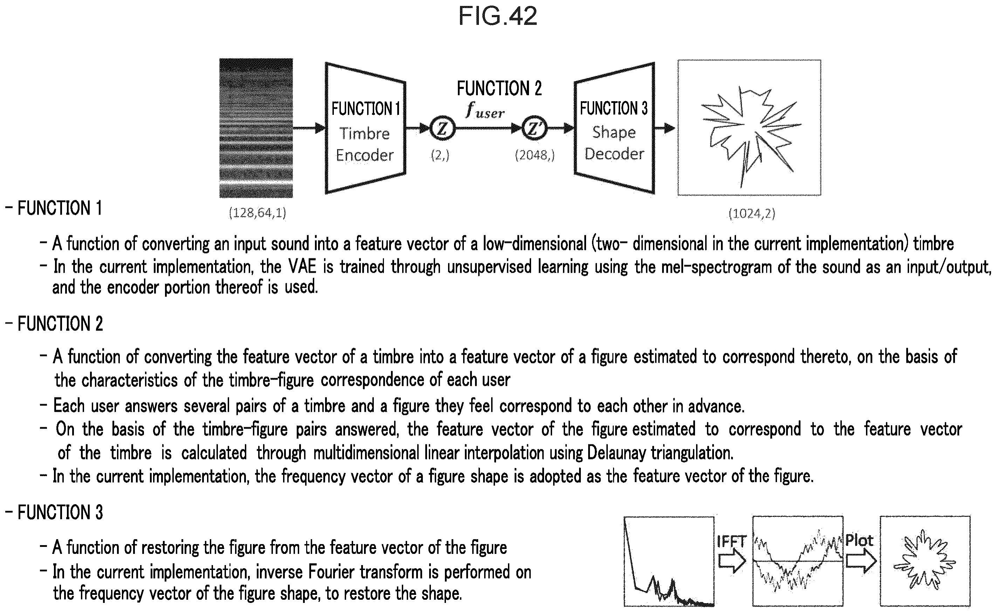

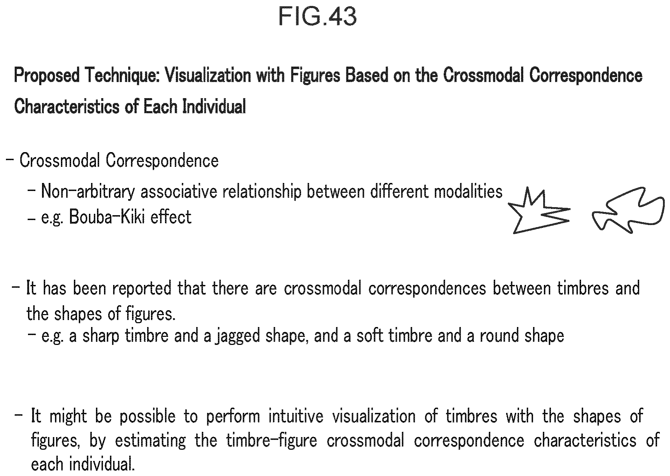

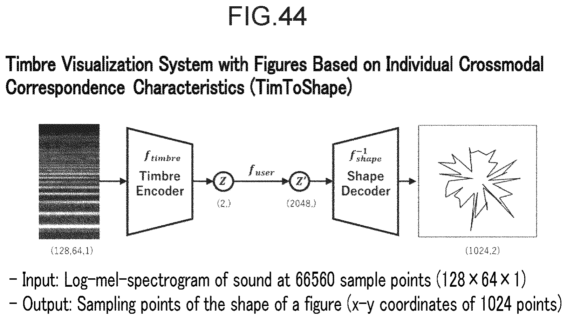

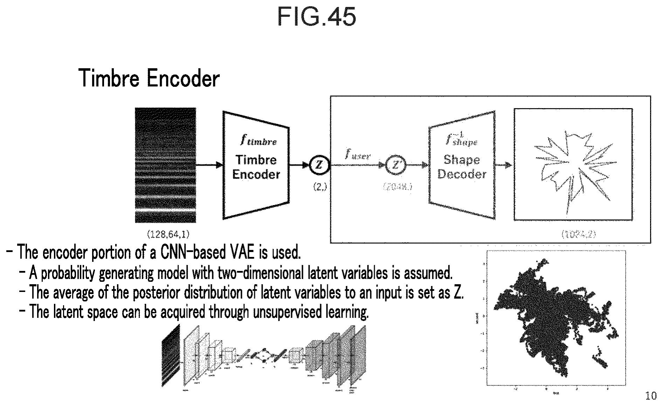

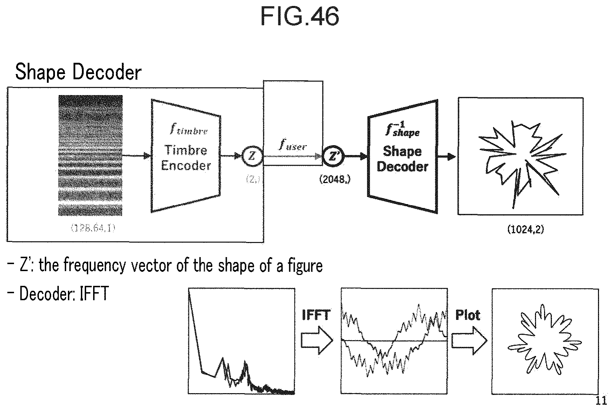

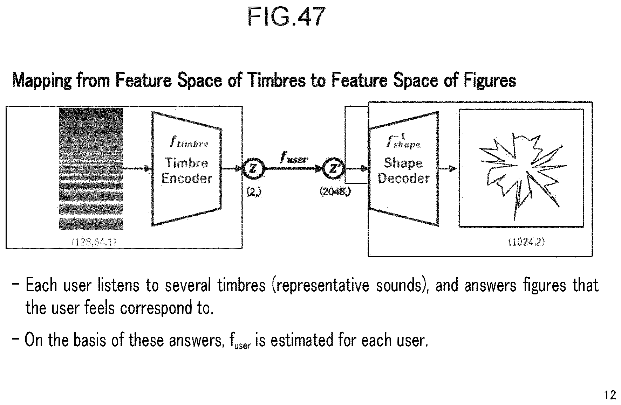

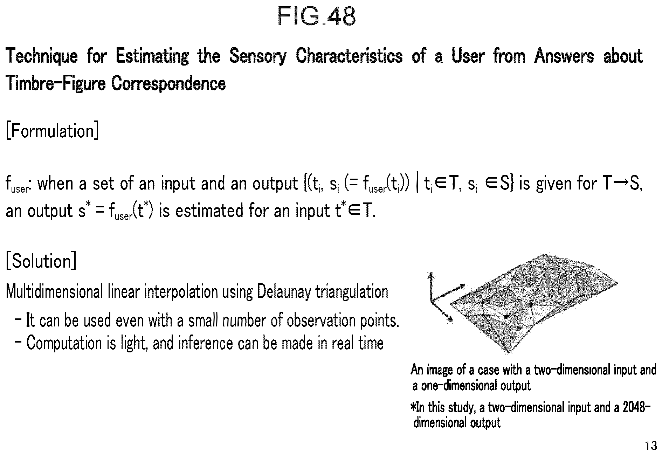

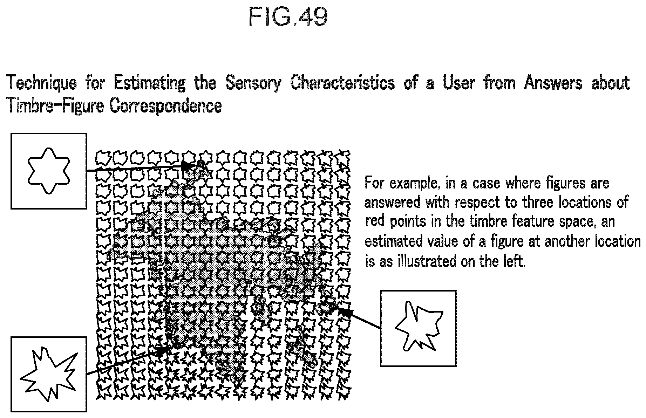

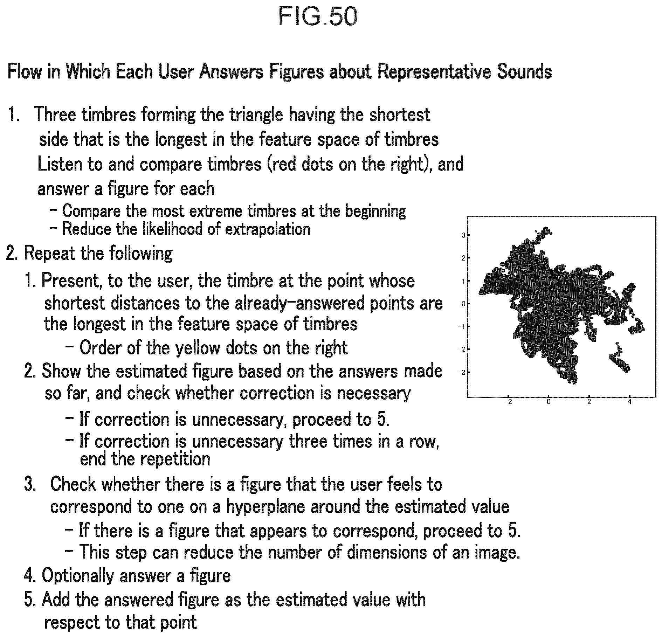

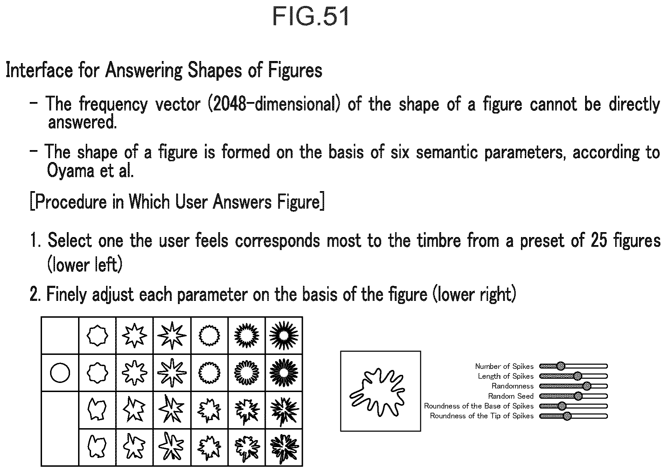

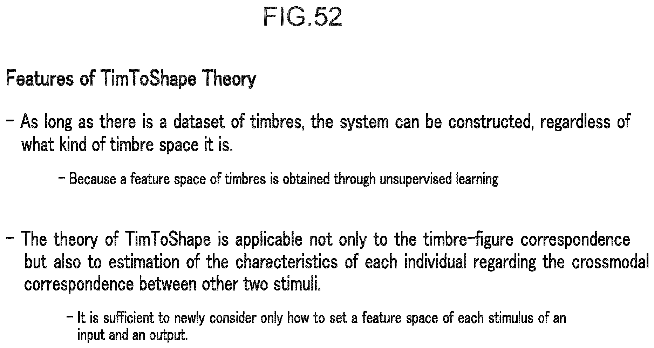

Figs. 14 to 52 are charts for explaining the present embodiment in detail.

Alternatively, each sequence of processing performed by the CPU reading software (programs) in the above embodiment may be performed by various processors other than a CPU. Examples of the processors in this case include a programmable logic device (PLD) in which the circuit configuration can be changed after manufacturing, such as a field-programmable gate array (FPGA), and a dedicated electric circuit that is a processor having a circuit configuration designed exclusively for performing specific processing, such as an application specific integrated circuit (ASIC). Further, each sequence of processing may be performed by one of these various processors, or by a combination of two or more processors of the same type or different types (for example, a plurality of FPGAs, or a combination of a CPU and an FPGA). More specifically, the hardware structure of any of these various processors is an electric circuit in which circuit elements such as semiconductor elements are combined.

Although a mode in which each program is stored (installed, for example) beforehand into a storage device has been described in the above embodiment, it is not limited to this. The programs may be provided in a form stored in a storage medium such as a CD-ROM, a DVD-ROM, a Blu-ray Disc, or a USB memory. Alternatively, the programs may be downloaded from an external device via a network.

(Supplementary Notes)

In the following, modes of the present disclosure are noted.

(Supplementary Note 1) An information processing device that

generates a first feature vector from data representing a subject timbre,
calculates a second feature vector representing a figure from the first feature vector representing the subject timbre, on the basis of a result of association of the first feature vector with the second feature vector,
generates a figure representing the subject timbre from the second feature vector, and
outputs the generated figure.

(Supplementary Note 2) The information processing device according to Supplementary Note 1, which

performs control so as to cause a sound output unit to output timbres of a plurality of representative sounds, and performs control so as to cause a display unit to display figure candidates corresponding to the respective timbres of the plurality of representative sounds,
obtains a result of response about a figure corresponding to each of the timbres of the plurality of representative sounds, the result of response being input from a user, and,
on the basis of the result of response, associates the first feature vectors of the timbres of the representative sounds with the second feature vectors representing the figures in the result of response, to generate the result of association.

(Supplementary Note 3) The information processing device according to Supplementary Note 2, which

generates a figure candidate corresponding to the second feature vector of a timbre different from the timbres of the representative sounds, by interpolating the result of association of the timbres of the plurality of representative sounds with the figures,
performs control so as to cause the sound output unit to output the timbre different from the timbres of the representative sounds, and performs control so as to cause the display unit to display the figure candidate corresponding to the second feature vector of the timbre different from the timbres of the representative sounds,
acquires a result of response about a figure corresponding to the timbre different from the timbres of the representative sounds, the result of response being input from the user, and,
on the basis of the result of response about the figure corresponding to the timbre different from the timbres of the representative sounds, associates the first feature vector of the timbre different from the timbres of the representative sounds with the second feature vector representing the figure in the result of response, to generate the result of association.

(Supplementary Note 4) The information processing device according to Supplementary Note 3, in which the shape of the figure candidate that is displayed on the display unit and corresponds to the timbre different from the timbres of the representative sounds is correctable by the user.

(Supplementary Note 5) The information processing device according to Supplementary Note 2 or 3, which,

for each timbre of a plurality of timbres, inputs data representing the timbre to a trained model generated beforehand, to generate the first feature vector corresponding to the data representing the timbre,

generates a map on which the first feature vector of each timbre of the plurality of timbres is projected,

selects the first feature vectors corresponding to the timbres of the representative sounds from a plurality of the first feature vectors projected on the map,

performs Fourier transform on the figures of the representative sounds obtained from the result of response and the figure corresponding to the timbre different from the timbres of the representative sounds, to generate the second feature vectors that are frequency vectors corresponding to the figures, and generate the result of association, and, when generating the figure representing the subject timbre,

generates the first feature vector of the subject timbre by inputting the data representing the subject timbre to the trained model,

calculates the second feature vector from the first feature vector of the subject timbre by referring to the result of association, and

generates the figure representing the subject timbre by performing inverse Fourier transform on the second feature vector.

(Supplementary Note 6) An information processing method implemented by a computer to perform processing including:

generating a first feature vector from data representing a subject timbre;

calculating a second feature vector representing a figure from the first feature vector representing the subject timbre, on the basis of a result of association of the first feature vector with the second feature vector; and

generating a figure representing the subject timbre from the second feature vector.

(Supplementary Note 7) An information processing program for causing a computer to perform processing including:

generating a first feature vector from data representing a subject timbre;

calculating a second feature vector representing a figure from the first feature vector representing the subject timbre, on the basis of a result of association of the first feature vector with the second feature vector; and

generating a figure representing the subject timbre from the second feature vector.

The disclosures of Japanese Patent Application No. 2023-015722, filed on February 3, 2023, and Japanese Patent Application No. 2023-094415, filed on June 7, 2023, are incorporated herein by reference in their entirety. All literatures, patent applications, and technical standards mentioned in this specification are incorporated herein by reference to the same extent as that in a case where each literature, each patent application, and each technical standard are specifically and individually mentioned to be incorporated by reference.

**Claims**

1.  An information processing device that

    generates a first feature vector from data representing a subject timbre,

    calculates a second feature vector representing a figure from the first feature vector representing the subject timbre, on a basis of a result of association of the first feature vector with the second feature vector,

    generates a figure representing the subject timbre from the second feature vector, and

    outputs the generated figure.

2.  The information processing device according to claim 1, which

    performs control to cause a sound output unit to output timbres of a plurality of representative sounds, and performs control to cause a display unit to display figure candidates corresponding to the respective timbres of the plurality of representative sounds,

    obtains a result of response about a figure corresponding to each of the timbres of the plurality of representative sounds, the result of response being input from a user, and,

    on a basis of the result of response, associates the first feature vectors of the timbres of the representative sounds with the second feature vectors representing the figures in the result of response, to generate the result of association.

3. The information processing device according to claim 2, which

generates a figure candidate corresponding to the second feature vector of a timbre different from the timbres of the representative sounds, by interpolating the result of association of the timbres of the plurality of representative sounds with the figures,
performs control to cause the sound output unit to output the timbre different from the timbres of the representative sounds, and performs control to cause the display unit to display the figure candidate corresponding to the second feature vector of the timbre different from the timbres of the representative sounds,
acquires a result of response about a figure corresponding to the timbre different from the timbres of the representative sounds, the result of response being input from the user, and,
on a basis of the result of response about the figure corresponding to the timbre different from the timbres of the representative sounds, associates the first feature vector of the timbre different from the timbres of the representative sounds with the second feature vector representing the figure in the result of response, to generate the result of association.

4. The information processing device according to claim 3, wherein
a shape of the figure candidate that is displayed on the display unit and corresponds to the timbre different from the timbres of the representative sounds is correctable by the user.

5. The information processing device according to claim 2 or 3, which,

for each timbre of a plurality of timbres, inputs data representing the timbre to a trained model generated beforehand, to generate the first feature vector corresponding to the data representing the timbre,
generates a map on which the first feature vector of each timbre of the plurality of timbres is projected,
selects the first feature vectors corresponding to the timbres of the representative sounds from a plurality of the first feature vectors projected on the map,
performs Fourier transform on the figures of the representative sounds obtained from the result of response and the figure corresponding to the timbre different from the timbres of the representative sounds, to generate the second feature vectors that are frequency vectors corresponding to the figures, and generate the result of association, and,
when generating the figure representing the subject timbre,
generates the first feature vector of the subject timbre by inputting the data representing the subject timbre to the trained model,
calculates the second feature vector from the first feature vector of the subject timbre by referring to the result of association, and
generates the figure representing the subject timbre by performing inverse Fourier transform on the second feature vector.

6. An information processing method implemented by a computer to perform processing including:

generating a first feature vector from data representing a subject timbre;
calculating a second feature vector representing a figure from the first feature vector representing the subject timbre, on a basis of a result of association of the first feature vector with the second feature vector; and
generating a figure representing the subject timbre from the second feature vector.

7. An information processing program for causing a computer to perform processing including:

generating a first feature vector from data representing a subject timbre;
calculating a second feature vector representing a figure from the first feature vector representing the subject timbre, on a basis of a result of association of the first feature vector with the second feature vector; and
generating a figure representing the subject timbre from the second feature vector.

# FIG.1

**(1) Encode Timbre to Latent Space**

**(2) Estimate a 2D Shape based on Each User's Crossmodal Corredpondences**

Soft Timbre

Harsh Timbre

VAE Encoder

Shape Estimation

Shape Estimation

Timbre Latent Space

**(3) Visualize a 2D Shape as a Feedback**

Fig. 1. TimToShpae estimates and visualizes 2D shapes corresponding to timbre played by the musical-instrument learner based on his/her timbre–shape correspondences (crossmodal correspondences) to facilitate an intuitive understanding of how to adjust the performance to play the desired timbre. TimToShape uses the variational autoencoder (VAE) to encode the timbre to the latent space, and generates a 2D shape corresponding to the position of that timbre in the latent space by linear interpolation of shapes that the user answered to feel correspond to some timbres in advance.

EP 4 660 993 A1

# FIG.2

Fig. 2. VAE architecture used in TimToShape. The input (128 × 64) is encoded into a 2-dimensional latent space via three convolution layers and output to the same size as the input via four deconvolution layers.

FIG.3

Fig. 3. Shape Samples: A set of 25 basic shapes that can be created from the semantic shape parameters. The display order of the shapes is randomly rearranged each time.

# FIG.4

Number of Spikes
Length of Spikes
Randomness
Random Seed
Roundness of the Base of Spikes
Roundness of the Tip of Spikes

Fig. 4. Shape Editor: Interface to edit shape parameters and create shape in real time. On the right side are six sliders for editing each semantic shape parameter, and on the left side is the output shape.

EP 4 660 993 A1

# FIG.5

(a)

(b)

(c)

(d)

Fig. 5. The interface implemented for timbre–shape annotation. (a) Interface to answer shapes to the first three timbres. (b) Interface to determine whether the estimated shape needs modification. (c) Interface to search the shape in neighbor of the original estimation. (d) Interface to answer shape to fourth and subsequent timbres (*Shape Samples* is omitted). See Section 4.1 for detail.

# FIG.6

(a)

(b)

Fig. 6. Latent space of timbres used in study 1. All timbres in the dataset are mapped on the latent space as blue dots. (a) Overall tendency of timbres (the labeling for each area simply represents our impression of the timbres), (b) Observation points (representative timbres) selected in this latent space (see section 5.1)

# FIG.7

▶ 0:00 / 0:01 ━━━━━ 🔊 ⋮

On the line segment below, click to indicate how well you feel this figure corresponds to the sound.

Not corresponds at all |————————|————————————————| Completely corresponds

Fig. 7. VAS used in study 1. The length of the horizontal bar was made to be consistent with 100mm according to [8]. The participants were asked to initialize the window scale to make the bar size with 100mm at the beginning of the study.

FIG.8

Fig. 8. Comparison of congruence score between two methods: TimtoShape and Random (n=75).

FIG.9

Fig. 9. Latent space of timbres used in the study 2. All timbres in the dataset are mapped on the latent space as blue dots. (a) Overall tendency of timbres (the labeling for each area simply represents our impression of the timbres), (b) Observation points (representative timbres) selected in this latent space (see Section 6.1)

# FIG.10

Fig. 10. Feedback systems used in user study 2. (a) TimToShape. The shape corresponding to the goal timbre is displayed on the left side, and the shape corresponding to the played timbre is displayed on the right side. (b) Latent Space Visualization. The yellow dot represents the position of the goal timbre, and the red dot represents the position of the played timbre.

# FIG.11

Fig. 11. Transitions in Distance Error Scores for each participant (the lower the score, the better the performance). The label "pre" means "Pre-Test", "acq" means "Acquisition Test", and "ret" means "Retention Test". Also, "shape" means "TimToShape" and "latent" means "Latent Space Visualization".

FIG.12

Fig. 12. Comparison of scores (7-point Likert Scale) for subjective measures (N=6).

EP 4 660 993 A1

# FIG.13A

| | |
|---|---|
| SPEAKER (2) | CONTROL UNIT ~102 |
| TOUCH PANEL DISPLAY (4) | ACQUISITION UNIT ~104 |
| MICROPHONE (6) | COMPUTING UNIT ~108 |

DATA STORAGE UNIT ~100

TRAINED MODEL STORAGE UNIT ~106

RESULT STORAGE UNIT ~110

(1, 10)

FIG.13B

FIG.13C

FIG.13D

# FIG.13E

## FIG.13F

P0

Pn

R1

R2

R3

P0(x0,y0)

(0,0)

Pn(xn,yn)

yw

0

xw

Fy

Fx

# FIG.13G

FIG.13H

## FIG.13I

```
┌─────────────┐
│    START    │
└─────────────┘
       │
       ▼
┌──────────────────────────────┐
│      ACQUIRE USER ID         │──── S100
└──────────────────────────────┘
       │
       ▼
┌──────────────────────────────┐
│ SELECT THREE REPRESENTATIVE  │──── S101
│           SOUNDS             │
└──────────────────────────────┘
       │
       ▼  ◄───────────────────────┐
┌──────────────────────────────┐  │
│ SET ONE REPRESENTATIVE SOUND │──── S102
└──────────────────────────────┘  │
       │                          │
       ▼                          │
┌──────────────────────────────┐  │
│  OUTPUT REPRESENTATIVE SOUND │──── S104
└──────────────────────────────┘  │
       │                          │
       ▼                          │
┌──────────────────────────────┐  │
│    DISPLAY FIGURE CANDIDATE  │──── S106
└──────────────────────────────┘  │
       │                          │
       ▼                          │
┌──────────────────────────────┐  │
│ ACQUIRE USER'S RESPONSE RESULT│──── S108
└──────────────────────────────┘  │
       │                          │
       ▼                          │
      N ◄─────────────────────────┘
    ◆─────────────────────◆ ──── S110
       │ Y
       ▼
┌──────────────────────────────┐
│ GENERATE SECOND FEATURE      │──── S112
│ VECTOR FOR EACH OF FIGURES   │
│ CORRESPONDING TO ALL         │
│ REPRESENTATIVE SOUNDS        │
└──────────────────────────────┘
       │
       ▼
┌──────────────────────────────┐
│ GENERATE ASSOCIATION RESULT  │──── S114
└──────────────────────────────┘
       │
       ▼
┌──────────────────────────────┐
│ ASSOCIATE ASSOCIATION RESULT │──── S116
│   WITH USER ID, AND STORE    │
└──────────────────────────────┘
       │
       ▼
      (A)
```

## FIG.13J

A

SELECT ONE SOUND DIFFERENT FROM REPRESENTATIVE SOUNDS — S118

OUTPUT TIMBRE OF SELECTED SOUND — S120

GENERATE FIGURE CANDIDATE ON BASIS OF ASSOCIATION RESULT — S122

DISPLAY FIGURE CANDIDATE — S124

ACQUIRE USER'S RESPONSE RESULT — S126

HAVE RESPONSE RESULTS BEEN OBTAINED FOR PREDETERMINED NUMBER OF SOUNDS? — S128

N

Y

GENERATE ASSOCIATION RESULT — S130

ASSOCIATE ASSOCIATION RESULT WITH USER ID, AND STORE — S132

END

## FIG.13K

START

ACQUIRE TIMBRE OF SUBJECT SOUND — S200

CONVERT TIMBRE INTO SPECTROGRAM DATA — S202

GENERATE FIRST FEATURE VECTOR BY INPUTTING SPECTROGRAM DATA TO TRAINED ENCODER — S204

GENERATE SECOND FEATURE VECTOR BY REFERRING TO ASSOCIATION RESULT — S206

RESTORE FIGURE FROM SECOND FEATURE VECTOR — S208

OUTPUT FIGURE — S210

END

FIG.13L

EP 4 660 993 A1

FIG.13M

F1

# FIG.14

Fig. 1. TimToShpae estimates and visualizes 2D shapes corresponding to timbre played by the musical-instrument learner based on his/her timbre–shape correspondences (crossmodal correspondences) to facilitate an intuitive understanding of how to adjust the performance to play the desired timbre. TimToShape uses the variational autoencoder (VAE) to encode the timbre to the latent space, and generates a 2D shape corresponding to the position of that timbre in the latent space by linear interpolation of shapes that the user answered to feel correspond to some timbres in advance.

Timbre is high-dimensional and sensuous, making it difficult for musical-instrument learners to improve their timbre. Although some systems exist to improve timbre, they require expert labeling for timbre evaluation, whereas solely visualizing the results of unsupervised learning lacks the intuitiveness of feedback because human perception is not considered. Therefore, we employ *crossmodal correspondences* for intuitive visualization of the timbre. We designed *TimToShape*, a system that visualizes timbre with 2D shapes based on the user's input of timbre–shape correspondences. TimToShape generates a shape morphed by linear interpolation according to the position of the timbre in the latent space, which is obtained by unsupervised learning with a variational autoencoder (VAE). We confirmed that people perceived shapes generated by TimToShape to correspond more to timbre than shapes presented randomly. Furthermore, a user study of six violin players revealed that TimToShape was well-received in terms of visual clarity and interpretability.

CCS Concepts: • **Applied computing** → *Sound and music computing*; • **Human-centered computing** → *Visualization techniques.*

# FIG.15

Additional Key Words and Phrases: crossmodal correspondences, timbre–shape correspondences, timbre, musical instrumental practice, variational autoencoder

**ACM Reference Format:**
Anonymous Author(s). 2018. TimToShape: Supporting Practice of Musical Instruments by Visualizing Timbre with 2D Shape based on Crossmodal Correspondences. In . ACM, New York, NY, USA, 28 pages. https://doi.org/XXXXXXX.XXXXXXX

## 1  INTRODUCTION

Music players can convey information and feelings to the audience by adequately changing the timbre of the sound. However, since timbre is a high-dimensional and sensuous concept, it is difficult for learners to develop the skills necessary to play the desired timbre.

Although several methods for supporting the acquisition of timbre-related skills have been proposed [12, 35], they frequently require expert labeling for timbre evaluation. There is also a method using unsupervised learning that does not require manual labeling [15]. However, the feedback solely based on the results of unsupervised learning is not intuitive enough to understand the relationship between the timbre and the visual feedback. We presume that this could lead to the learners having difficulty bringing their timbre closer to the goal timbre since visualization that is not intuitive hinders mastery [36]. Moreover, learners might become dependent on the feedback and unable to maintain performance when it is no longer available since a practice with feedback in which auditory and visual information is incongruent results in worse retention scores than when it is congruent [2].

In this paper, we focused on *crossmodal correspondences* (in particular, *timbre–shape correspondences*) to provide intuitive visual feedback on timbre to musical instrument learners. Crossmodal correspondence is a non-arbitrary associative relationship between different modalities [39]. In auditory–visual relationships, the relationship between timbres and visual 2D shapes has been reported (e.g., harsh timbres with sharp angular shapes and soft timbres with curved shapes) [1, 30]. By using this kind of correspondence, we assume it is possible to present feedback that is easy for learners to understand the relationship between the timbres and feedback, making it easier to adjust the playing timbre closer to the goal. In addition, we assume the use of crossmodal correspondences makes it easier for learners to recall the feedback from the timbre being played, even after the feedback of the system is gone, and is less likely to cause performance degradation.

To use timbre–shape correspondences, we must consider an *intelligent* method to map shape for any timbre. Since there might have individual differences in the correspondences between the timbres and shapes, the mapping must be personalized for each user. However, it is impossible to ask users to answer the shape they feel corresponds to all timbres.

Therefore, we developed *TimToShape*, a system to generate and visualize 2D shapes corresponding to the current timbre in real-time based on the correspondences between some timbres and shapes answered by the user in advance (Fig. 1). TimToShape first acquires the latent space of timbre by unsupervised learning with VAE, then selects the optimal points from the latent space to estimate the user's timbre–shape correspondences. Users are asked to answer the shapes they feel correspond to the timbres at those points, and TimToShape estimates the shape for any timbre in the latent space with linear interpolation of the answered shapes.

In this paper, we focused on the violin to evaluate our system. Bowed stringed instruments, which produce sound by rubbing strings with a bow, have difficulty producing a beautiful timbre. Additionally, the timbre quality of violins is crucial in the overall evaluation of musical performance [10]. We evaluated our system using violins as a use case due to the difficulty and importance of improving techniques related to timbre quality. Furthermore, to focus only on the

2

# FIG.16

difference of timbre, the target timbres were limited to those of the "open A-string", which is the simplest and most basic playing action of the violin.

We conducted two user studies to verify the validity of TimToShape. The first study was conducted with crowdsourcing (n=75) to validate that the proposed system can generate shape corresponding to any timbre of the violin's open A-string. Our proposal was more likely to make people feel that the shapes correspond to timbre than to present random shapes for timbre. The second study was conducted with six violin players to investigate the effect of visual feedback with the shapes generated by our system during violin practice. Our system was well-received by the violin players in terms of visual clarity, ease of understanding the relationship between the timbre and feedback, and ease of recalling the feedback even after it is no longer available, compared to the feedback system, which simply visualizes the position of the timbre in the latent space like a map.

In summary, the main contributions of this paper are the following:

(1) Proposes a novel concept of visualizing timbres based on timbre–shape correspondences for supporting the practice of musical instruments.

(2) Develops TimToShape; encodes the timbre to the latent space using the VAE and generates a shape corresponding to the timbre with linear interpolation of some shapes which the user answered to feel correspond to some timbres in the latent space.

(3) Reports evaluation results and reflections on the shape estimation method of TimToShape with online user studies and on using TimToShape for practice of musical instruments with in-person user studies.

## 2 RELATED WORK

This section reviews prior works on the computer-supported practice of musical instruments, especially the feedback method for learners playing sounds. We also review crossmodal correspondences, especially audiovisual correspondences, because our idea of visualization is based on such kind of human sensory attributes among different modalities.

### 2.1 Computer-supported Practice of Musical Instruments

Several studies have proposed using technology to support the individual practice of playing musical instruments. Particularly, numerous systems exist that support the acquisition of skills related to pitch and rhythm [3, 5, 22, 27]. This is because they can be quantitatively evaluated and analyzed since they are associated with some physical counterparts; pitch with fundamental frequency (the reciprocal of the period of a harmonic sound) and rhythm with note onset (the time when a note is played).

In contrast, timbre is high-dimensional and sensuous compared to pitch and rhythm. Timbre is also associated with the physical counterpart, which is a spectral envelope of the sound, but the spectral envelope contains many features that it is difficult to evaluate timbre quantitatively.

Despite the difficulty of evaluation of timbre, various systems have been developed to support the acquisition of skills related to timbre. Examples of evaluating the parameters of performance movements rather than evaluating timbre itself include those that directly sense and visualize the parameters of performance movements by motion tracking [21, 40], and those that indirectly estimate the parameters of performance movements from the sounds played by SVM [20], by hidden Markov Model [33], and by LSTM [31, 32]. However, it is difficult to measure the sensitive parameters of these examples, such as the amount of force, with high precision, and they lack the versatility to be applied to any musical instrument.

3

# FIG.17

Several studies have made it possible by extracting several features from the sound to model and evaluate timbre. For example, Picas et al. proposed a method to evaluate timbre using scores based on five axes, such as "timbre stability" and "timbre richness," by selecting spectral features with descriptive powers [35]. Giraldo et al. proposed a method to evaluate the timbre of a violin based on semantic axes, such as dark-light, using machine learning [12]. Knight et al. proposed a method to rate the quality of trumpet timbres on a scale of 2, 3, or 7 using a support vector machine [18]. These studies differ from our work in that they focus on building a model that can be evaluated similarly based on evaluations by skilled players of each instrument. There were no evaluations of the improvement in timbre that could be achieved using these models as feedback. Moreover, these examples still have the same drawback of versatility because they require labeling by experts or careful feature selection for each instrument.

On the other hand, Kimura et al. proposed a practice support system which analyzes and visualizes timbres, and can be easily applied to various instruments without the need for labeling by experts [15]. They used an unsupervised learning method using the VAE to obtain the latent space of timbres as a 2D space and visualize the position of the played timbre in the obtained latent space like a map as visual feedback for learners. Although our work is based on Kimura et al.'s VAE-based method to analyze timbre, we aim to design intuitive visual feedback for timbre to facilitate performance adjustment and reduce dependence on feedback during the practice of musical instruments.

## 2.2 Crossmodal Correspondences of Sound and Vision

There is a natural and intuitive connection between seemingly unrelated pieces of information, such as associating sound with brightness [23] and a shape with a sound [19]. Such non-arbitrary associative relationships between different modalities are called "crossmodal correspondences" [39]. The Bouba-Kiki effect is a well-known example of crossmodal correspondences. For most people, the word "Bouba" is associated with a curved shape, and the word "Kiki" with a sharp angular shape [34].

Various examples of crossmodal correspondences between sound and vision have been reported. For example, there is a correspondence between auditory loudness and color saturation (louder sound with higher saturation) [11], auditory pitch and visual shape (lower sound with curved shape, higher sound with sharp angular shape) [25], auditory pitch and visual size (higher sound with smaller size) [29, 30], and auditory pitch and visual elevation (higher sound with higher position) [7, 25].

As an example of the correspondence between timbre and visual shapes, Parise et al. reported that sine waves were more likely to be associated with curved shapes and square waves were more likely to be associated with sharp angular shapes [30]. Adeli et al. examined the relationship between visual shape and instrumental timbres [1]. Harsh timbres, such as triangles and cymbals, were associated with a sharp angular shape. Soft timbres, such as piano and marimba, were associated with a curved shape; Timbres having elements of harshness and softness together were associated with a mixture of two previous shapes. Gurman et al. replicated the Adeli et al. experiment using more timbre and shapes [13]. They found the same timbre-shape correspondences as Adeli et al. and more timbre-shape correspondences (hollowness of sound and shape and distortion-fuzz). These studies showed that numerous people are consistent in the types of shapes they perceive as congruent with timbre. By using these correspondences between timbres and shapes, our system aims to provide intuitive visual feedback on timbres. While the studies presented above have examined the relationship between discretely different timbres and discretely different shapes, we need to find the corresponding shapes for continuously varying timbres. Therefore, our system estimates the correspondence of a shape to an arbitrary timbre from the correspondence of the shape to several timbres.

4

# FIG.18

Although crossmodal correspondence is a characteristic shared by many people, there are individual differences due to cultural differences, experiences, and other factors [6] because crossmodal correspondences are said to be based on experiences acquired in daily life [9, 39]. Therefore, rather than visualizing a fixed correspondence between the timbre and shape, TimToShape is designed to allow the learners to customize the correspondences.

## 3 THEORY & IMPLEMENTATION

The easiest way to estimate the correspondence between timbres and shapes for each user is to ask the user to indicate the shapes they feel correspond to all timbres. However, the timbre of a musical instrument (even if it is the same instrument and played at the same pitch) changes continuously in various ways depending on how it is played. It is theoretically impossible to ask the user to answer the shapes that they feel corresponds to "all" timbres. Therefore, in this paper, this would be the problem of estimating the shape that the user may perceive as corresponding to any given timbres based on the user's correspondence of shape to some "representative" timbres.

### 3.1 Problem Formulation

Let $T \subseteq \mathbb{R}^N$ be the feature space of timbres, and $f_{timbre}$ be the map from raw timbre data to the feature vector of timbre. Similarly, let $S \subseteq \mathbb{R}^M$ be the feature space of shapes, and $f_{shape}$ be the map from raw shape data to the feature vector of shape.

Furthermore, let $t_i := f_{timbre}(t_i)$ $(\in T)$ be the feature vector of raw timbre data $t_i$, let $s_i := f_{shape}(s_i)$ $(\in S)$ be the feature vector of shape $s_i$, and let $f_{user} : T \longrightarrow S$ be the user's mapping function from the feature space of timbres to that of shapes.

Then, the problem of "estimating the corresponding shape for any timbre from the shapes answered to some representative timbres" can be formulated as follows.

Given some observed timbre–shape pairs $\{(t_i, \ s_i \ (= f_{user}(t_i))) \mid t_i \in T, s_i \in S\}$, estimate $s^* = f_{user}(t^*)$ for some timbre $t^* \in T$.

Assuming that the set of observation points $\{t_i\}$ is an irregular grid (scattered data) and that there are no (or few) errors in the observation of $\{s_i(= f_{user}(t_i))\}$, this problem can be seen as an irregular-grid multivariate interpolation (or extrapolation) problem.

In Sections 3.2 and 3.3, we explain what we used for the feature space of timbres and shapes, respectively, and then in Section 3.4, we will explain how we solved this interpolation (or extrapolation) problem.

### 3.2 Feature Space of Timbres

To map the timbres to the feature space $T$, in this paper, as in Kimura et al. [15], a variational autoencoder (VAE) is used. VAE is a machine learning model with an encoder and decoder which acquires the latent space of data through unsupervised learning [17].

Fig. 2 shows the architecture of the VAE used. The input for the VAE is the log-mel-spectrogram (calculated with $n\_fft = 2,048$, $hop\_length = 1,024$, $n\_mels = 128$, resulting in an overall size of $128 \times 64$) of the timbre frame. The timbre frame here means the segment of the timbre to which a single shape is mapped. In this paper, 66,560 samples ($\fallingdotseq 1.5$ s) at a sampling rate of 44,100 Hz are used as one frame, and when using TimToShape in real-time, frames are updated every 1,024 sample points (frames are overlapped). This frame length was determined to be appropriate because

5

# FIG.19

Fig. 2. VAE architecture used in TimToShape. The input (128 × 64) is encoded into a 2-dimensional latent space via three convolution layers and output to the same size as the input via four deconvolution layers.

it is sufficiently long to allow users to listen and associate shapes to the "representative" timbres but not so long as to impair responsiveness in real-time use. Then, the input is encoded into the 2-dimensional latent space (this dimension number follows Kimura et al. [15]), and the latent vector $z$ is decoded into the output of the same size as the input (128 × 64). The VAE model was implemented using an open-source framework called Keras[1].

The VAE encodes the input as a stochastic distribution rather than as a single point. This is accomplished by the encoder outputting the mean ($\mu$) and variance ($\sigma$) of the distribution of the latent variable $z$ separately, and sampling $z$ which follows a normal distribution $\mathcal{N}(\mu, \sigma)$ by combining $\mu$ and $\sigma$ with a random vector following a standard normal distribution (this technique is called "reparameterization trick" [17]). However, since the feature vector of one timbre should be constant in our system, we employed $\mu$ of $z$ as the feature vector of the timbre.

## 3.3  Feature Space of Shapes

To be used for interpolation of shapes, $S$ (feature space of shapes) must satisfy the following condition: for any two points $s_i$ and $s_j$ in $S$, when parameters move on the line connecting the two points, the corresponding shape also changes smoothly from $s_i$ to $s_j$.

In this paper, we used "frequency domain" of shape as this feature space $S$ referring to Wada et al. [41]. A shape can be smoothly morphed between any two shapes using the frequency vectors of them. See Appendix A.1 for a detailed explanation.

## 3.4  Linear Estimation of Shape

Now we explain how TimToShape estimates shape $s^*$ for arbitrary timbre $t^*$. As described in Section 3.1, this problem is an irregular-grid multivariate interpolation (or extrapolation) problem. Some methods that can solve this problem include nearest neighbor interpolation [4], linear interpolation (with a triangulated irregular network) [4, 37], natural neighbor interpolation [38], inverse distance weighting (IDW) [4],and Kriging (Gaussian process regression) [26].

---

[1] https://keras.io

# FIG.20

In this paper, linear interpolation and extrapolation is used. We used this linear estimation method because the calculation is relatively simple and the linear extrapolation method extrapolates observations based on the gradient on the boundary of the convex hull of the observation points, and is considered suitable for this system.

The basic idea of linear interpolation/extrapolation can be expressed as follows where $\hat{t}$ is an appropriate point in the $t^*$ neighborhood and $J_{f_{user}}|_{\hat{t}}$ is the estimated Jacobian of $f_{user}$ at $\hat{t}$. For a detailed explanation, see Appendix A.2.

$$s^* = f_{user}(\hat{t}) + J_{f_{user}}|_{\hat{t}}(t^* - \hat{t}) \tag{1}$$

## 3.5 Method for Observation of User's Mapping Function

Next, we will explain the method for observation of $f_{user}$, which includes how to select the observation points (representative timbres) $\{t_i\}$ and how to observe $s_i$ for each $t_i$.

However, there is an important point to note. First, although we have discussed $f_{user}$ as a deterministic function, we suppose that the *actual* human correspondence between timbres and shapes is not deterministic and has the following two properties:

*Property* 1. The relationship between the timbres and shapes is affected by the relative differences in the timbres. This means that the image of a shape for each timbre is expressed more clearly when the user compares timbres than when the user listens to them separately.

*Property* 2. Instead one specific shape corresponding to one timbre, a group of shapes with similar impressions will corresponds.

Therefore, $f_{user}$ shall be considered here as a "favorable" one to use in the system among the entire set of actual correspondences of the user between timbres and shapes. We consider a correspondence to be "favorable" if it satisfies the following two conditions.

*Condition* 1. The variation in the shape mapped to the timbres is large.

*Condition* 2. The mapped shape changes smoothly for the entire $T$.

To observe $f_{user}$ such that these conditions are satisfied, we devised the following steps.

(1) Prepare $T_{dataset}$ as a dataset of timbres (raw timbre data) to be targeted by the system and prepare an empty set $T_{rep}$.

(2) Calculate the image $T_{dataset} := \{ f_{timbre}(t) \in T \mid t \in T_{dataset} \}$.

(3) From $T_{dataset}$, select a set of $N + 1$ points ( call this set $T_{farthest}$ ) such that all the points are affinely independent and the distance of the closest 2 points in $T_{farthest}$ is maximal. Then calculate the inverse image $T_{farthest} := \{ t \in T_{dataset} \mid f_{timbre}(t) \in T_{farthest} \}$.

These points are selected because timbres at these points are more likely to be a characteristic combination of timbres in the dataset, and according to *Property1.*, users are more likely to associate shapes that greatly differ, which may help $f_{user}$ satisfy *Condition* 1.

(4) Ask the user to listen and compare all the timbres in $T_{farthest}$, and for each timbre $t_i \in T_{farthest}$, ask the user to answer the shape $s_i$ that they feel corresponds to $t_i$. Then $N+1$ observations $\{ (t_i, s_i) := (f_{timbre}(t_i), f_{shape}(s_i)) \}$ are recorded. After that, add all the observation points $\{t_i\}$ to $T_{rep}$.

(5) Repeat the following appropriate number of times (maximum 30 times in this study):

(a) Select one $t_{farthest}$ s.t. $t_{farthest} \notin T_{rep} \land t_{farthest} \in \underset{t \in T_{dataset}}{\arg\max} \{ \underset{t' \in T_{rep}}{\min} \|t - t'\| \}$.

7

# FIG.21

Then find $t_{\text{farthest}} \in T_{\text{dataset}}$ $s.t.$ $f_{timbre}(t_{\text{farthest}}) = t_{farthest}$ and ask the user to listen to $t_{\text{farthest}}$.

This point is selected because we assume that the least information about $f_{user}$ is obtained at this point.

(b) Display a shape $s^*_{\text{farthest}}$, which is generated from $s^*_{farthest}$ estimated for $t_{farthest}$ based on the observations so far, and ask the user if they feel that the displayed shape $s^*_{\text{farthest}}$ already corresponds to the timbre $t_{\text{farthest}}$.

If the user says yes, $(t_{farthest}, s^*_{farthest})$ is recorded as another observation, $t_{farthest}$ is added to $T_{rep}$, and the remaining steps of this loop are skipped. If this occurs three times in a row, the entire observation process is completed because the observation is sufficient.

If the user says no, go to step (5)(c).

(c) Ask the user to search a shape that they feel corresponds to $t_{\text{farthest}}$ somewhere around $s^*_{farthest}$ according to the following Eq. (2). The $J$ in Eq. (2) is the Jacobian estimated in Eq. (1), and the user moves the $t_{neighbor}$ around $t_{farthest}$. In actual use, $N$ sliders are presented, and the user manipulates $t_{neighbor}$ by manipulating each slider.

If the user finds the shape, let $s^{**}_{farthest}$ be the feature vector of that shape, then $(t_{farthest}, s^{**}_{farthest})$ is recorded as another observation, $t_{farthest}$ is added to $T_{rep}$, and the remaining steps of this loop are skipped. Otherwise, go to step (5)(d).

$$s^{**} = s^* + J(t_{neighbor} - t_{farthest}) \tag{2}$$

The reason for preparing this step was to use *Property* 2. to observe $f_{user}$ without increasing the dimension of the image of $T_{dataset}$ mapped to $S$ by $f_{user}$ as long as possible, which may help $f_{user}$ satisfy *Condition* 2.

(d) Similar to step (4), ask the user to answer the arbitrary shape $s'_{\text{farthest}}$ that they feel corresponds to timbre. Then $(t_{farthest}, s'_{farthest})$ is recorded as another observation, and add $t_{farthest}$ to $T_{rep}$.

The next section describes how the user answers the shapes in Steps (4) and (5).

## 3.6 Process for Answering Shape for Timbre

As explained in Section 3.3, the frequency vector of the shape is adopted as the feature vector of the shape, but it is almost impossible for users to manipulate the frequency vector to create the desired shape.

Therefore, we implemented a method based on Wada et al. [41] for generating shapes from semantic shape parameters to enable users to use them when answering shapes to timbres. The following six parameters are used to generate shape: *number of spikes* (0 to 30), *length of spikes* (0 to 0.5), *randomness* (0 to 1), *random seed* (0 to 10), *roundness of the base of spikes* (0 to 1), and *roundness of the tip of spikes* (0 to 1), referring to the study by Oyama et al. [28].

The details of how shapes are generated from these parameters is explained in Appendix A.3.

Using this method of generating shape from semantic parameters, users can answer the shape they feel corresponds to the timbre in the following process:

(1) Select one shape from the *Shape Samples* (Fig. 3) that the user feels best correspond to the timbre. The Shape Samples contain 25 basic shapes that can be created from semantic parameters of the shape.

We prepared this step because it is easier for users to compare several shapes and choose one from them than to think of a shape from scratch.

8

# FIG.22

Fig. 3. Shape Samples: A set of 25 basic shapes that can be created from the semantic shape parameters. The display order of the shapes is randomly rearranged each time.

Fig. 4. Shape Editor: Interface to edit shape parameters and create shape in real time. On the right side are six sliders for editing each semantic shape parameter, and on the left side is the output shape.

(2) Modify the shape selected in the previous step so that the user feels that the shape corresponds more to the timbre using *Shape Editor*, which allows the user to edit semantic parameters of a shape in real-time (Fig. 4).

# FIG.23

## 4 INTERFACE FOR ANNOTATION AND VISUAL FEEDBACK

While Section 3 focused on the theory and its implementation used in TimToShape, this section provides an explanation related to the implementation of the interface from the practical perspective.

### 4.1 Interface for Timbre–shape Annotation

In Sections 3.5 and 3.6, we described the methodology of how to observe $f_{user}$ and briefly explained about its implementation. In this section, we explain how they were implemented as an interface and how to use them from the user's perspective. From now on, we will refer to the step where the user answers a shape to each representative timbres as "timbre–shape annotation."

From the user's perspective, the timbre–shape annotation can be divided into two main steps: one is to answer shapes for the first three timbres, and the other is to answer shapes for the fourth and subsequent timbres.

The first step, in which the user answers the shapes for the first three timbres, corresponds to step (4) in Section 3.5. The reason for the number of timbres being 3 is that, as explained in Section 3.2, the number of dimensions of the latent space of timbres ($N$) is 2 in our implementation. In this step, the user answers a shape to each of the three timbres, following the process described in Section 3.6. The interface used here is shown in Fig. 5 (a), where the three timbres are shown simultaneously, and the *Shape Samples* are shown on the right side. After the user selects a shape from *Shape Samples*, the *ShapeEditor* appears and allows the user to edit shapes using semantic shape parameters.

The second step, in which the user answers the shapes for the fourth and subsequent timbres, corresponds to step (5) in Section 3.5. This step consists of following three phases.

*Phase* 1. Verify whether the estimated shape is acceptable (Fig. 5 (b)); this corresponds to Step (5)(b) in Section 3.5. Select whether a modification is necessary by clicking on a button. If the shape needs modification, proceed to *Phase* 2. Otherwise, proceed to the next timbre. If this occurs three times in a row, timbre–shape annotation is finished.

*Phase* 2. Verify shapes around the estimated shape (Fig. 5 (c)); this corresponds to Step (5)(c) in Section 3.5. Two sliders were shown to allow the search for the shapes in the vicinity of the estimated shape. If the user cannot find a shape that they feel corresponds to the timbre, proceed to *Phase* 3.

*Phase* 3. Answer the shape that the user feels corresponds to the timbre with *Shape Samples* and *Shape Editor* (Fig. 5 (d)), following the process described in Section 3.6; this corresponds to Step (5)(d) in Section 3.5. Note that *Shape Samples* are omitted from the figure.

### 4.2 Implement Real-time Shape Feedback for Timbre

TimToShape estimates and displays shapes in real-time corresponding to the timbre input to the microphone. To achieve this, the following calculations must be performed with low latency:

*Calculation* 1. Computation of the log-mel-spectrogram of the microphone input

*Calculation* 2. Encoding into the latent space by the VAE

*Calculation* 3. Estimation of frequency vector of shape using linear interpolation (or extrapolation)

*Calculation* 4. Inverse Fourier transform of the frequency vector and drawing of the shape

We implemented these using JavaScript to run on a browser. Several implementation efforts were made to speed up the above calculations (see Appendix A.4 for details). The final computation time was: 5 ~ 6 ms for calculation 1; 20 ~ 40 ms for 2; 1 ~ 2 ms for 3; and 1 ~ 2 ms for 4. Overall, it took less than 60 ms from the time the last sample point of a

10

# FIG.24

**(a)**

**(b)**

**(c)**

**(d)**

Fig. 5. The interface implemented for timbre–shape annotation. (a) Interface to answer shapes to the first three timbres. (b) Interface to determine whether the estimated shape needs modification. (c) Interface to search the shape in neighbor of the original estimation. (d) Interface to answer shape to fourth and subsequent timbres (*Shape Samples* is omitted). See Section 4.1 for detail.

frame was input to the microphone until it was reflected in the drawing. Furthermore, using asynchronous processing, we achieved a frame rate of approximately 40 fps (PC: Macbook Pro, M1, 2020 with version 12.4 of macOS Monterey, Browser: Google Chrome of version 106.0.5249.119).

## 5   STUDY 1: CONGRUENCY OF TIMBRE AND GENERATED SHAPES

This study aims to verify that TimToShape can generate a shape that users feel corresponds to any arbitrary timbre based on each user's input of timbre–shape correspondences. We conducted an online user study to determine if the shapes generated by TimToShape were more likely to be perceived as congruent for timbres by the participants than randomly generated shapes.

This study did not use TimToShpae as a real-time feedback system (the shape changes dynamically) but as a system that generates one static shape for one frame ($\doteqdot$ 1.5s) of timbre. This is because if the shape changes dynamically, it is impossible to measure the congruency of the timbre and shape in each frame.

### 5.1   Dataset

The timbre dataset used in this study is a smartphone recording (from iPhone XR) of the "open A-string" of the violin by one of the authors of this paper. He is an advanced violinist who has been playing violin for over 19 years. The dataset contains timbres of the violin's "open A-string" played with various force levels, bow positions, and bow angles, including timbres imitating those produced by a beginner as well as an advanced player.

11

# FIG.25

The recordings were made in a quiet room and using the smartphone's standard recording application (Voice Memos[2]). A smartphone was used for recording because we aimed to make our system work without special equipments or applications.

The recording time was approximately 20 minutes. The silent time was trimmed, and frames (one frame containings 66,560 sample points) were cut out, shifted every 500 sample points (frames overlapped) and then created a dataset containing 90,159 frames in total.

## 5.2 Training

Using this timbre dataset, the unsupervised learning of the VAE described in Section 3.2 was performed. The training of VAE was performed on a Windows 10 PC with two GeForce GTX1080Ti GPUs. We used 20% of the dataset was used for validation, the optimizer was Adam (learning rate 0.001) [16], the batch size was 512, and there were a maximum of 200 training epochs. The training was automatically interrupted by early stopping based on validation loss.

The resulting latent space ($\mu$ of $z$) of timbres is shown in Fig. 6 (a). Although no labeling was performed on the timbre dataset, the latent space mapping for the timbres showed a rough trend, as depicted in the figure (note that the labeling for the areas in Fig. 6 (a) simply represents our impression of the timbres).

Based on the method described in Section 3.5, the observation points in this latent space are shown in Fig. 6 (b). The red dots are the observation points adopted in Steps (3) and (4) in Section 3.5, and the yellow dots are the observation points (representative timbres) adopted in the 30 loops in Step (5) in Section 3.5. The numbers labeled next to the yellow dots indicate their order of selection (all participants annotated shapes for timbres in this order).

## 5.3 Participants

This study gathered 101 participants through a crowdsourcing platform[3]. Sixty-four participants were male, and 37 were female, with a mean age of 42.5 years and a standard deviation of 7.43. All participants were required to participate in the study on a PC and wear earphones or headphones. The participants were paid 550 JPY for their participation.

## 5.4 Procedure

This study was divided into two sessions.

In the first session, the participants performed the timbre–shape annotation, followed the flow described in Section 4.1. The interface was identical to that shown in Fig. 5. The timbres presented in this step correspond to the red and yellow dots in Fig. 6 (b) (as mentioned in Section 5.1).

In the second session, thirty timbres were randomly selected from the data set, and for each, there were two trials, for a total of 60 trials. The trials were conducted in a randomized order. On each trial, either a shape generated by TimToShape or a randomly generated shape is presented along with the timbre (both shape-generation methods were used once per timbre). Here, "randomly generated shapes" were generated by randomly setting the shape semantic parameters described in Section 3.6. For the presented timbre-shape pair, participants were asked to answer how well they felt the shape corresponds to the timbres by visual analog scale (VAS) (the left side was "Not corresponds at all" while the right side was "Completely corresponds") [8]. The interface used to answer the congruency in this study is shown in Fig. 7.

---

[2]https://apps.apple.com/us/app/voice-memos/id1069512134
[3]https://www.lancers.jp

# FIG.26

(a)

(b)

Fig. 6. Latent space of timbres used in study 1. All timbres in the dataset are mapped on the latent space as blue dots. (a) Overall tendency of timbres (the labeling for each area simply represents our impression of the timbres), (b) Observation points (representative timbres) selected in this latent space (see section 5.1)

**On the line segment below, click to indicate how well you feel this figure corresponds to the sound.**

Not corresponds at all |————————|————————————————| Completely corresponds

Fig. 7. VAS used in study 1. The length of the horizontal bar was made to be consistent with 100mm according to [8]. The participants were asked to initialize the window scale to make the bar size with 100mm at the beginning of the study.

# FIG.27

Fig. 8. Comparison of congruence score between two methods: TimtoShape and Random (n=75).

## 5.5 Results

Based on the time taken for the entire study, data from those who took excessively short (less than 10 minutes) or long (more than 36 minutes) were eliminated as inappropriate efforts; data from 75 of 101 participants were used in the analysis.

For each participant, the "congruence score" is calculated for each of the "TimToShape" and "Random" methods by following process:

(1) For each trial, the congruency was scored from 0 (not correspondings at all) to 100 (completely correspondings), depending on the position of the participant selected in the VAS.

(2) The average of the scores of 30 trials for each method is the congruence score for that participant.

The distribution of the congruency score for all 75 participants is shown in Fig. 8. The median congruence score of "TimToShape" was 66.1 out of 100 while the median score of "Random" was 43.1. A normality test (Shapiro-Wilk test) of the distribution of scores for each method showed that the distribution of "Random" can be regarded as normal ($p = .15 > .05$), but that of "TimToShape" was not normal ($p = .03 < .05$). Therefore, as a paired nonparametric data, a Wilcoxon signed rank test was performed. The results showed that "TimToShape" had a significantly higher congruence score than "Random" ($p = .00 < .01$, $r = 0.86$).

# FIG.28

These results indicate that TimToShape can indeed generate shapes that correspond more to any timbre (in the dataset) than randomly generated shapes.

## 6    STUDY2: USE AS A FEEDBACK SYSTEM FOR VIOLIN PRACTICE

This study aimed to determine the advantages, disadvantages, and other possible impacts of using TimToShape as a real-time feedback system for practicing musical instruments. Because the quantitative analysis and evaluation of timbre is difficult, we mainly analyzed the comments from the participants who used our proposed system during violin practice. We asked six violin players from various backgrounds to practice the violin with two systems: TimToShape, and a system that visualizes the position of the timbre on the latent space as a 2D map. Without revealing the violin players which of the two we proposed, we asked them to practice the violin using each of them and conducted questionnaires and interviews.

### 6.1    Dataset & Training

This study used a different dataset from that described in Section 5.1. This was because this study was originally planned to be conducted using a smartphone, but because of the large computational load, TimToShape could not run in real-time on a smartphone; therefore, it was modified to be conducted using a computer (Macbook Pro, M1, 2020 with version 12.4 of macOS Monterey). The recording method was almost the same as that described in Section 5.1, with the "open A-string" played with various techniques, but recorded with the standard recording application (Voice Memos[4]) of the computer. The total recording time was approximately 22 minutes, and frames were cut out, as described in Section 5.1, creating a dataset containing 109,447 frames in total.

The training of the VAE was conducted in exactly the same setting as in Section 5.2. The latent space resulting from the training is shown in Fig. 9 (a) (note that the labeling for the areas in Fig. 9 (a) simply represents our impression of the timbres), and the observation points (representative timbres) selected from this latent space according to the method described in Section 3.5 are shown in Fig. 9 (b) (the red dots are the observation points adopted in steps (3) and (4) in Section 3.5, and the yellow dots are the observation points adopted in the 30 loops in step (5) in Section 3.5).

### 6.2    Practice Goal

We determined the goal timbre of the participants' performance during their practice. We asked a professional violinist to record a sample of an "open A-string" performance to be used as a goal timbre. The sample was recorded with the same instrument, microphone, and similar recording environment, as when the timbres of the dataset were recorded.

We set the goal timbre to approximately 20 s of the 20-minute recording, during which the professional stated that he had the best-sounding performance. Here, because the goal timbre is not perfectly constant for 20 s, there is variance in the position of the latent space. However, when using TimToShape in practice, users practice to approach one shape that corresponds to a specific point in the latent space, so we set the average position of the goal timbre in the latent space over 20 s as the goal point expediently.

### 6.3    Feedback Systems

We prepared two types of feedback systems for this user study. Both use the same VAE, but with different visualization methods.

---

[4]https://apps.apple.com/us/app/voice-memos/id1069512134

# FIG.29

(a)

(b)

Fig. 9. Latent space of timbres used in the study 2. All timbres in the dataset are mapped on the latent space as blue dots. (a) Overall tendency of timbres (the labeling for each area simply represents our impression of the timbres), (b) Observation points (representative timbres) selected in this latent space (see Section 6.1)

The first is our system, TimToShape. When used in practice, a shape corresponding to the goal timbre (call this "goal shape") and a shape corresponding to the timbre currently being played (call this "current shape") are displayed side by side, as shown in Fig. 10 (a). To make the difference in shapes easier to understand, the goal shape is shown as a translucent guide in the background of the current shape.

The other is a system that visualizes the location of timbres in the latent space like a map (we call this "Latent Space Visualization"). As shown in Fig. 10 (b), the point of the goal timbre and the point of the timbre currently being played are displayed on the map. This system is based on SonoSpace by Kimura et al. [15] but there are some differences. The differences are as follows:

- The VAE used in SonoSpace calculates the position of the point for one note only after the note is played; therefore, the position of the point is not updated in real time during the performance. However, the VAE used in TimToShape updates its inference in real-time. Therefore, in this "Latent Space Visualization", the position of the feedback point is also updated in real-time.
- In SonoSpace, in addition to simply visualizing the latent space of timbres, there were several additional functions, such as allowing the user to click on a point in the latent space to play that sound or to display a waveform of the input. However, these were not implemented in this study because we wanted to compare pure visualization methods.

16

# FIG.30

The procedure of this study consisted of eight steps.

(1) Timbre–Shape annotation: Timbre–Shape annotation was performed according to the flow described in Section 4.1 to estimate timbre–shape correspondences of each participant.

(2) Pre-Test: The participants listened to the goal timbre and then, conducted a one-minute trial in which they tried to reproduce the goal timbre.

(3) Practice1: Ten minutes of practice using the first feedback system. To balance the effects of the order, "TimToShape" was performed first for P-1, P-3, and P-5, and "Latent Space Visualization" was performed first for P-2, P-4, and P-6.

(4) Acquisition Test1: Immediately after Practice1, a 1-minute trial was conducted to reproduce the goal timbre with the feedback system.

(5) Retention Test1: After a 10-minute break after Acquisition Test1, a 1-minute trial of reproducing the goal timbre was conducted without the feedback system.

(6) Practice2: The same practice as in Practice1, but with the other feedback system.

(7) Acquisition Test2: The same trial as in Acquisition Test1, but with the other feedback system.

(8) Retention Test2: After a 10-minute break from the end of Acquisition Test2, a 1-minute trial was conducted of reproducing the target sound without the feedback system.

The entire study took approximately 80 minutes.

## 6.6 Measurements

*6.6.1 Objective Measures.* Since the latent space used in "TimToShape" and "Latent Space Visualization" is identical, the mean distance to the goal point in the latent space is set as an objective measure of performance in the 1-minute trials in Pre-Test, Acquisition Test1, Retention Test1, Acquisition Test2, and Retention Test2. We will refer to this value as the "Distance Error Score" (the lower the score, the better the performance).

*6.6.2 Subjective Measures.* In addition to objective measures, semi-structured interviews and questionnaires were conducted to clarify subjective assessments during practice.

- At the end of Acquisition Test1 and Acquisition Test2, interviews were conducted based on questions about the advantages and disadvantages they felt about the feedback system, when they felt the feedback got closer to the goals, and how to achieve that. In addition, using a questionnaire, the participants were asked to respond on a 7-point Likert scale, where one indicated high disagreement and seven indicated high agreement, to the question about the interpretability of the feedback *"Did you understand the relationship between the sound you played and the feedback displayed?"*. Regarding the engagement of the visualization system, they were asked to respond to six questions on VisEngage [14]: "Challenge," "Discovery," and "Interest" (2 questions for each).
- In addition to the above, after the Acquisition Test2, the participants were interviewed about which of the two feedback systems they would prefer to use in their actual practice and why.
- At the end of Retention Test1 and Retention Test2, they were interviewed based on question about the differences compared to when the feedback was displayed.

18

# FIG.31

Fig. 11. Transitions in Distance Error Scores for each participant (the lower the score, the better the performance). The label "pre" means "Pre-Test", "acq" means "Acquisition Test", and "ret" means "Retention Test". Also, "shape" means "TimToShape" and "latent" means "Latent Space Visualization".

## 6.7 Results and Discussion

*6.7.1 Objective Measures.* Fig. 11 shows the transitions in the "Distance Error Scores" across the five tests for each participant. The three upper graphs are for participants who worked on TimToShape first (P-1, P-3, P-5), and the three lower graphs are for participants who worked on Latent Space Visualization first (P-2, P-4, P-6).

First, by analyzing the groups that performed TimToShape first, we found that P-1 and P-5 performed better in both the Acquisition Test and the Retention Test with TimToShape, and P-3 performed better in the Acquisition Test with Latent Space Visualization, but performed better with TimToShape in the Retention Test.

Next, by analyzing the group that performed Latent Space Visualization first, we found a slight change in scores over the five tests, and it appeared that the person's ability in the Pre-Test remained dominant until the end.

Looking only at the scores, three (P-1, P-4, and P-5) performed better in Acquisition Test and five (P-1, P-2, P-3, P-4, and P-5) performed better in Retention Test with TimToShape than with Latent Space Visualization. Although some score superiority were shown by TimToShape, especially in terms of retention, it would be difficult to show a clear superiority of TimToShape using this objective measure because of the large overall individual differences.

19

# FIG.32

Fig. 12. Comparison of scores (7-point Likert Scale) for subjective measures (N=6).

6.7.2 *Subjective Measures*. The distributions of the responses to the interpretability question and the VisEngage-based "challenge", "discovery", and "interest" questions are shown in Fig. 12. For the "challenge", "discovery", and "interest", the average of the responses to the two questions are taken as one person's score. Although the statistical analysis was not performed due to a small number of participants, TimToShape tends to be higher in terms of "interpretability". Five participants provided TimToShape with the same or higher score than Latent Space Visualization.

For the question asked which of TimToShape and Latent Space Visualization they would use in practice, five participants (P1, P2, P3, P4, and P6) answered TimToShape.

These results suggest that TimToShape has higher interpretability and is preferred by most people over Latent Space Visualization.

From this point on, we will analyze the comments in the interviews to determine why the different methods of visualizing the latent space gave such differing impressions.

First, there are some comments on the advantages of TimToShape over Latent Shape Visualization.

*"Shape was easy to understand visually and intuitively with a quick glance."* (P-2)

20

68

# FIG.33

Both beginners (P-1, P-2) mentioned that they were so absorbed in their hands and arms and the movement of the bow that it was difficult for them to keep an eye on the feedback screen. In this context, P-2 stated that she could not follow the moving dot with her eyes (in Latent Space Visualization) but that the changing shape was highly comprehensible at a quick glance (in TimToShape).

*"In the map feedback (Latent Space Visualization), it was difficult to understand what the vertical and horizontal axes represented, and it was difficult to move the points as I wanted, but in shape feedback (TimToShape), the transformation of the shape fits my intuition and it was easy to get the hang of getting closer to the goal."* (P-6, similar comments from P-3 and P-4)

Several participants indicated that they had difficulty grasping the meaning of the axes of the latent space. It is interesting that even though the same latent space was used in TimToShape, some participants found it easier to understand the relationship between the timbre and feedback simply by visualizing it through a sensory-based shape.

*"When practicing with map (Latent Space Visualization), I did not feel like I was trying to bring the "sound" sounds closer to the goal sound because I was concentrating only on the movement of the dot, and I think I was not listening to my own sound very well during the practice. But practicing with shape (TimToShape), I do not know why, I felt that this problem was lessened and that I could pay more attention to the sound."* (P-4 and similar comments from P-5)

We consider this to be a comment related to the previous comment. That is, we consider that the difficulty in interpreting the feedback caused many participants to focus only on the behavior of the feedback (except for beginners). Furthermore, we suspect that the reason this problem was reduced in TimToShape was not only because the relationship between the timbre and feedback was easier to grasp, but also because the timbres were visualized based on crossmodal correspondence, which subconsciously directed the user's attention to the timbre even while looking at the shape.

*"When practicing with map (Latent Space Visualization) the dot was usually not close to the goal at all, even when I tried various attempts, which was demotivating. But when practicing with shape (TimToShape), I was able to practice without getting bored because I felt a sense of accomplishment when I got close to the target at some time."* (P-1)

This is another strength of TimToShape. Because the VAE does not consider human perception when learning, the distance in the latent space does not necessarily correspond to the distance in human perception. Thus, a situation can arise in which two points in the latent space are extremely distant, even though they sound close as a sound. This leads to a loss of motivation, especially for beginners. However, this problem is less likely to occur with TimToShape because the shapes are created based on the user's perception, and even if two sounds are far apart in the latent space, if the user feels them similar to each other, the shapes will be displayed close to each other.

*"In the trial without feedback (Retention Test), although the shape was not displayed, I played while imagining the changing shape in real-time. However, (in Latent Space Visualization,) it was difficult to imagine the position on the map in real-time."* (P-5 and similar comments from P-2)

We consider that this may also be a strength of the crossmodal correspondence. By visualizing shapes that may be recalled by each user for timbres,it becomes easier to recall feedback even after it is lost.

On the other hand, the following comments were received regarding the advantages of Latent Space Visualization over TimToShape.

21

69

# FIG.34

*"Map visualization (Latent Space Visualization) seemed to have better resolution regarding goal and current errors."* (P-4)

*"Map feedback (Latent Space Visualization) seemed to analyze more elements of timbre."* (P-5 and similar comments from P-3)

Both comments suggest that by visualizing the timbre as a shape, the amount of information is reduced compared to when the latent space of the timbre is visualized as it is. This is not necessarily a bad thing when used for feedback, in that it reduces the cognitive load of the user, but further discussion is needed regarding the amount of information to be presented.

In addition, the following comments were received as common drawbacks to both.

*"Technical advice is not presented, so sometimes it is not clear how to improve."* (P-2 and similar comments from P-1)

*"Both systems require me to do a variety of trial and error to find the moment when the feedback approaches the goal by myself. If I could not find it, I would be at a loss."* (P-3)

This is a major challenge, especially for beginners using this system. TimToShape only visualizes timbres by shape, and although it makes it easier to understand the relationship between timbres and the feedback, it does not provide technical advice. Because technical advice depends on the type of instrument, attempting to solve this problem makes it impossible to build a method that is applicable to any instrument, which is the basic idea of TimToShape. Therefore, for beginners, we recommend that TimToShape be used in combination with advice from an adept professional or a system that provides feedback on technical information (e.g., [32]).

Overall, our system was well-received by the violin players in terms of visual clarity, interpretability (easy to understand the relationship between the timbre and feedback) and ease of recall (even after the feedback is lost).

## 7   LIMITATION & FUTURE WORK

### 7.1   Number of Dimensions of Latent Space of Timbre

In this paper, the number of dimensions of the timbre latent space was set to 2 with reference on Kimura et al. [15] . However, further discussion of the number of dimensions of the latent space is required. If the number of dimensions of the latent space is increased, more timbre features can be reflected, which leads to a more accurate estimation of the correspondence between the timbres and the shapes. However, the user needs to answer shapes for timbres more times in timbre–shape annotation, which can be burdensome for the user. Further user studies should be conducted to determine the advantages and disadvantages of increasing the number of dimensions and to determine the optimal number of dimensions.

### 7.2   Parameters that make up the shape

As discussed in Section 5.5, the median congruence score of TimToShape was 66.1 (out of 100). This still leaves some scope for improvement.

There are two ways to address this issue: The first is to revisit the method of creating shapes, as described in Section 3.6. Currently, we provide six semantic parameters to create a shape, but these parameters may have been inadequate for creating arbitrary shapes that the user wants to create. Constructing a way to create shapes more freely would improve the congruency scores.

22

# FIG.35

The second is to consider parameters other than the outline of the shape. Since timbre–shape correspondences vary from person to person, some may feel a strong correspondence to factors other than shape outline (e.g., size, color, texture pattern, etc.), as research on crossmodal correspondences between sound and vision has shown [11, 29, 30]. Our method can include any element in the output as long as it can be linearly interpolated as a vector. We leverage this strength to reflect elements other than the outline of the shape in the output and provide shapes with high congruency to timbre to a larger number of people.

Also, by increasing the number of parameters that make up the shape, we could provide more information as feedback for timbre, which will help remedy the problem of the shape's low amount of information mentioned in Section 6.7.

## 7.3 Termination Condition for Timbre–Shape Annotation

There remains scope for further study regarding the termination condition for timbre–shape annotation. Currently, the termination condition is to answer that there is no problem without modifying the estimated shape for three consecutive times in step (5) (b) of Section 3.5, or to loop step (5) thirty times.

However, only 21 out of 75 participants in Study 1 finished with the former termination condition, and the remaining participants annotated shapes for timbres 33 times (including the first three timbres).

It is burdensome for users to annotate 33 times. We must find the minimum number of times for the entire loop without worsening the congruency score, or we must devise a method to validate the end of the loop based on the size of the shape modification in step (5) (c), not only in step (5) (b) of Section 3.5.

## 7.4 Application for Different Timbres and Environments

In this paper, TimToShape was limited to use with the timbre of "open A-string" of the same violin. However, our method can be easily applied to any timbre of any instrument as long as there is a dataset of the that timbres.

In the future, we intend to create datasets of timbres from various instruments in various recording environments, and to build a system using those datasets that can be used with any instrument, anywhere.

## 8 CONCLUSION

In this paper, we proposed TimToShape, a system that can visualize arbitrary timbres by 2D shapes aligned with a person's perception, based on the fact that there is a crossmodal correspondence between timbres and shapes. TimToShape aims to provide feedback in musical instrument practice that makes it easy for humans to understand the relationship between the timbres and feedback. TimToShape acquires a latent space of timbres through unsupervised learning by the VAE. By asking each user to annotate shapes for some points in the latent space, it can estimate a shape for any point in the latent space with linear interpolation. First, we conducted a user study via crowdsourcing (n=75) to verify the shape estimation method and found that it can generate shapes with significantly higher congruency to the timbre than randomly generated shapes. Next, we conducted a user study with six violin players to verify the effectiveness of this system when used as feedback for practicing a musical instrument and found that compared to simply visualizing the position of the timbre in the latent space (like a map), visualization by TimToShape was more comprehensible at a glance, was easier to understand the relationship between the timbre and feedback, and was easier to recall the feedback even after the feedback was lost. In the future, we will consider including elements other than shape outlines in the visualization to further improve congruency, and creating datasets of other timbres to improve generalization performance for various instruments and environments. We hope this work inspires synergy between

23

# FIG.36

the HCI and AI domains by providing insights to reflect human perceptual characteristics in an interface and interaction that applies machine learning.

## REFERENCES

[1] Mohammad Adeli, Jean Rouat, and StéAphane Molotchnikoff. 2014. Audiovisual correspondence between musical timbre and visual shapes. *Frontiers in Human Neuroscience* 8, MAY (may 2014), 352. https://doi.org/10.3389/fnhum.2014.00352

[2] Kota Arai, Mone Konno, Yutaro Hirao, Shigeo Yoshida, and Takuji Narumi. 2021. Effect of visual feedback on understanding timbre with shapes based on crossmodal correspondences. In *Proceedings of the 27th ACM Symposium on Virtual Reality Software and Technology.* 1–3.

[3] Michael William Buck. 2008. *The efficacy of SmartMusic® assessment as a teaching and learning tool.* The University of Southern Mississippi.

[4] Peter A Burrough, Rachael A McDonnell, and Christopher D Lloyd. 1998. *Principles of geographical information systems.* Oxford university press.

[5] Estefania Cano, Christian Dittmar, and Sascha Grollmisch. 2011. Songs2See: learn to play by playing. In *12th International Society for Music Information Retrieval Conference (ISMIR 2011).* Miami, 2231–2240. Retrieved October 3, 2022 from https://www.songs2see.com/

[6] Yi-Chuan Chen, Pi-Chun Huang, Andy Woods, and Charles Spence. 2016. When "Bouba" equals "Kiki": Cultural commonalities and cultural differences in sound-shape correspondences. *Scientific reports* 6, 1 (2016), 1–9.

[7] Rocco Chiou and Anina N Rich. 2012. Cross-modality correspondence between pitch and spatial location modulates attentional orienting. *Perception* 41, 3 (2012), 339–353.

[8] Nicola Crichton. 2001. Visual analogue scale (VAS). *J Clin Nurs* 10, 5 (2001), 706–6.

[9] Ophelia Deroy and Charles Spence. 2016. Crossmodal correspondences: four challenges. *Multisensory research* 29, 1-3 (2016), 29–48.

[10] Ivan Galamian and Sally Thomas. 2013. *Principles of violin playing and teaching.* Courier Corporation.

[11] Kostas Giannakis and Matt Smith. 2001. Imaging soundscapes: Identifying cognitive associations between auditory and visual dimensions. *Musical Imagery* (2001), 161–179.

[12] Sergio Giraldo, George Waddell, Ignasi Nou, Ariadna Ortega, Oscar Mayor, Alfonso Perez, Aaron Williamon, and Rafael Ramirez. 2019. Automatic assessment of tone quality in violin music performance. *Frontiers in Psychology* 10 (2019), 334.

[13] Daniel Gurman, Colin R McCormick, and Raymond M Klein. 2021. Crossmodal correspondence between auditory timbre and visual shape. *Multisensory Research* 35, 3 (2021), 221–241.

[14] Ya-Hsin Hung and Paul Parsons. 2017. Assessing user engagement in information visualization. In *Proceedings of the 2017 CHI Conference Extended Abstracts on Human Factors in Computing Systems.* 1708–1717.

[15] Naoki Kimura, Keisuke Shiro, Yota Takakura, Hiromi Nakamura, and Jun Rekimoto. 2020. SonoSpace. In *Proceedings of the 28th ACM International Conference on Multimedia.* Association for Computing Machinery (ACM), New York, NY, USA, 367–374. https://doi.org/10.1145/3394171.3413542

[16] Diederik P Kingma and Jimmy Ba. 2014. Adam: A method for stochastic optimization. *arXiv preprint arXiv:1412.6980* (2014).

[17] Diederik P Kingma and Max Welling. 2014. Auto-encoding variational bayes. In *2nd International Conference on Learning Representations (ICLR).*

[18] Trevor Knight, Finn Upham, and Ichiro Fujinaga. 2011. The potential for automatic assessment of trumpet tone quality.. In *ISMIR.* Citeseer, 573–578.

[19] Wolfgang Köhler. 1947. *Gestalt psychology: An introduction to new concepts in modern psychology.* Liveright Pub. Corp.

[20] Yin-Jyun Luo, Li Su, Yi-Hsuan Yang, and Tai-Shih Chi. 2015. Detection of Common Mistakes in Novice Violin Playing.. In *ISMIR.* 316–322.

[21] Esteban Maestre, Panagiotis Papiotis, Marco Marchini, Quim Llimona, Oscar Mayor, Alfonso Pérez, and Marcelo M Wanderley. 2017. Enriched multimodal representations of music performances: Online access and visualization. *Ieee Multimedia* 24, 1 (2017), 24–34.

[22] makemusic. 2006. SmartMusic | Music Learning Software for Educators & Students. Retrieved October 3, 2022 from https://www.smartmusic.com/

[23] Lawrence E Marks. 1987. On cross-modal similarity: Auditory–visual interactions in speeded discrimination. *Journal of experimental psychology: Human Perception and Performance* 13, 3 (1987), 384.

[24] Dimitri Mavriplis. 2003. Revisiting the least-squares procedure for gradient reconstruction on unstructured meshes. In *16th AIAA computational fluid dynamics conference.* 3986.

[25] Robert D Melara and Thomas P O'Brien. 1987. Interaction between synesthetically corresponding dimensions. *Journal of Experimental Psychology: General* 116, 4 (1987), 323.

[26] Margaret A Oliver and Richard Webster. 1990. Kriging: a method of interpolation for geographical information systems. *International Journal of Geographical Information System* 4, 3 (1990), 313–332.

[27] Oy. 2020. Yousician | Learn Guitar, Piano, Ukulele With The Songs you Love. Retrieved October 3, 2022 from https://yousician.com/

[28] Tadasu Oyama, Hisao Miyano, and Hiroshi Yamada. 2003. Multidimensional scaling of computer-generated abstract forms. In *New developments in psychometrics.* Springer, 551–558.

[29] Cesare Parise and Charles Spence. 2008. Synesthetic congruency modulates the temporal ventriloquism effect. *Neuroscience Letters* 442, 3 (2008), 257–261.

[30] Cesare V Parise and Charles Spence. 2012. Audiovisual crossmodal correspondences and sound symbolism: A study using the implicit association test. *Experimental Brain Research* 220, 3-4 (aug 2012), 319–333. https://doi.org/10.1007/s00221-012-3140-6

[31] Alfonso Perez-Carrillo. 2016. Statistical models for the indirect acquisition of violin bowing controls from audio analysis. In *Proceedings of Meetings on Acoustics 172ASA,* Vol. 29. Acoustical Society of America, 035003.

24

# FIG.37

[32] Alfonso Perez-Carrillo. 2019. Violin Timbre Navigator: Real-Time Visual Feedback of Violin Bowing Based on Audio Analysis and Machine Learning. In *International Conference on Multimedia Modeling*. Springer, 182–193.

[33] A. Perez-Carrillo and M. M. Wanderley. 2015. Indirect Acquisition of Violin Instrumental Controls from Audio Signal with Hidden Markov Models. *IEEE/ACM Transactions on Audio, Speech, and Language Processing* 23, 5 (2015), 932–940. https://doi.org/10.1109/TASLP.2015.2410140

[34] Vilayanur S Ramachandran and Edward M Hubbard. 2001. Synaesthesia–a window into perception, thought and language. *Journal of consciousness studies* 8, 12 (2001), 3–34.

[35] Oriol Romani Picas, Hector Parra Rodriguez, Dara Dabiri, Hiroshi Tokuda, Wataru Hariya, Koji Oishi, and Xavier Serra. 2015. A real-time system for measuring sound goodness in instrumental sounds. In *Audio Engineering Society Convention 138*. Audio Engineering Society.

[36] Makiko Sadakata, David Hoppe, Alex Brandmeyer, Renee Timmers, and Peter Desain. 2008. Real-Time Visual Feedback for Learning to Perform Short Rhythms with Expressive Variations in Timing and Loudness. *Journal of New Music Research* 37, 3 (2008), 207–220. https://doi.org/10.1080/09298210802322401

[37] WE Schaap and R Van De Weygaert. 2000. Continuous fields and discrete samples: reconstruction through Delaunay tessellations. *arXiv preprint astro-ph/0011007* (2000).

[38] Robin Sibson. 1981. A brief description of natural neighbour interpolation. *Interpreting multivariate data* (1981).

[39] Charles Spence. 2011. Crossmodal correspondences: A tutorial review. *Attention, Perception, & Psychophysics* 73, 4 (2011), 971–995.

[40] Gualtiero Volpe, Ksenia Kolykhalova, Erica Volta, Simone Ghisio, George Waddell, Paolo Alborno, Stefano Piana, Corrado Canepa, and Rafael Ramirez-Melendez. 2017. A multimodal corpus for technology-enhanced learning of violin playing. In *Proceedings of the 12th Biannual Conference on Italian SIGCHI Chapter*. 1–5.

[41] Yuji Wada, Kazuya Matsubara, Akira Miyamae, and Kazuya Ishibashi. Japanese Patent 6725123 07 2020. Method, program and information processing device for displaying time-varying flavors as time-varying visual elements (in Japanese).

## A  IMPLEMENTATION DETAILS

### A.1  Fourier Transform of Shape

The process of how the shape is converted to a frequency vector is as follows (referring to Wada et al. [41]). Note that this process can also be reversed to generate a shape from the frequency vector.

(1) The shape is sampled at 512 points to divide the perimeter equally.

(2) Fourier transform the $x$- and $y$-coordinates of sampled points separately and obtain a 512-dimensional complex vector of frequency dimensions for each.

(3) Separate the real and imaginary parts of the complex vectors and merge the four vectors into a 2048-dimensional real vector, which is the feature vector of the shape.

As shown in Fig. 13, a shape can be morphed smoothly between the two shapes using the weighted average of the frequency vectors of them.

### A.2  Linear Interpolation and Extrapolation of Vector

Here we fully explain the linear interpolation/extrapolation method used in TimToShape. The symbols used in this section follow the definitions in Section 3.1.

When $t^*$ is inside the convex hull of observed points $\{t_i\}$ (hereafter $CH(\{t_i\})$), linear interpolation is performed. The linear interpolation method used here is basically an extension of the Delaunay Tessellation Field Estimator (DTFE) [37] to multidimensional output. Specifically, let $Del_{in}$ be the simplex that contains $t^*$ when the interior of $CH(\{t_i\})$ is partitioned by $N$-dimensional Delaunay tessellation, and let $t_{a_0}, \ldots, t_{a_N}$ be the vertices of $Del_{in}$, then $s^*$ is estimated according to the following equation.

$$s^* = f_{user}(t_{a_0}) + J_{f_{user}}|Del_{in}(t^* - t_{a_0}) \tag{3}$$

Note that $J_{f_{user}}|Del_{in}$ in Eq. (3) is the estimated Jacobian of $f_{user}$ that is constant in the $Del_{in}$, and this $J_{f_{user}}|Del_{in}$ can be computed easily by evaluating Eq. (3) for each $N$ points $t_{a_1}, \ldots, t_{a_N}$ as $t^*$.

25

# FIG.38

Fig. 13. How shapes are Fourier transformed and how a shape is morphed between two shapes using the frequency domain (referring to Wada et al. [41]). In the figures in the center and right rows, the red plots are for the x-coordinate and the blue plots are for the y-coordinate.

On the other hand, when $t^*$ is outside of $CH(\{t_i\})$, linear extrapolation is performed. Specifically, let $t_{nearest}$ be the point in $CH(\{t_i\})$ that is closest to $t^*$ (note that $t_{nearest}$ does not have to be the observation point), then $s^*$ is estimated according to the following equation.

$$s^* = s^*_{nearest} + J_{f_{user}}|_{t_{nearest}}(t^* - t_{nearest}) \qquad (4)$$

26

# FIG.39

Note that $s^*_{nearest}$ is the estimated $s$ at $t_{nearest}$, and $Jf_{user}|t_{nearest}$ is the estimated Jacobian of $f_{user}$ at $t_{nearest}$. $s^*_{nearest}$ can be obtained by evaluating Eq. (3) for $t_{nearest}$ as $t^*$. $Jf_{user}|t_{nearest}$ can be obtained as follows.

(1) Since $t_{nearest}$ lies on the border of $CH(\{t_i\})$, there exists a facet of $CH(\{t_i\})$ which contains $t_{nearest}$. Call this facet $Face_{nearest}$, and let $t_{b_0}, \ldots, t_{b_{N-1}}$ be the vertices of $Face_{nearest}$. Also, $\lambda = (\lambda_0, \ldots, \lambda_{N-1})$ satisfying both $\sum_{i=0}^{N-1} \lambda_i t_{b_i} = t_{nearest}$ and $\sum_{i=0}^{N-1} \lambda_i = 1$ is uniquely determined.

(2) At each of $t_{b_i}$, estimate the Jacobian of $f_{user}$ $(Jf_{user}|t_{b_i})$ by the following method.

    (a) Let $T'_{b_i}$ be the set of points connected to $t_{b_i}$ by an edge when the $CH(\{t_i\})$ interior is partitioned by Delaunay tessellation.

    (b) $Jf_{user}|t_{b_i}$ is estimated as $J \in \mathbb{R}^{M \times N}$ that minimizes the $L$ below. This method is an extension of [24] to multi-dimension.

$$L = \sum_{t' \in T'_{b_i}} \| \frac{1}{\|t' - t_{b_i}\|} [\, f_{user}(t') - \{ f_{user}(t_{b_i}) + J(t' - t_{b_i}) \} ] \, \|^2 \qquad (5)$$

(3) Finally, $Jf_{user}|t_{nearest}$ is estimated according to the following equation.

$$Jf_{user}|t_{nearest} = \sum_{i=0}^{N-1} \lambda_i Jf_{user}|t_{b_i} \qquad (6)$$

## A.3 Method for Generating Shape from Semantic Parameters

The following shows how shapes are generated from six parameters (referring to Wada et al. [41]): *number of spikes* (0 to 30), *length of spikes* (0 to 0.5), *randomness* (0 to 1), *random seed* (0 to 10), *roundness of the base of spikes* (0 to 1), and *roundness of the tip of spikes* (0 to 1).

(1) Place "*number of spikes*" × 2 vertices evenly on the circumference of the circle (Fig. 14 (a)).

(2) Shift each vertex alternately outward and inward in the radial direction according to "*length of spikes*" (Fig. 14 (b)).

(3) Shift each vertex randomly in both radial and angular directions according to "*randomness*" and "*random seed*" (Fig. 14 (c)). The position of the vertices are now determined.

(4) Connect all two adjacent vertices with a quadratic Bézier curve (Fig. 14 (d)). Since two of the four Bézier curve operation points are end points of the curve, they are set at both vertices, and the remaining two points are determined according to "*roundness of the base of spikes*" and "*roundness of the tip of spikes*".

## A.4 Implementation Efforts to Run TimToShape in Real-Time on Browser

The followings are our implementation efforts to use TimToShape in real-time on browser.

- *Calculation* 1 in Section 4.2 is performed in a thread separate from the main thread using the "audio-worklet" functionality recently implemented in the browser. However, the calculation cost is high if the log-mel-spectrogram for 66,560 sample points is calculated simultaneously. The log-mel-spectrogram can be computed faster with $n\_fft = 2,048$ and $hop\_length = 1,024$ (see Section 3.2) by computing as follows.
  - Always keep the last 2,048 sample points as a buffer, and apply the mel-filter bank to the buffer and calculate the logarithm of it (call the result of it a "log-mel-vector" for convenience) every time 1,024 samples are updated. Then, the 64 consecutive log-mel-vectors will be the input of one frame for VAE.

In this way, the VAE input can be updated every 1,024 sample points (23ms).

27

# FIG.40

(a)  (b)  (c)  (d)

Fig. 14. How 2D shape is generated from parameters. The parameters of this shape are *"number of spikes"*: 12, *"length of spikes"*: 0.3, *"randomness"*: 0.6, *"random seed"*: 5, *"roundness of the base of spikes"*: 0.15, *"roundness of the tip of spikes"*: 1.0 .

- The VAE calculation (*Calculation* 2 in Section 4.2) was implemented using "TensorFlow.js"[5], an open-source framework. The VAE model implemented by Keras was converted into a form usable for TensorFlow.js. By using this JavaScript framework, we implemented asynchronous inference by VAE To avoid bottlenecks in inference time.

# FIG.41

- Intuitive visualization of timbres with application of correspondences between different senses (Crossmodal Correspondences)

  - In particular, Timbre -Shape Correspondences are applied (e.g. sine/square wave -> curved/sharp angular shape).

(1) Obtain a latent space of timbres through unsupervised learning using a variational autoencoder (VAE)

    ← Using a VAE to obtain latent sections of timbres as in the prior work [7]

  - The player is asked to answer shapes that the player feels correspond to some timbres (at least three kinds) in the latent space.

(2) Estimate and generate a shape representing a timbre in the latent space, on the basis of the timbre-shape correspondences input by the player

  - Generate morphed shape through linear interpolation in accordance with the position of the timbre in the latent space, on the basis of the shape answered in advance

(3) Practice with feedback of the shape estimated on the basis of the timbre being currently played

    ← Through user studies, the effectiveness of vis ualization related to acquisition of a timbre playing technique has been confirmed.

(1) Encode Timbre to Latent Space  (2) Estimate a 2D Shape based on Each User's Crossmodal Corredpondences

Soft Timbre

Shape Estimation

Harsh Timbre

VAE Encoder   Timbre Latent Space

Shape Estimation

(3) Visualize a 2D Shape as a Feedback

# FIG.42

FUNCTION 2

FUNCTION 1
Timbre
Encoder
(2,)

$f_{user}$

(2048,)

FUNCTION 3
Shape
Decoder

(128,64,1)

(1024,2)

- FUNCTION 1

  - A function of converting an input sound into a feature vector of a low-dimensional (two- dimensional in the current implementation) timbre
  - In the current implementation, the VAE is trained through unsupervised learning using the mel-spectrogram of the sound as an input/output, and the encoder portion thereof is used.

- FUNCTION 2

  - A function of converting the feature vector of a timbre into a feature vector of a figure estimated to correspond thereto, on the basis of the characteristics of the timbre-figure correspondence of each user
  - Each user answers several pairs of a timbre and a figure they feel correspond to each other in advance.
  - On the basis of the timbre-figure pairs answered, the feature vector of the figure estimated to correspond to the feature vector of the timbre is calculated through multidimensional linear interpolation using Delaunay triangulation.
  - In the current implementation, the frequency vector of a figure shape is adopted as the feature vector of the figure.

- FUNCTION 3

  - A function of restoring the figure from the feature vector of the figure
  - In the current implementation, inverse Fourier transform is performed on the frequency vector of the figure shape, to restore the shape.

IFFT    Plot

# FIG.43

**Proposed Technique: Visualization with Figures Based on the Crossmodal Correspondence Characteristics of Each Individual**

- Crossmodal Correspondence
  - Non-arbitrary associative relationship between different modalities
  - e.g. Bouba-Kiki effect

- It has been reported that there are crossmodal correspondences between timbres and the shapes of figures.
  - e.g. a sharp timbre and a jagged shape, and a soft timbre and a round shape

- It might be possible to perform intuitive visualization of timbres with the shapes of figures, by estimating the timbre-figure crossmodal correspondence characteristics of each individual.

# FIG.44

Timbre Visualization System with Figures Based on Individual Crossmodal
Correspondence Characteristics (TimToShape)

(128,64,1)  (2.)  (2048.)  (1024,2)

- Input: Log-mel-spectrogram of sound at 66560 sample points ($128 \times 64 \times 1$)
- Output: Sampling points of the shape of a figure (x-y coordinates of 1024 points)

# FIG.45

## Timbre Encoder

- The encoder portion of a CNN-based VAE is used.
  - A probability generating model with two-dimensional latent variables is assumed.
  - The average of the posterior distribution of latent variables to an input is set as Z.
  - The latent space can be acquired through unsupervised learning.

10

# FIG.46

**Shape Decoder**

− Z': the frequency vector of the shape of a figure

− Decoder: IFFT

# FIG.47

## Mapping from Feature Space of Timbres to Feature Space of Figures

- Each user listens to several timbres (representative sounds), and answers figures that the user feels correspond to.

- On the basis of these answers, $f_{user}$ is estimated for each user.

# FIG.48

## Technique for Estimating the Sensory Characteristics of a User from Answers about Timbre-Figure Correspondence

[Formulation]

$f_{user}$: when a set of an input and an output $\{(t_i, s_i (= f_{user}(t_i)) \mid t_i \in T, s_i \in S\}$ is given for $T \rightarrow S$, an output $s^* = f_{user}(t^*)$ is estimated for an input $t^* \in T$.

[Solution]

Multidimensional linear interpolation using Delaunay triangulation

  – It can be used even with a small number of observation points.
  – Computation is light, and inference can be made in real time

An image of a case with a two-dimensional input and a one-dimensional output

*In this study, a two-dimensional input and a 2048-dimensional output

13

# FIG.49

Technique for Estimating the Sensory Characteristics of a User from Answers about Timbre-Figure Correspondence

For example, in a case where figures are answered with respect to three locations of red points in the timbre feature space, an estimated value of a figure at another location is as illustrated on the left.

# FIG.50

**Flow in Which Each User Answers Figures about Representative Sounds**

1. Three timbres forming the triangle having the shortest
   side that is the longest in the feature space of timbres
   Listen to and compare timbres (red dots on the right), and
   answer a figure for each
   - Compare the most extreme timbres at the beginning
   - Reduce the likelihood of extrapolation
2. Repeat the following
   1. Present, to the user, the timbre at the point whose
      shortest distances to the already-answered points are
      the longest in the feature space of timbres
      - Order of the yellow dots on the right
   2. Show the estimated figure based on the answers made
      so far, and check whether correction is necessary
      - If correction is unnecessary, proceed to 5.
      - If correction is unnecessary three times in a row,
        end the repetition
   3. Check whether there is a figure that the user feels to
      correspond to one on a hyperplane around the estimated value
      - If there is a figure that appears to correspond, proceed to 5.
      - This step can reduce the number of dimensions of an image.
   4. Optionally answer a figure
   5. Add the answered figure as the estimated value with
      respect to that point

# FIG.51

Interface for Answering Shapes of Figures

- The frequency vector (2048-dimensional) of the shape of a figure cannot be directly answered.

- The shape of a figure is formed on the basis of six semantic parameters, according to Oyama et al.

[Procedure in Which User Answers Figure]

1. Select one the user feels corresponds most to the timbre from a preset of 25 figures (lower left)

2. Finely adjust each parameter on the basis of the figure (lower right)

Number of Spikes
Length of Spikes
Randomness
Random Seed
Roundness of the Base of Spikes
Roundness of the Tip of Spikes

# FIG.52

## Features of TimToShape Theory

– As long as there is a dataset of timbres, the system can be constructed, regardless of what kind of timbre space it is.

  – Because a feature space of timbres is obtained through unsupervised learning

– The theory of TimToShape is applicable not only to the timbre-figure correspondence but also to estimation of the characteristics of each individual regarding the crossmodal correspondence between other two stimuli.

  – It is sufficient to newly consider only how to set a feature space of each stimulus of an input and an output.

## INTERNATIONAL SEARCH REPORT

International application No.

**PCT/JP2024/003373**

### A. CLASSIFICATION OF SUBJECT MATTER

*G10H 1/00*(2006.01)i; *G09B 15/00*(2006.01)i
FI:   G10H1/00 B; G09B15/00 Z

According to International Patent Classification (IPC) or to both national classification and IPC

### B. FIELDS SEARCHED

Minimum documentation searched (classification system followed by classification symbols)

G10H1/00; G10G1/00-3/04; G09B15/00-15/08; G10L21/06-21/18; G06T13/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

THE ACM DIGITAL LIBRARY

### C. DOCUMENTS CONSIDERED TO BE RELEVANT

| Category* | Citation of document, with indication, where appropriate, of the relevant passages | Relevant to claim No. |
|---|---|---|
| X | ARAI, Kota et al., Effect of Visual Feedback on Understanding Timbre with Shapes Based on Crossmodal Correspondences, Proc. of the 27th ACM Symposium on Virtual Reality Software and Technology, 08 December 2021<br>particularly, 1 Introduction - 2 Proposal | 1, 2, 6, 7 |
| A | | 3-5 |
| A | JP 6725123 B1 (JAPAN TOBACCO INC.) 15 July 2020 (2020-07-15)<br>paragraphs [0029]-[0095] | 1-7 |
| A | KIMURA, Naoki et al, SonoSpace: Visual Feedback of Timbre with Unsupervised Learning, Proc. of the 28th ACM International Conference on Multimedia, 12 October 2020, pages 367-374<br>particularly, 3 Timbre Visualization - 6 Discussion | 1-7 |

☑ Further documents are listed in the continuation of Box C.       ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/003373** |

### C. DOCUMENTS CONSIDERED TO BE RELEVANT

| Category* | Citation of document, with indication, where appropriate, of the relevant passages | Relevant to claim No. |
| --- | --- | --- |
| A | 西田沙織 他, 視聴覚統合における刺激音の時間-周波数的特徴と視覚刺激の形状特徴の検討, 情報処理学会研究報告, 11 February 2009, vol. 2009, no. 13, pages 65-70, (NISHIDA, Saori et al., Effects of time-frequency parameters of auditory stimuli and shape parameters of visual stimuli on audio-visual integration: toward music visualization system based on perceptual structure, IPSJ SIG Technical Reports) particularly, 2 Related research - 5 Discussion | 1-7 |

Form PCT/ISA/210 (second sheet) (July 2022)

INTERNATIONAL SEARCH REPORT

Information on patent family members

International application No.

**PCT/JP2024/003373**

| Patent document cited in search report | | | Publication date (day/month/year) | Patent family member(s) | | | Publication date (day/month/year) |
|---|---|---|---|---|---|---|---|
| JP | 6725123 | B1 | 15 July 2020 | US | 2022/0240592 | A1 | |
| | | | | paragraphs [0056]-[0124] | | | |
| | | | | WO | 2021/084571 | A1 | |
| | | | | EP | 4053798 | A1 | |
| | | | | TW | 202133116 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023015722 A

- JP 2023094415 A

**Non-patent literature cited in the description**

- **BUCK** ; **MICHAEL WILLIAM**. The Efficacy of SmartMusic Assessment as a Teaching and Learning Tool. *Dissertations*, 2008, 1136, https://aquila.usm.edu/dissertations/1136
- **ESTEFAN CANO** ; **CHRISTIAN DITTMAR** ; **SASCHA GROLLMISCH**. Songs2See: Learn to Play by Playing. *In 12th International Society for Music Information Retrieval Conference (ISMIR2011)*, 2231-2240, https://www.songs2see.com
- **OY**. Ukulele With The Songs you Love. *Yousician | Learn Guitar, Piano*, 2020, https://yousician.com
- **KNIGHT** ; **TREVOR** ; **FINN UPHAM** ; **ICHIRO FUJINAGA**. The potential for automatic assessment of trumpet tone quality. *ISMIR*, 2011, https://archives.ismir.net/ismir2011/paper/000102.pdf

- **ORIOL ROMANI PICAS et al.** A real-time system for measuring sound goodness in instrumental sounds. *In Audio Engineering Society Convention 138. Audio Engineering Society*, 2015, https://repositori.upf.edu/handle/10230/32131
- **SERGIO GIRALDO et al.** Automatic assessment of tone quality in violin music performance. *Frontiers in Psychology*, 2019, vol. 10, 334, https://www.frontier-sin.org/articles/10.3389/fpsyg.2019.00334/full
- SonoSpace. **NAOKI KIMURA et al.** In Proceedings of the 28th ACM International Conference on Multimedia. Association for Computing Machinery (ACM), 2020, 367-374